# EUROPÄISCHE PATENTSCHRIFT

(11) **EP 3 924 278 B1**
(45) Veröffentlichungstag und Bekanntmachung des Hinweises auf die Patenterteilung: **07.06.2023**
(21) Anmeldenummer: 20713820.7
(22) Anmeldetag: 13.02.2020
(51) Int. Cl.: B65G 43/10, B65G 47/26

(54) **FÖRDEREINRICHTUNG ZUM ABSTANDSLOSEN UND DRUCKLOSEN ODER DRUCKARMEN STAUEN VON OBJEKTEN UND BETRIEBSVERFAHREN HIERFÜR**
CONVEYOR DEVICE FOR THE DISTANCELESS AND PRESSURELESS, OR LOW-PRESSURE, ACCUMULATION OF OBJECTS, AND OPERATING METHOD THEREFOR
DISPOSITIF DE TRANSPORT POUR LE RANGEMENT D'OBJETS SANS ESPACEMENT ET SANS PRESSION OU AVEC FAIBLE PRESSION, ET SON PROCÉDÉ DE FONCTIONNEMENT

(30) Priorität: 15.02.2019 AT 501172019
(43) Veröffentlichungstag der Anmeldung: 22.12.2021
(73) Patentinhaber: TGW Mechanics GmbH, 4600 Wels (AT)
(72) Erfinder: SCHÖNBAUER, Manuel, 4715 Taufkirchen an der Trattnach (AT); KARER, Florian Georg, 4020 Linz (AT); GRIMMINGER, Richard, 4612 Scharten (AT); KALTSEIS, Simon, 4083 Haibach ob der Donau (AT); RAUSCH, Martin, 4810 Gmunden (AT)
(74) Vertreter: Burger, Hannes
(86) Internationale Anmeldenummer: PCT/AT2020/060045
(87) Internationale Veröffentlichungsnummer: WO 2020/163888

(56) Entgegenhaltungen:
- EP-A1- 2 522 602
- WO-A1-2011/038439
- WO-A1-2015/179722
- US-A- 5 335 777
- US-A1- 2009 171 501
- US-A1- 2015 047 950

## Beschreibung

Die Erfindung betrifft ein Verfahren zum Stauen von Objekten in einem Staubereich einer Fördereinrichtung in Form von Objekt-Blöcken, die mehrere mit einer gemeinsamen Geschwindigkeit bewegte Objekte aufweisen. Dabei wird eine Objekt-Hinterkante eines ersten Objekts durch eine erste Messeinrichtung an einer ersten Mess-Position erfasst, wobei das erste Objekt durch angetriebene Förderelemente der Fördereinrichtung in einer Förderrichtung stromabwärts an der ersten Mess-Position vorbeibewegt wird und wobei die Objekt-Hinterkante des ersten Objekts stromaufwärts zu einer Objekt-Vorderkante des ersten Objekts liegt. Weiterhin wird durch die erste Messeinrichtung an der ersten Mess-Position eine Objekt-Vorderkante eines zweiten Objekts erfasst, das dem ersten Objekt stromaufwärts nachfolgt, wobei das zweite Objekt durch die angetriebenen Förderelemente in der Förderrichtung stromabwärts an der ersten Mess-Position vorbeibewegt wird und wobei die Objekt-Vorderkante des zweiten Objekts stromabwärts zu einer Objekt-Hinterkante des zweiten Objekts liegt. Darüber hinaus wird das erste Objekt zu einer Anhalte-Position bewegt, welche der ersten Mess-Position in der Förderrichtung stromabwärts nachgelagert ist, und mit Hilfe der Förderelemente mit seiner Objekt-Hinterkante an seiner Anhalte-Position angehalten, wobei eine aktuelle Position des ersten Objekts zwischen der ersten Mess-Position und seiner Anhalte-Position mit Hilfe von Drehsignalen der Antriebe der Förderelemente ermittelt wird.

Die Erfindung betrifft auch eine Fördereinrichtung für eine Förderanlage zum Stauen von Objekten in einem Staubereich in Form von Objekt-Blöcken, die mehrere mit einer gemeinsamen Geschwindigkeit bewegte Objekte aufweisen. Die Fördereinrichtung umfasst angetriebene Förderelemente zum Transport der Objekte, eine erste Messeinrichtung zum Erfassen einer Objekt-Vorderkante und einer Objekt-Hinterkante der Objekte an einer ersten Mess-Position, wobei die Objekt-Vorderkante in der Förderrichtung stromabwärts zu der Objekt-Hinterkante des Objekts liegt, und eine Steuerung, welche dazu ausgebildet ist, Antriebe der Förderelemente entsprechend einer vorgegebenen Soll-Bewegung der Objekte anzusteuern, ein erstes Objekt mit Hilfe der Förderelemente zu einer Anhalte-Position zu bewegen, welche der ersten Mess-Position in der Förderrichtung stromabwärts nachgelagert ist, das erste Objekt mit seiner Objekt-Hinterkante an seiner Anhalte-Position anzuhalten, und eine aktuelle Position des ersten Objekts zwischen der ersten Mess-Position und seiner Anhalte-Position mit Hilfe von Drehsignalen der Antriebe der Förderelemente zu ermitteln.

Ein solches Verfahren und eine solche Fördereinrichtung sind aus dem Stand der Technik prinzipiell bekannt. Grundsätzlich sind zwei Typen von Fördereinrichtungen zum Stauen von Objekten verbreitet, nämlich ein Verfahren zum drucklosen Stauen von Objekten und ein Verfahren zum abstandslosen Stauen von Objekten. Beim drucklosen Stauen werden zwischen den Objekten Abstände vorgesehen, um Beschädigungen der Objekte oder eine sonstige gegenseitige Beeinflussung zu vermeiden. Bauartbedingt ist die auf der Fördereinrichtung erzielbare Objektdichte eher gering. Beim abstandslosen Stauen werden die Objekte mit mehr oder weniger Schwung aneinander gefahren. Zumeist passiert dies durch ein Auslaufenlassen eines bewegten zweiten Objekts, das dem ersten Objekt nachfolgt, auf freilaufenden Förderelementen. Innerhalb eines durch mehrere Objekte gebildeten Objekt-Blocks entsteht dann ein nicht zu vernachlässigender Staudruck. Nachteilig ist an diesem Verfahren, dass empfindliche Objekte beim Stauen leicht beschädigt werden können. Insbesondere kann dies passieren, wenn ein empfindliches Objekt im Objekt-Block zwischen zwei schweren und vergleichsweise starren Objekten zu liegen kommt.

Die WO 2011/038439 A1 offenbart ein Verfahren gemäß den Merkmalen der Oberbegriffe der unabhängigen Ansprüche 1 und 12 sowie eine Fördereinrichtung gemäß den Merkmalen der Oberbegriffe der unabhängigen Ansprüche 24 und 26, mit einer Steuerung/Regelung zum Steuern oder Regeln eines Soll-Abstands zwischen zwei Objekten anhand einer ermittelten Soll-Position und Sensoren zum Prüfen des Abstands zwischen den Objekten. In einer Alternative ist auch ein Staubetrieb auf der Fördereinrichtung offenbart, bei dem die Objekte einander berühren können.

Eine Aufgabe der Erfindung besteht nun darin, eine verbesserte Fördereinrichtung und ein verbessertes Verfahren zum Stauen von Objekten anzugeben. Insbesondere soll das Stauen von empfindlichen Objekten mit hoher Objektdichte auf einfachere Weise ermöglicht werden.

Die erfindungsgemäße Aufgabe wird mit einem Verfahren nach Anspruch 1 gelöst.

Die erfindungsgemäße Aufgabe wird auch mit einer Fördereinrichtung nach Anspruch 24 gelöst.

Durch die vorgeschlagenen Maßnahmen werden die Vorteile des abstandslosen Stauens von Objekten mit den Vorteilen des druckarmen oder drucklosen Stauens von Objekten kombiniert. Dadurch ist insbesondere das Stauen von empfindlichen Objekten mit hoher Objektdichte möglich. Empfindliche Objekte sind insbesondere Objekte, die zwar starr, jedoch aber zerbrechlich sind, sowie weiche, (plastisch) leicht deformierbare Objekte. Konkrete Beispiele für empfindliche Objekt sind daher Gläser, aber auch Beutel (z.B. Polybags).

Insbesondere kann das erste Objekt beim Anhalten an seiner Anhalte-Position mit Hilfe der Förderelemente mit seiner Objekt-Hinterkante an einer stromaufwärts gelegenen Zonen-Hinterkante einer ersten Zone von mehreren unabhängig voneinander antreibbaren Zonen der Fördereinrichtung im Staubereich angehalten werden.

"Staudruck" bedeutet im Zusammenhang mit der Erfindung einen zwischen den Objekten eines Objekt-Blocks an Grenzflächen benachbarter Objekte herrschenden Druck. "Druckarm" bedeutet, dass der Staudruck klein ist. insbesondere bedeutet "druckarm", dass eine Kontaktkraft (und ein daraus resultierender Druck) zwischen zwei Objekten unterhalb der maximalen Reibkraft zwischen den Förderelementen und den Objekten liegt, im Besonderen unter der maximalen Reibkraft bei Gleitreibung.

Ein "Objekt-Block" ist im Rahmen der Erfindung eine Gruppe mehrerer Objekte, die abstandslos oder mit vorgegebenem Abstand aneinandergereiht sind. Ein Kennzeichen eines Objekt-Blocks ist auch, dass alle Objekte des Objekt-Blocks synchron bewegt werden. Insbesondere wird für alle Objekte des Objekt-Blocks die gleiche Soll-Geschwindigkeit beziehungsweise der gleiche Verlauf der Soll-Geschwindigkeit vorgegeben.

Die "Objektdichte" ist die Summe der Längen der im Staubereich befindlichen Objekte dividiert durch die Distanz zwischen der Objekt-Vorderkante des Objekts, das im Staubereich am weitesten stromabwärts liegt, und der Objekt-Hinterkante des Objekts, das im Staubereich am weitesten stromaufwärts liegt.

Ein "isoliertes" Objekt ist ein Objekt, das keinem Objekt-Block angehört. Ein synonymer Begriff ist "vereinzeltes" Objekt.

Weitere vorteilhafte Ausgestaltungen und Weiterbildungen der Erfindung ergeben sich nun aus den Unteransprüchen sowie aus der Beschreibung in Zusammenschau mit den Figuren.

Günstig ist es, wenn die Geschwindigkeitsreduktion einen linearen Verlauf aufweist. Auf diese Weise kann die Geschwindigkeitsreduktion mit einfachen Algorithmen berechnet werden.

Vorteilhaft ist es aber auch, wenn die Geschwindigkeitsreduktion einen degressiv verlaufenden Abschnitt im Bereich der Position der Objekt-Hinterkante des angehaltenen ersten Objekts aufweist. Dadurch ist eine Restgeschwindigkeit, mit der das zweite Objekt das erste Objekt gegebenenfalls berührt, gegenüber einem linearen Verlauf bei gleichem Bremsweg kleiner. Die Berührung zwischen erstem und zweitem Objekt ist dann dementsprechend sanfter.

Günstig ist es weiterhin, wenn eine Position für die Soll-Geschwindigkeit "Null" stromabwärts zur Objekt-Hinterkante des angehaltenen ersten Objekts liegt und die SollGeschwindigkeit an der Objekt-Hinterkante des angehaltenen ersten Objekts maximal 0,1 m/s beträgt. Auf diese Weise kann eine Beschädigung empfindlicher Objekte selbst dann verhindert werden, wenn das zweite Objekt das erste Objekt mit einer Restgeschwindigkeit berührt.

Günstig ist es weiterhin, wenn das erste Objekt und das zweite Objekt mit konstanter Geschwindigkeit an der ersten Mess-Position vorbeibewegt werden. Auf diese Weise ist die Ermittlung von Objektlängen und Objektabständen auf besonders einfache Weise möglich.

Gemäß der Erfindung ist vorgesehen, dass der Berechnung der Geschwindigkeitsreduktion
a) eine virtuelle Objekt-Hinterkante des ersten Objekts zugrunde gelegt wird, welche stromabwärts zu einer physischen Objekt-Hinterkante des ersten Objekts liegt und/oder
b) eine virtuelle Objekt-Vorderkante des zweiten Objekts zugrunde gelegt wird, welche stromaufwärts zu einer physischen Objekt-Vorderkante des zweiten Objekts liegt.

Der in der Steuerung der Fördereinrichtung angenommene Abstand zwischen den dem ersten und dem zweiten Objekt ist also größer als der tatsächliche Abstand zwischen den beiden Objekten. Dies führt dazu, dass die tatsächliche Anhalte-Position für das zweite Objekt weiter in das erste Objekt hinein verlegt ist, wodurch der Staudruck innerhalb eines Objekt-Blocks erhöht wird. Demgemäß eignet sich die vorgeschlagene Vorgangsweise insbesondere für unempfindliche Objekte. Zur Umsetzung dieser Ausführungsvariante kann der Berechnung der Geschwindigkeitsreduktion generell eine virtuelle Länge eines Objekts zugrunde gelegt werden, welche kleiner als die physische Länge eines Objekts ist. Durch die vorgeschlagenen Maßnahmen können insbesondere unvermeidbare Messtoleranzen bei der Ermittlung der Objekt-Hinterkante des ersten Objekts und der Objekt-Vorderkante des zweiten Objekts sowie Ungenauigkeiten bei der Berechnung der Position der Objekt-Hinterkante des ersten Objekts und der Objekt-Vorderkante des zweiten Objekts ausgeglichen werden.

Gemäß der Erfindung ist vorgesehen, dass der Berechnung der Geschwindigkeitsreduktion
c) eine virtuelle Objekt-Hinterkante des ersten Objekts zugrunde gelegt wird, welche stromaufwärts zu einer physischen Objekt-Hinterkante des ersten Objekts liegt und/oder
d) eine virtuelle Objekt-Vorderkante des zweiten Objekts zugrunde gelegt wird, welche stromabwärts zu einer physischen Objekt-Vorderkante des zweiten Objekts liegt.

Der in der Steuerung der Fördereinrichtung angenommene Abstand zwischen den dem ersten und dem zweiten Objekt ist dann also kleiner als der tatsächliche Abstand zwischen den beiden Objekten. Dies führt dazu, dass die tatsächliche Anhalte-Position für das zweite Objekt weiter aus dem ersten Objekt heraus verlegt ist, wodurch der Staudruck innerhalb eines Objekt-Blocks verringert wird. Demgemäß eignet sich die vorgeschlagene Vorgangsweise insbesondere für empfindliche Objekte. Zur Umsetzung dieser Ausführungsvariante kann der Berechnung der Geschwindigkeitsreduktion generell eine virtuelle Länge eines Objekts zugrunde gelegt werden, welche größer als die physische Länge eines Objekts ist. Dadurch können wieder unvermeidbare Messtoleranzen bei der Ermittlung der Objekt-Hinterkante des ersten Objekts und der Objekt-Vorderkante des zweiten Objekts sowie Ungenauigkeiten bei der Berechnung der Position der Objekt-Hinterkante des ersten Objekts und der Objekt-Vorderkante des zweiten Objekts ausgeglichen werden.

Besonders vorteilhaft ist es, wenn der Abstand zwischen der virtuellen Objekt-Hinterkante und der physischen Objekt-Hinterkante des ersten Objekts und/oder der Abstand zwischen der virtuellen Objekt-Vorderkante und der physischen Objekt-Vorderkante des zweiten Objekts der Ungenauigkeit bei der Positionsbestimmung des ersten Objekts und des zweiten Objekts durch die erste Messeinrichtung zuzüglich einer Toleranz von ±10% entspricht. In den Fällen a) und b) wird dadurch ein abstandsloses Stauen gerade noch und mit minimalem Druck gewährleistet. Ein (physischer) Abstand zwischen Objekten aufgrund von Messungenauigkeiten kann somit ausgeschlossen werden. In den Fällen c) und d) wird durch die vorgeschlagenen Maßnahmen dagegen ein druckloses Stauen mit minimalem Abstand gewährleistet. Generell kann der Berechnung der Geschwindigkeitsreduktion eine virtuelle Länge eines Objekts zugrunde gelegt werden, deren Unterschied zur physischen Länge dieses Objekts der zweifachen Ungenauigkeit bei der Positionsbestimmung des ersten Objekts und des zweiten Objekts durch die erste Messeinrichtung zuzüglich einer Toleranz von ±10% entspricht. In den Fällen a) und b) ist die virtuelle Länge kleiner als die physische Länge eines Objekts, in den Fällen c) und d) ist sie dagegen größer. Auch auf diese Weise kann in den Fällen a) und b) ein abstandsloses Stauen mit minimalem Druck und in den Fällen c) und d) ein druckloses Stauen mit minimalem Abstand gewährleistet werden.

Vorteilhaft ist es auch, wenn ein im Bereich des ersten Objekts angeordnetes Förderelement nach dem Anhalten des ersten Objekts gebremst wird. Auf diese Weise kann verhindert werden, dass das erste Objekt vom zweiten Objekt weggestoßen wird und sich nach dem Anhalten des zweiten Objekts ein unerwünschter Abstand zwischen den beiden Objekten bildet. Das Bremsen kann mit maximaler Bremskraft erfolgen, um ein Wegstoßen des ersten Objekts auf jeden Fall zu verhindern, oder mit verringerter Bremskraft, um ein sanftes Auffahren des zweiten Objekts auf das erste Objekt zu gewährleisten.

In obigem Zusammenhang ist es auch von Vorteil, wenn ein Bremsmoment eines im Bereich des ersten Objekts angeordneten Förderelements gemessen wird und das zweite Objekt angehalten wird, wenn das Bremsmoment einen ersten Schwellwert überschreitet. Dadurch kann ein definierter Staudruck innerhalb des Objekt-Blocks eingestellt werden.

Denkbar ist weiterhin, dass ein Bremsmoment eines im Bereich des ersten Objekts angeordneten Förderelements gemessen wird und das zweite Objekt nach dem Kontakt mit dem ersten Objekt zurückbewegt und angehalten wird, wenn das Bremsmoment einen zweiten Schwellwert unterschreitet. Dadurch kann ebenfalls ein definierter Staudruck innerhalb des Objekt-Blocks eingestellt werden, insbesondere wenn der Druck zwischen dem ersten Objekt und dem zweiten Objekt nach dem Auffahren des zweiten Objekts zu groß ist.

Vorteilhaft ist es weiterhin, wenn im Bereich des ersten Objekts angeordnete Förderelemente nach dem Anhalten des ersten Objekts in einen Freilauf geschaltet werden. Auf diese Weise kann ein besonders sanftes Auffahren des zweiten Objekts auf das erste Objekt gewährleistet werden.

Besonders vorteilhaft ist es, wenn
- das erste Objekt beim Anhalten an seiner Anhalte-Position mit Hilfe der Förderelemente mit seiner Objekt-Hinterkante an einer stromaufwärts gelegenen Zonen-Hinterkante einer ersten Zone von mehreren unabhängig voneinander antreibbaren Zonen der Fördereinrichtung im Staubereich angehalten wird,
- das zweite Objekt mit Hilfe der Förderelemente auf das erste Objekt zubewegt wird und
- das erste Objekt und das zweite Objekt nach dem Auffahren des zweiten Objekts auf das erste Objekt Teil eines Objekt-Blocks werden, der mit Hilfe der Förderelemente mit einer gemeinsamen Ist-Geschwindigkeit in der Förderrichtung stromabwärts bewegt wird, und wobei
- der Objekt-Block mit Hilfe der Förderelemente angehalten wird, wenn er mit seiner Block-Hinterkante die Zonen-Hinterkante einer stromabwärts folgenden Zone erreicht, wobei eine aktuelle Position der Block-Hinterkante mit Hilfe von Drehsignalen der Antriebe der Förderelemente ermittelt wird.

Demgemäß ist es auch besonders vorteilhaft, wenn die Steuerung weiter dazu ausgebildet ist,
- das erste Objekt beim Anhalten an seiner Anhalte-Position mit Hilfe der Förderelemente mit seiner Objekt-Hinterkante an einer stromaufwärts gelegenen Zonen-Hinterkante einer ersten Zone von mehreren unabhängig voneinander antreibbaren Zonen der Fördereinrichtung im Staubereich anzuhalten,
- das zweite Objekt mit Hilfe der Förderelemente auf das erste Objekt zuzubewegen und
- das erste Objekt und das zweite Objekt nach dem Auffahren des zweiten Objekts auf das erste Objekt mit Hilfe der Förderelemente als Objekt-Block mit einer gemeinsamen Ist-Geschwindigkeit in der Förderrichtung stromabwärts zu bewegen,
- den Objekt-Block mit Hilfe der Förderelemente anzuhalten, wenn er mit seiner Block-Hinterkante die Zonen-Hinterkante einer stromabwärts folgenden Zone erreicht und
- eine aktuelle Position der Block-Hinterkante mit Hilfe von Drehsignalen der Antriebe der Förderelemente zu ermitteln.

Durch die vorgeschlagenen Maßnahmen können Objekt-Blöcke auf sehr flexible Weise sowie mit praktisch beliebiger Länge gebildet werden.

Die Erfindung wird zudem auch durch ein Verfahren nach Anspruch 12 und durch eine Fördereinrichtung nach Anspruch 26 definiert. Insbesondere kann
- die Block-Hinterkante der Objekt-Hinterkante des zweiten Objekts entsprechen, wenn das zweite Objekt ein isoliertes Objekt ist (das heißt nicht Teil eines weiteren Objekt-Blocks ist) bevor das zweite Objekt gemeinsam mit dem ersten Objekt Teil eines Objekt-Blocks wird und
- die Block-Hinterkante der Objekt-Hinterkante eines dritten Objekts entsprechen, wenn das zweite Objekt und das dritte Objekt bereits Teil eines Objekt-Blocks sind, bevor das erste Objekt zu diesem Objekt-Block hinzugefügt wird, wobei das dritte Objekt am stromaufwärts gelegenen Ende des Objekt-Blocks angeordnet ist (unabhängig davon, ob das erste Objekt bereits Teil eines Objekt-Blocks ist, bevor das zweite und dritte Objekt zu diesem Objekt-Block hinzugefügt werden).

Die Block-Hinterkante ist demgemäß nicht statisch, sondern variiert mit der Länge des Objekt-Blocks. Der Fall, dass das zweite Objekt ein isoliertes Objekt ist, kann auch als Sonderfall eines Objekt-Blocks angesehen werden, dem nur das zweite Objekt angehört.

Besonders vorteilhaft ist es, wenn geprüft wird, ob eine Gruppe aufeinander folgender Objekte, inkludierend das erste und das zweite Objekt, in eine Zone oder in eine (möglichst kleine) Gruppe aufeinander folgender und zum letzten Objekt der Gruppe stromabwärts liegender Zonen passt und erst dann ein Objekt-Block aus den Objekten der Gruppe gebildet wird, wenn das Ergebnis der Prüfung positiv ist, und andernfalls das zweite Objekt mit seiner Objekt-Hinterkante an einer Zonen-Hinterkante einer zweiten Zone des Staubereichs angehalten wird oder in einem Abstand stromabwärts zu einer der genannten Zonen-Hinterkante angehalten wird, welcher kleiner oder gleich einem gewünschten Abstand zu einem nachfolgenden Objekt entspricht, wobei die zweite Zone hinter der ersten Zone angeordnet ist, insbesondere direkt hinter der ersten Zone. Auf diese Weise wird dann ein Objekt-Block gebildet, wenn dieser auch erfolgreich in einer (möglichst kleinen) Gruppe von Zonen oder sogar in einer Zone untergebracht werden kann. Ist dies nicht möglich, dann wird das zweite Objekt so positioniert, dass es auf einfache Weise mit einem nachfolgenden Objekt Teil eines Objekt-Blocks werden kann.

Besonders vorteilhaft ist es in obigem Zusammenhang, wenn der Objekt-Block bei positivem Ergebnis der Prüfung ohne Zwischenhalt der dem ersten Objekt nachfolgenden Objekte der Gruppe gebildet wird. Häufig kann die oben erläuterte Prüfung schon durchgeführt werden, während die Objekte noch in Bewegung sind. Insbesondere ist dies dann der Fall, wenn mehrere Objekte die erste Messeinrichtung in geringem Abstand passieren. Führt die Prüfung für die noch in Bewegung befindlichen Objekte zu einem positiven Ergebnis, dann werden diese Objekte direkt Teil eines Objekt-Blocks, also ohne bei einem Zwischenhalt anzuhalten. Die Bildung eines Objekt-Blocks erfolgt auf diese Weise besonders rasch, wodurch die Objektdichte auf der Fördereinrichtung rasch gesteigert werden kann.

Der Begriff "Zwischenhalt" bezieht sich dabei generell auf einen Halt des zweiten Objekts, der zusätzlich zu einem Anhalten des zweiten Objekts hinter dem ersten Objekt zum Zwecke der Blockbildung (oder Blockvergrößerung) ausgeführt werden kann. Für die Blockbildung oder Blockvergrößerung wird das zweite Objekt hinter dem ersten Objekt kurz angehalten, um beide Objekte in Folge gemeinsam auf eine Ziel-Geschwindigkeit beschleunigen zu können.

Vorteilhaft ist es weiterhin, wenn alle Objekte zeitlich nacheinander in derselben Zone angehalten werden, wobei die genannte Zone insbesondere direkt hinter einem die erste Messeinrichtung enthaltenden Mess-Bereich angeordnet ist. Auf diese Weise kann das Verfahren zur Bildung eines Objekt-Blocks mit besonders geringem steuerungstechnischem Aufwand realisiert werden. Der Objekt-Block bildet sich dabei ausgehend von einem stromaufwärts gelegenen Bereich der Fördereinrichtung, insbesondere ausgehend vom stromaufwärts gelegenen Ende des Staubereichs.

Vorteilhaft ist es aber auch, wenn die Objekte in unterschiedlichen Zonen angehalten werden, insbesondere beginnend am stromabwärts gelegenen Ende des Staubereichs. Dadurch können die Objekte bei einer entsprechenden Anforderung besonders rasch aus dem Staubereich abtransportiert werden. Der Objekt-Block bildet sich bei dieser Ausführungsvariante ausgehend von einem stromabwärts gelegenen Bereich der Fördereinrichtung, insbesondere ausgehend vom stromabwärts gelegenen Ende des Staubereichs.

Vorteilhaft ist es weiterhin, wenn ein im Staubereich führendes Objekt kein Teil eines Objekt-Blocks wird oder von einem solchen isoliert wird. Dadurch ist es möglich, ein einzelnes Objekt rasch aus dem Staubereich abzutransportieren, wenn eine entsprechende Anforderung erhalten wird (zum Beispiel von einer übergeordneten Steuerung).

Vorteilhaft ist es in obigem Zusammenhang auch, wenn ein dem führenden Objekt nachfolgendes Objekt von einem Objekt-Block gelöst wird und an das stromabwärts gelegene Ende des Staubereichs nachrückt, wenn es Teil eines Objekt-Blocks ist und wenn das führende Objekt den Staubereich verlässt. Dadurch ist es wiederholt möglich, ein einzelnes Objekt rasch aus dem Staubereich abzutransportieren, wenn eine entsprechende Anforderung erhalten wird (zum Beispiel von einer übergeordneten Steuerung). Die Loslösung vom Objekt-Block erfolgt insbesondere dann, wenn die Objekt-Hinterkante des loszulösenden Objekts eine Zonen-Hinterkante (oder Zonen-Vorderkante) einer Zone erreicht.

Günstig ist es auch, wenn dem führenden Objekt nachfolgende Objekte von einem Objekt-Block gelöst werden, wenn diese Teil eines Objekt-Blocks sind und den Staubereich planmäßig gemeinsam mit dem führenden Objekt verlassen sollen, wobei die Loslösung vom Objekt-Block dann erfolgt, wenn die Objekt-Hinterkante des letzten loszulösenden Objekts des Objekt-Blocks eine Zonen-Hinterkante (oder Zonen-Vorderkante) einer Zone erreicht. Dadurch ist es möglich, einen Objekt-Block aus dem Staubereich abzutransportieren, wenn eine entsprechende Anforderung erhalten wird, auch wenn der abzutransportierende Objekt-Block Teil eines größeren Objekt-Blocks ist.

Günstig ist es weiterhin, wenn zumindest ein dem führenden Objekt nachfolgendes Objekt auf das führende Objekt auffährt, wenn die genannten Objekte den Staubereich planmäßig als Objekt-Block verlassen sollen. Dadurch ist es möglich, einen Objekt-Block aus dem Staubereich abzutransportieren, wenn eine entsprechende Anforderung erhalten wird, auch wenn das führende Objekt ein isoliertes Objekt ist.

Besonders vorteilhaft ist es weiterhin, wenn ein Objekt-Block nur bis zu einer Maximallänge gebildet wird, beispielsweise bis zu einer Maximallänge von 10 m. Dadurch wird die Reaktionszeit beim Abtransport von Objekten aus dem Staubereich verbessert. Verbessert wird auch die Möglichkeit zur Teilung von Objekt-Blöcken, da die Masse eines Teilblocks durch die maximale Blocklänge begrenzt und damit seine Handhabbarkeit erleichtert wird.

Von Vorteil ist es auch, wenn das vorgestellte Verfahren zum Stauen von Objekten mehrere wählbare Betriebsmodi aus der Gruppe:
- Verfahren nach Anspruch 16 (Bildung eines Objekt-Blocks ausgehend von einem stromaufwärts gelegenen Bereich der Fördereinrichtung),
- Verfahren nach Anspruch 17 (Bildung eines Objekt-Blocks ausgehend von einem stromabwärts gelegenen Bereich der Fördereinrichtung),
- Verfahren nach Anspruch 16 in Kombination mit einem Verfahren nach einem der Ansprüche 18 bis 22 (Bildung eines Objekt-Blocks ausgehend von einem stromaufwärts gelegenen Bereich der Fördereinrichtung mit zusätzlich isoliertem, führenden Objekt),
- Verfahren nach Anspruch 17 in Kombination mit einem Verfahren nach einem der Ansprüche 18 bis 22 (Bildung eines Objekt-Blocks ausgehend von einem stromabwärts gelegenen Bereich der Fördereinrichtung mit zusätzlich isoliertem, führenden Objekt) aufweist, zwischen denen umgeschaltet werden kann.

Auf diese Weise kann die Fördereinrichtung gut an unterschiedliche Anforderungen angepasst werden.

Demgemäß kann zwischen folgenden Betriebsmodi umgeschaltet werden:
A) alle Objekte werden zeitlich nacheinander in derselben Zone angehalten, wobei die genannte Zone insbesondere direkt hinter einem die erste Messeinrichtung enthaltenden Mess-Bereich angeordnet ist, oder
B) die Objekte werden in unterschiedlichen Zonen angehalten, insbesondere beginnend am stromabwärts gelegenen Ende des Staubereichs.

Den Betriebsmodi A) und B) kann auch jeweils das Merkmal hinzugefügt werden, dass C) ein im Staubereich führendes Objekt kein Teil eines Objekt-Blocks wird oder von einem solchen isoliert wird.

Dem Merkmal C) kann jeweils das Merkmal hinzugefügt werden, dass D) ein dem führenden Objekt nachfolgendes Objekt von einem Objekt-Block gelöst wird und an das stromabwärts gelegene Ende des Staubereichs nachrückt, wenn es Teil eines Objekt-Blocks ist und wenn das führende Objekt den Staubereich verlässt.

Den Merkmalen C) und D) kann jeweils das Merkmal hinzugefügt werden, dass E) dem führenden Objekt nachfolgende Objekte von einem Objekt-Block gelöst werden, wenn diese Teil eines Objekt-Blocks sind und den Staubereich planmäßig gemeinsam mit dem führenden Objekt verlassen sollen, wobei die Loslösung vom Objekt-Block dann erfolgt, wenn die Objekt-Hinterkante des letzten loszulösenden Objekts des Objekt-Blocks eine Zonen-Hinterkante einer Zone erreicht.

Den Merkmalen C), D) und E) kann jeweils das Merkmal hinzugefügt werden, dass F) zumindest ein dem führenden Objekt nachfolgendes Objekt auf das führende Objekt auffährt, wenn die genannten Objekte den Staubereich planmäßig als Objekt-Block verlassen sollen.

Schließlich kann den Merkmalen C), D), E) und F) jeweils das Merkmal hinzugefügt werden, dass G) ein Objekt-Block nur bis zu einer Maximallänge gebildet wird.

Es sind somit folgende Betriebsmodi denkbar: A, A+C, A+C+D, A+C+E, A+C+D+E, A+C+F, A+C+D+F, A+C+E+F, A+C+D+E+F, A+C+G, A+C+D+G, A+C+E+G, A+C+D+E+G, A+C+F+G, A+C+D+F+G, A+C+E+F+G, A+C+D+E+F+G sowie B, B, B+C, B+C+D, B+C+E, B+C+D+E, B+C+F, B+C+D+F, B+C+E+F, B+C+D+E+F, B+C+G, B+C+D+G, B+C+E+G, B+C+D+E+G, B+C+F+G, B+C+D+F+G, B+C+E+F+G, B+C+D+E+F+G.

Günstig ist es zudem, wenn die Fördereinrichtung einen dem Staubereich vorgelagerten Messbereich aufweist, in dem die Objekt-Vorderkante und die Objekt-Hinterkante eines Objekts durch die erste Messeinrichtung erfasst werden. Dadurch können die Objekte im Messbereich unabhängig von den Vorgängen im Staubereich bewegt werden, insbesondere mit konstanter Geschwindigkeit.

Günstig ist es auch, wenn
- zumindest eine zweite Mess-Position, welche stromabwärts zu der ersten Mess-Position im Erfassungsbereich der ersten Messeinrichtung oder einer zweiten Messeinrichtung angeordnet ist, und
- die Steuerung zusätzlich dazu ausgebildet ist, die mit Hilfe der Drehsignale der Antriebe der Förderelemente ermittelte aktuelle Position eines Objekts auf den Wert der zweiten Mess-Position rückzusetzen, wenn das betreffende Objekt an der zweiten Mess-Position detektiert wird.

Dadurch können unvermeidbare Messtoleranzen bei der Ermittlung der Objekt-Hinterkante des ersten Objekts und der Objekt-Vorderkante des zweiten Objekts sowie Ungenauigkeiten bei der Berechnung der Position der Objekt-Hinterkante des ersten Objekts und der Objekt-Vorderkante des zweiten Objekts kompensiert werden. Aufgrund der besagten Messtoleranzen ist tatsächliche Position eines Objekts in der Steuerung nämlich nicht genau bekannt, sondern die bekannte Position ist nur eine der tatsächlichen Position angenäherte Position. Beim Rücksetzten wird aber wieder die bekannte Position der zweiten Messeinrichtung als Position des passierenden Objekts gesetzt. Die der Steuerung bekannte Position des Objekts entspricht dann wieder der tatsächlichen Position des Objekts. Die genannten Maßnahmen sind nicht auf eine (einzige) zweite Mess-Position beschränkt, sondern es können mehrere zweite Mess-Positionen beziehungsweise Messeinrichtungen im Verlauf der Fördereinrichtung vorgesehen werden, um die der Steuerung vorliegende Position eines Objekts öfter der tatsächlichen Position des betreffenden Objekts anzugleichen, beziehungsweise um messbedingte Fehler nicht zu groß werden zu lassen.

Schließlich ist es günstig, wenn als Messeinrichtung eine Lichtschranke, eine Kamera oder ein Laser-Scanner vorgesehen ist. Diese Geräte stellen erprobte und leicht verfügbare Mittel zur Bestimmung der Position eines Objekts dar. An dieser Stelle wird auch angemerkt, dass nicht in jeder Mess-Position eine eigene Messeinrichtung vorhanden sein muss. Denkbar ist vielmehr, dass eine Messeinrichtung mehrere Mess-Positionen erfassen kann. Dies gilt insbesondere für Kameras und Laser-Scanner.

An dieser Stelle wird angemerkt, dass sich die zu der vorgestellten Fördereinrichtung offenbarten Varianten und Vorteile gleichermaßen auf das vorgestellte Verfahren beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: die prinzipielle Struktur einer beispielhaften Fördereinrichtung in Seitenansicht;
- Fig. 2: die Fördereinrichtung aus Fig. 1 in Draufsicht;
- Fig. 3: wie Fig. 2, jedoch mit einem Objekt in allgemeiner Lage im Ausrichtbereich;
- Fig. 4: wie Fig. 3, jedoch mit dem längs ausgerichteten Objekt im Messbereich;
- Fig. 5: eine detailliert dargestellte Fördereinrichtung in Seitenansicht mit einem darauf bewegten ersten Objekt;
- Fig. 6: wie Fig. 5, jedoch mit einem zweiten Objekt, das entsprechend einem geplanten Geschwindigkeitsverlauf linear verzögert werden soll;
- Fig. 7: eine Detailansicht der Fig. 6 mit dem an der Objekt-Hinterkante des ersten Objekts endenden Geschwindigkeitsverlauf des zweiten Objekts;
- Fig. 8: ähnlich wie Fig. 6, jedoch mit einem Geschwindigkeitsverlauf für das zweite Objekt, der stromabwärts zur Objekt-Hinterkante des ersten Objekts endet;
- Fig. 9: eine Detailansicht der Fig. 8;
- Fig. 10: ähnlich wie Fig. 8, jedoch mit einem Geschwindigkeitsverlauf für das zweite Objekt, der einen degressiven Abschnitt aufweist;
- Fig. 11: eine Detailansicht der Fig. 10;
- Fig. 12: ähnlich wie Fig. 6, jedoch mit virtuell verkürzten Objekten;
- Fig. 13: eine Detailansicht der Fig. 12;
- Fig. 14: ähnlich wie Fig. 6, jedoch mit virtuell vergrößerten Objekten;
- Fig. 15: eine Detailansicht der Fig. 14;
- Fig. 16 bis 24: eine Fördereinrichtung zu verschiedenen Zeitpunkten eines beispielhaften Verfahrensablaufs zur Bildung eines Objekt-Blocks am stromaufwärts gelegenen Ende des Staubereichs;
- Fig. 25 bis 39: eine Variante des in den Fig. 16 bis 24 beschriebenen Verfahrensablaufs, bei dem ein Objekt isoliert am stromabwärts gelegenen Ende des Staubereichs positioniert wird;
- Fig. 40 bis 41: eine andere Variante des in den Fig. 25 bis 39 beschriebenen Verfahrensablaufs zur Isolierung eines Objekts von einem Objekt-Block;
- Fig. 42 bis 43: eine weitere Variante zur Isolation eines Objekts von einem Objekt-Block;
- Fig. 44 bis 50: eine Fördereinrichtung zu verschiedenen Zeitpunkten eines beispielhaften Verfahrensablaufs zur Bildung eines Objekt-Blocks am stromabwärts gelegenen Ende des Staubereichs;
- Fig. 51 bis 55: ähnlich wie der in Fig. 44 bis 50 beschriebene Verfahrensablauf, jedoch mit knapp aufeinander folgenden Objekten am Eingang des Staubereichs;
- Fig. 56 bis 61: ähnlich wie der in Fig. 51 bis 55 beschriebene Verfahrensablauf, jedoch mit stromabwärts beginnender Bildung eines Objekt-Blocks;
- Fig. 62 bis 70: einen beispielhaften Verfahrensablauf zur Isolation eines Objekts von einem Objekt-Block ausgehend von der in Fig. 50, 55 oder 61 dargestellten Situation;
- Fig. 71 bis 81: einen beispielhaften Verfahrensablauf bei der Zusammenführung von Objekt-Blöcken und
- Fig. 82: einen beispielhaften Objekt-Block, dessen Objekte virtuell vergrößert sind.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

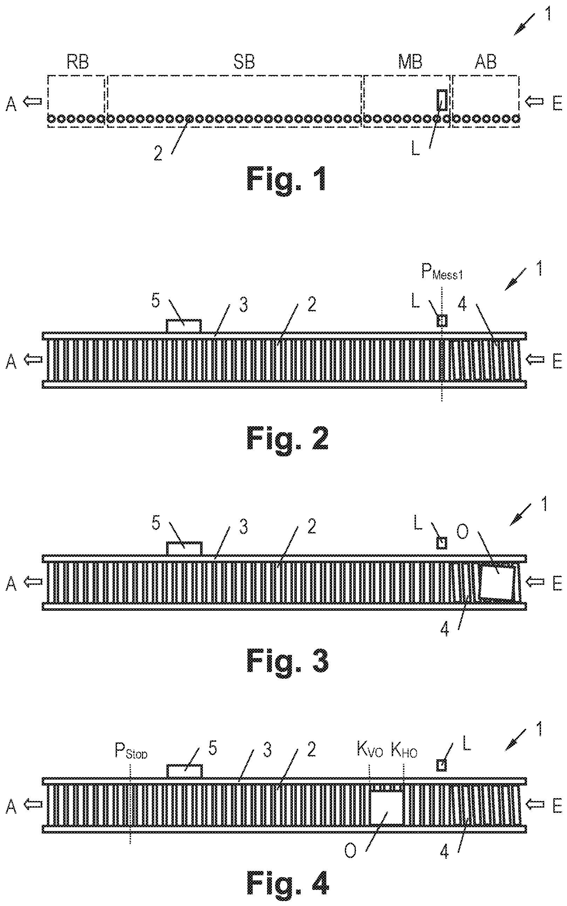

Die Fig. 1 bis 4 zeigen eine Fördereinrichtung 1 für eine Förderanlage zum Stauen von Objekten O in Form von Objekt-Blöcken. Die Fig. 1 zeigt die Fördereinrichtung 1 in Seitenansicht, die Fig. 2 bis 4 in Draufsicht.

Die Fördereinrichtung 1 ist in einen Staubereich SB, einen optionalen Messbereich MB, einen optionalen Ausrichtbereich AB und einen optionalen Auflösebereich RB unterteilt. Der Messbereich MB ist stromaufwärts zum Staubereich SB angeordnet, der Ausrichtbereich AB ist stromaufwärts zum Messbereich MB angeordnet, und der Auflösebereich RB ist stromabwärts zum Staubereich SB angeordnet. Ein Zustrom von Objekten O erfolgt am Eingang E der Fördereinrichtung 1, ein Abtransport über den Ausgang A. Die mit Pfeilen symbolisierte Förderrichtung verläuft in den Figuren 1 bis 4 (und auch in allen folgenden Figuren) von rechts nach links. Positionen, die einer anderen Position in Förderrichtung nachfolgen, liegen "stromabwärts". Positionen, die in Förderrichtung vor einer anderen Position liegen, liegen "stromaufwärts". Der Eingang E ist also stromaufwärts vom Ausgang A angeordnet und der Ausgang A stromabwärts zum Eingang E.

Die Fördereinrichtung 1 umfasst mehrere angetriebene Förderelemente 2 zum Transport der Objekte O. Im gezeigten Beispiel sind die Förderelemente 2 konkret als Förderrollen ausgebildet, die zwischen zwei Längsträgern 3 angeordnet sind. Im Ausrichtbereich AB sind Ausrichtelemente 4 angeordnet, welche im gezeigten Beispiel als schräg angeordnete Ausrichtrollen 4 ausgebildet sind.

Die Fördereinrichtung 1 umfasst auch eine erste Messeinrichtung L zum Erfassen einer Objekt-Vorderkante Kᵥₒ und einer Objekt-Hinterkante K_{HO} des Objekts O an einer ersten Mess-Position P_{Mess1}, wobei die Objekt-Vorderkante Kvo in der Förderrichtung stromabwärts zu der Objekt-Hinterkante K_{HO} des Objekts O liegt. Die Messeinrichtung L ist im konkret dargestellten Beispiel als Lichtschranke ausgebildet, sie könnte aber auch zum Beispiel durch eine Kamera, einen Laser-Scanner oder dergleichen gebildet sein.

Schließlich umfasst die Fördereinrichtung 1 auch eine Steuerung 5, welche im gezeigten Beispiel an einem der Längsträger 3 angeordnet und über nicht dargestellte Steuerleitungen oder einen Steuerbus mit den Förderrollen 2 steuertechnisch verbunden ist.

Die Funktion der in den Fig. 1 bis 4 dargestellten Fördereinrichtung 1 ist nun wie folgt:
Von einem nicht dargestellten Förderer, der stromaufwärts zu der in den Fig. 1 bis 4 dargestellten Fördereinrichtung 1 liegt, wird das Objekt O antransportiert und in der Fig. 3 in den Ausrichtbereich AB übergeben. Durch die Ausrichtrollen 4 und die Förderrollen 2 wird das Objekt O in Förderrichtung über die Fördereinrichtung 1 transportiert. Die schräg gestellten Ausrichtrollen 4 sorgen dabei dafür, dass das Objekt O den nachfolgenden Messbereich MB in einer vordefinierten Ausrichtung erreicht, nämlich indem eine Seitenkante des Objekts O mit einem der Längsträger 3 ausgerichtet wird. Die dargestellte Ausrichtung des Objekts O ist rein beispielhaft, und es sind natürlich auch andere Methoden zur Ausrichtung des Objekts O möglich. Der Ausrichtbereich AB ist, wie erwähnt, rein optional und kann auch entfallen.

Im Messbereich MB passiert das von den Förderrollen 2 angetriebene Objekt O an der ersten Mess-Position P_{Mess1} die Lichtschranke L, welche die Objekt-Vorderkante Kvo und die Objekt-Hinterkante K_{HO} des Objekts O ermittelt. Mit Hilfe von Drehsignalen der Antriebe der Förderrollen 2 kann nun die aktuelle Position des Objekts O auf der Fördereinrichtung 1 zu jedem Zeitpunkt ermittelt werden. Beispielsweise werden dazu die Signale eines mit der Förderrolle 2 gekoppelten Drehgebers oder die Signale eines Hall-Sensors des Antriebsmotors der Förderrolle 2 ausgewertet. Über diese Signale können die Stellung der Förderrolle 2, die Drehzahl der Förderrolle 2 und die Anzahl der Drehungen der Förderrolle 2, die sie seit einem bestimmten Zeitpunkt vollführt hat, ermittelt werden. Die Anzahl der Drehungen der Förderrolle 2 multipliziert mit dem Umfang der Förderrolle 2 ergibt die (theoretische) Position des Objekts O.

Mit Hilfe der Steuerung 5 werden die Antriebe der Förderrollen 2 entsprechend einer vorgegebenen Soll-Bewegung des Objekts O angesteuert. Beispielsweise wird das Objekt O mit Hilfe der Förderrollen 2 zu einer Anhalte-Position P_{Stop} bewegt, welche der ersten Mess-Position P_{Mess1} in der Förderrichtung stromabwärts nachgelagert ist, und dort angehalten.

Der Auflösebereich RB dient der Auflösung von Objekt-Blöcken sowie dem Herstellen von (vorgegebenen oder sich zufällig ergebenden) Abständen zwischen mehreren Objekten O, die den Staubereich SB verlassen haben. Insbesondere wird dies dadurch erreicht, dass ein stromabwärts liegender Abschnitt im Auflösebereich RB mit höherer Fördergeschwindigkeit betrieben wird als ein stromaufwärts liegender Abschnitt. Die Objekte O werden dadurch automatisch voneinander beabstandet.

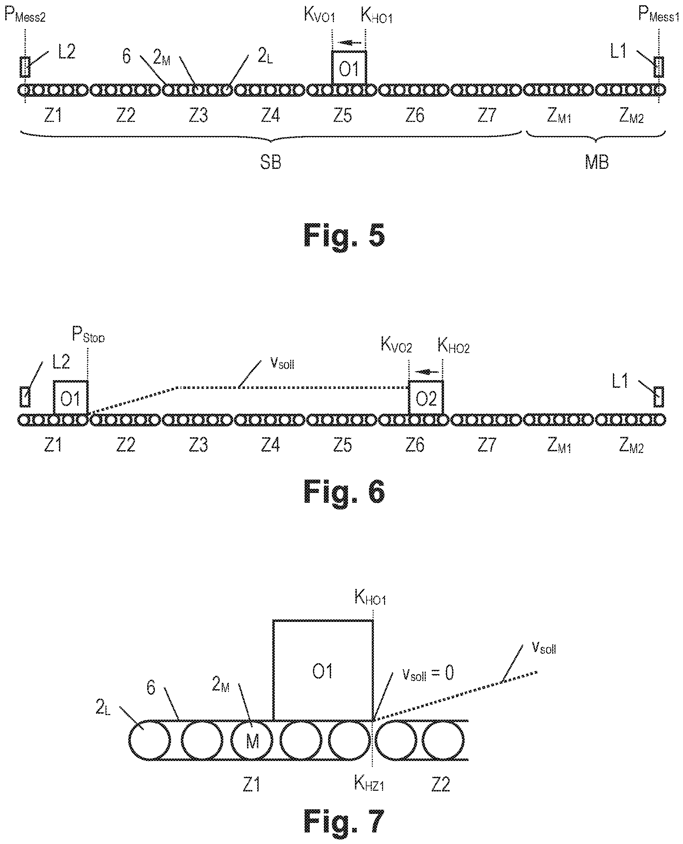

Die Fig. 5 bis 7 zeigen nun ein erstes Beispiel, wie die Bildung eines Objekt-Blocks erfolgen kann. Die Fig. 5 und 6 zeigen dabei den Staubereich SB und den Messbereich MB einer Fördereinrichtung 1 in Seitenansicht. Die Fig. 7 zeigt eine Detailansicht des Staubereichs SB. Insbesondere ist dort der Motor M der motorisierten Förderrolle 2_{M} angedeutet.

Der Staubereich SB ist in den Fig. 5 bis 7 beispielhaft in sieben Zonen Z1..Z7 unterteilt. Jede Zone Z1..Z7 weist eine motorisierte Förderrolle 2_{M} und mehrere (hier vier) nicht motorisierte Förderrollen 2_{L} auf, die über einen Riemen 6 von der motorisierten Förderrolle 2_{M} mit angetrieben werden. Jede Zone Z1..Z7 ist daher unabhängig voneinander antreibbar. Das heißt, die Fördergeschwindigkeit in der Zone Z1 kann unabhängig von der Fördergeschwindigkeit in den anderen Zonen Z2..Z7 eingestellt werden, und so weiter. Innerhalb einer Zone Z1..Z7 ist die Fördergeschwindigkeit jedoch gleich.

An dieser Stelle wird angemerkt, dass die Gruppierung einer motorisierten Förderrolle 2_{M} mit vier nicht motorisierten Förderrollen 2_{L} rein beispielhaft ist und die Förderrollen 2_{M}, 2_{L} auch auf andere Weise gruppiert werden können. Beispielsweise wäre denkbar, dass zwei motorisierte Förderrollen 2_{M} mit fünf nicht motorisierten Förderrollen 2_{L} zu einer Gruppe und damit zu einer entsprechend größeren Zone Z1..Z7 zusammengefasst werden. Denkbar wäre weiterhin, dass alle Förderrollen 2 im Staubereich SB motorisiert sind und eine Gruppierung über Riemen 6 entfallen kann. Jede Förderrolle 2 kann dann eine Zone Z1..Z7 bilden. Motorisierte Förderrollen 2_{M} können auch rein steuerungstechnisch (also ohne Riemen 6) zu einer Zone Z1..Z7 gruppiert werden. Denkbar ist natürlich auch, dass eine Zone Z1..Z7 durch ein Förderband oder eine Förderkette gebildet ist, die über die Förderrollen 2 geführt ist.

Im Messbereich MB ist die erste Lichtschranke L1 an einer ersten Mess-Position P_{Mess1} angeordnet. Der Messbereich MB weist in dem gezeigten Beispiel ebenfalls zwei Zonen Z_{M1} und Z_{M2} auf, die grundsätzlich so aufgebaut sein können wie die Zonen Z1..Z7. Diese Zonen Z_{M1}, Z_{M2} können ebenfalls individuell angesteuert werden, in der Regel werden diese Zonen Z_{M1}, Z_{M2} jedoch synchron betrieben. Eine Trennung des Messbereichs MB in mehrere Zonen Z_{M1}, Z_{M2} ist daher nicht unbedingt erforderlich. Selbstverständlich kann der Messbereich MB auch eine andere Anzahl an Zonen Z_{M1}, Z_{M2} aufweisen.

Am stromabwärts gelegenen Ende des Staubereichs SB ist an einer zweiten Mess-Position P_{Mess2} zudem eine zweite Messeinrichtung L2 in Form einer Lichtschranke angeordnet, deren Bedeutung später erläutert wird.

Eine Bewegung eines Objekts O1, O2 wird in den Fig. 5 und 6 (und auch in allen nachfolgenden Figuren) mit einem über dem betreffenden Objekt O1, O2 gezeichneten Pfeil symbolisiert. Befindet sich kein Pfeil über dem Objekt O1, O2, so steht es zum dargestellten Zeitpunkt still.

In der Fig. 5 bewegt sich ein erstes Objekt O1 über die Fördereinrichtung 1 und befindet sich im dargestellten Zeitpunkt in der Zone Z5. In dem in Fig. 6 dargestellten Zeitpunkt wurde das erste Objekt O1 an der Anhalte-Position P_{Stop} in der Zone Z1 angehalten. Ein zweites Objekt O2 ist gerade in Bewegung und befindet sich in der Zone Z6.

Das erste Objekt O1 weist eine Objekt-Vorderkante K_{VO1} und eine Objekt-Hinterkante K_{HO1} auf. In gleicher Weise weist das zweite Objekt O2 eine Objekt-Vorderkante K_{VO2} und eine Objekt-Hinterkante K_{HO2} auf. Beim Passieren der ersten Lichtschranke L1 an der Mess-Position P_{Mess1} wird zumindest die Objekt-Hinterkante K_{HO1} des ersten Objekts O1 und die Objekt-Vorderkante K_{VO2} des zweiten Objekts O2 detektiert, sodass deren Position auf der Fördereinrichtung 1 in Folge über die Drehsignale der Antriebe M der Förderrollen 2_{M}, 2_{L} für jeden Zeitpunkt berechnet werden kann. Zweckmäßig ist es, auch die Objekt-Vorderkante K_{VO1} des ersten Objekts O1 und die Objekt-Hinterkante K_{HO2} des zweiten Objekts O2 zu detektieren, sodass das angegebene Verfahren rekursiv für beliebig viele Objekte O1, O2 wiederholt und beliebig lange Objekt-Blöcke gebildet werden können. Insbesondere können auch die Längen der Objekte O1, O2 und/oder die Abstände zwischen den Objekten O1, O2 ermittelt werden.

Vorteilhaft werden das erste Objekt O1 und das zweite Objekt O2 mit konstanter und insbesondere mit der gleichen Geschwindigkeit an der ersten Mess-Position P_{Mess1} vorbeibewegt werden. Denkbar wäre grundsätzlich aber auch, dass die beiden Objekt O1, O2 mit unterschiedlicher (jedoch konstanter) Geschwindigkeit oder mit variierender (also nicht konstanter) Geschwindigkeit an der ersten Mess-Position P_{Mess1} vorbeibewegt werden.

Für das zweite Objekt O2 wird von der Steuerung 5 nun ein stetiger Verlauf einer Geschwindigkeitsreduktion einer Soll-Geschwindigkeit vₛₒₗₗ berechnet, wobei die berechnete Anhalte-Position P_{Stop} der Objekt-Vorderkante K_{VO2} des zweiten Objekts O2 in diesem Beispiel an der Position der Objekt-Hinterkante K_{HO1} des angehaltenen ersten Objekts O1 liegt. An der Anhalte-Position P_{Stop} gilt für die Soll-Geschwindigkeit vₛₒₗₗ = 0. Der Verlauf der SollGeschwindigkeit vₛₒₗₗ ist in der Fig. 7 im Detail dargestellt.

In Folge wird das zweite Objekt O2 mit Hilfe der Förderrollen 2_{M}, 2_{L} anhand der berechneten Geschwindigkeitsreduktion bewegt und angehalten, wobei eine aktuelle Position des zweiten Objekts O2 zwischen der ersten Mess-Position P_{Mess1} und seiner Anhalte-Position P_{Stop} in der schon beschriebenen Weise mit Hilfe von Drehsignalen der Antriebe M der Förderrollen 2_{M}, 2_{L} ermittelt wird. Durch die vorgeschlagenen Maßnahmen kann das zweite Objekt O2 so angehalten werden, dass ein abstandsloses und druckloses Stauen von Objekten O1, O2 beziehungsweise eine abstandslose und drucklose Bildung von Objekt-Blöcken möglich ist. Selbstverständlich können dem Objekt-Block, der das erste Objekt O1 und das zweite Objekt O2 umfasst, in der beschriebenen Weise auch noch weitere Objekte hinzugefügt werden.

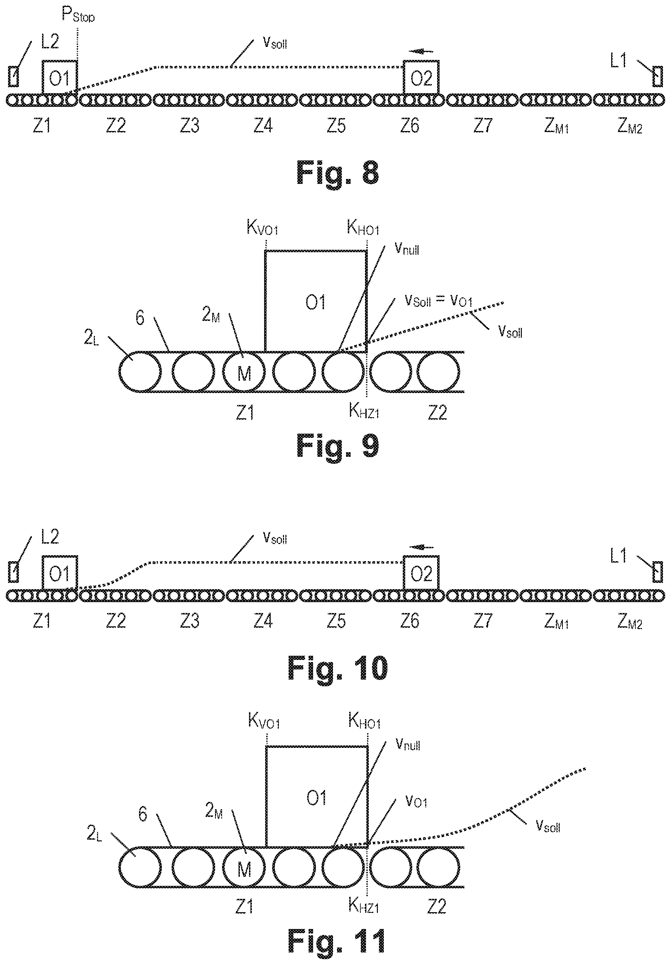

In den Fig. 8 und 9 ist eine Situation dargestellt, die der in Fig. 6 und 7 dargestellten Situation sehr ähnlich ist. Im Unterschied dazu befindet sich die berechnete Anhalte-Position P_{Stop} der Objekt-Vorderkante K_{VO2} des zweiten Objekts O2, an der für die Soll-Geschwindigkeit vₛₒₗₗ = 0 gilt, nun aber zwischen der Objekt-Vorderkante K_{VO1} und der Objekt-Hinterkante K_{HO1} des angehaltenen ersten Objekts O1. An der Objekt-Hinterkante K_{HO1} des angehaltenen ersten Objekts O1 beträgt die Soll-Geschwindigkeit vₛₒₗₗ = v_{O1} > 0. Das heißt, das zweite Objekt O2 fährt planmäßig mit der Restgeschwindigkeit v_{O1} auf das erste Objekt O1 auf.

Auf diese Weise können unvermeidbare Messtoleranzen bei der Ermittlung der Objekt-Hinterkante K_{HO1} des ersten Objekts O1 und der Objekt-Vorderkante K_{VO2} des zweiten Objekts O2 sowie Ungenauigkeiten bei der Berechnung der Position der Objekt-Hinterkante K_{HO1} des ersten Objekts O1 und der Objekt-Vorderkante K_{VO2} des zweiten Objekts O2 ausgeglichen werden. Das heißt, es kann sichergestellt werden, dass das zweite Objekt O2 nach dem Anhalten das erste Objekt O1 tatsächlich berührt. Durch die vorgeschlagenen Maßnahmen kann das zweite Objekt O2 so angehalten werden, dass ein abstandsloses und druckarmes Stauen von Objekten O1, O2 beziehungsweise eine abstandslose und druckarme Bildung von Objekt-Blöcken möglich ist.

Ohne zusätzliche Maßnahmen können die genannten Messtoleranzen dazu führen, dass das zweite Objekt O2 nicht auf das erste Objekt O1 auffährt. Allerdings können die Messtoleranzen auch dazu führen, dass das zweite Objekt O2 stärker auf das erste Objekt O1 auffährt als geplant. Wenn viele Objekte O1, O2 an einer Bildung eines Objekt-Blocks beteiligt sind, richten sich die Objekte O1, O2 in Summe jedoch in aller Regel gut zu einem Objekt-Block aus, in dem nur geringer Staudruck zwischen den Objekten O1, O2 herrscht, auch wenn nicht alle Objekte O1, O2 sofort dicht auf dicht auffahren.

In den Fig. 9 und 10 ist eine Situation dargestellt, die der in Fig. 8 und 9 dargestellten Situation sehr ähnlich ist. Die Geschwindigkeitsreduktion weist nun jedoch keinen linearen Verlauf auf, so wie das in den in den Fig. 5 bis 9 gezeigten Beispielen der Fall ist. Stattdessen weist die Geschwindigkeitsreduktion einen degressiv verlaufenden Abschnitt im Bereich der Objekt-Hinterkante K_{HO1} des angehaltenen ersten Objekts O1 auf. Das heißt, das zweite Objekt O2 wird zu Beginn des Bremsvorgangs stärker verzögert als am Ende des Bremsvorgangs. Aus dem Vergleich der Fig. 10 und 11 mit den Fig. 8 und 9 wird deutlich, dass die an der Objekt-Hinterkante K_{HO1} des angehaltenen ersten Objekts O1 geplante Restgeschwindigkeit v_{O1} bei gleichem Bremsweg und gleicher Position für die Soll-Geschwindigkeit vₛₒₗₗ = 0 nun deutlich kleiner ist. Demzufolge fährt das zweite Objekt O2 sanfter auf das erste Objekt O1. Durch die vorgeschlagenen Maßnahmen kann das zweite Objekt O2 so angehalten werden, dass ein abstandsloses und druckärmeres Stauen von Objekten O1, O2 beziehungsweise eine abstandslose und druckärmere Bildung von Objekt-Blöcken möglich ist.

Ergänzend wird angemerkt, dass die Geschwindigkeitsreduktion natürlich auch dann einen degressiv verlaufenden Abschnitt im Bereich der Position der Objekt-Hinterkante K_{HO1} des angehaltenen ersten Objekts O1 aufweisen kann, wenn die berechnete Anhalte-Position P_{Stop} der Objekt-Vorderkante K_{VO2} des zweiten Objekts O2 an der Position der Objekt-Hinterkante K_{HO1} des angehaltenen ersten Objekts O1 liegt. Demzufolge kann ein degressiver Geschwindigkeitsverlauf auch in dem in den Fig. 5 bis 7 dargestellten Fall angewendet werden.

Vorzugsweise beträgt die geplante Restgeschwindigkeit v_{O1} an der Objekt-Hinterkante K_{HO1} des angehaltenen ersten Objekts O1 maximal 0,1 m/s. Auf diese Weise können Beschädigungen der Objekte O1, O2 bei der Bildung von Objekt-Blöcken gut vermieden werden.

In den beschriebenen Beispielen wird das erste Objekt O1 mit seiner Objekt-Hinterkante K_{HO1} und das zweite Objekt O2 mit seiner Objekt-Vorderkante K_{VO2} an einer stromaufwärts gelegenen Zonen-Hinterkante K_{HZ1} der ersten Zone Z1 angehalten. Dies ist aber keine zwingende Bedingung für das beschriebene Verfahren, und die Anhalte-Position P_{Stop} kann grundsätzlich auch anderswo auf der Fördereinrichtung 1 liegen.

Um ein abstandsloses und druckarmes Stauen von Objekten O1, O2 zu gewährleisten können noch weitere, andere Strategien angewandt werden.

Beispielsweise können die im Bereich des ersten Objekts O1 angeordnete Förderrollen 2_{M}, 2_{L} nach dem Anhalten des ersten Objekts O1 gebremst werden. Auf diese Weise wird verhindert, dass das erste Objekt O1 vom zweiten Objekt O2 weggestoßen wird und sich nach dem Anhalten des zweiten Objekts O2 ein unerwünschter Abstand zwischen den beiden Objekten O1, O2 bildet. Das Bremsen kann mit maximaler Bremskraft erfolgen, um ein Wegstoßen des ersten Objekts O1 auf jeden Fall zu verhindern, oder mit verringerter Bremskraft, um ein sanftes Auffahren des zweiten Objekts O2 auf das erste Objekt O1 zu gewährleisten. In diesem Zusammenhang ist es auch von Vorteil, wenn die im Bereich des ersten Objekts O1 angeordneten Förderrollen 2_{M}, 2_{L} nach dem Anhalten des ersten Objekts O1 in einen Freilauf geschaltet werden. Auf diese Weise kann ein besonders sanftes Auffahren des zweiten Objekts O2 auf das erste Objekt O1 gewährleistet werden.

Denkbar ist weiterhin, dass ein Bremsmoment einer im Bereich des ersten Objekts O1 angeordneten Förderrolle 2_{M}, 2_{L} gemessen wird und das zweite Objekt O2 angehalten wird, wenn das Bremsmoment einen ersten Schwellwert überschreitet. Dadurch kann ein definierter Staudruck innerhalb des Objekt-Blocks eingestellt werden.

Denkbar ist weiterhin, dass ein Bremsmoment einer im Bereich des ersten Objekts O1 angeordneten Förderrolle 2_{M}, 2_{L} gemessen wird und das zweite Objekt O2 nach dem Kontakt mit dem ersten Objekt O1 zurückbewegt und angehalten wird, wenn das Bremsmoment einen zweiten Schwellwert unterschreitet. Dadurch kann ebenfalls ein definierter Staudruck innerhalb des Objekt-Blocks eingestellt werden, insbesondere wenn der Druck zwischen dem ersten Objekt O1 und dem zweiten Objekt O2 nach dem Auffahren des zweiten Objekts O2 vorerst zu groß ist.

Um unvermeidbare Messtoleranzen bei der Ermittlung der Objekt-Hinterkante K_{HO1} des ersten Objekts O1 und der Objekt-Vorderkante K_{VO2} des zweiten Objekts O2 sowie Ungenauigkeiten bei der Berechnung der Position der Objekt-Hinterkante K_{HO1} des ersten Objekts O1 und der Objekt-Vorderkante K_{VO2} des zweiten Objekts O2 auszugleichen, können der Berechnung der Geschwindigkeitsreduktion auch virtuelle Objekt-Kanten zugrunde gelegt werden.

Denkbar ist beispielsweise, dass der Berechnung der Geschwindigkeitsreduktion
a) eine virtuelle Objekt-Hinterkante G_{HO1} des ersten Objekts O1 zugrunde gelegt wird, welche stromabwärts zur physischen Objekt-Hinterkante K_{HO1} des ersten Objekts O1 liegt und/oder
b) eine virtuelle Objekt-Vorderkante G_{VO2} des zweiten Objekts O2 zugrunde gelegt wird, welche stromaufwärts zur physischen Objekt-Vorderkante K_{VO2} des zweiten Objekts O2 liegt.

Der in der Steuerung 5 angenommene Abstand zwischen den beiden Objekten O1, O2 ist also größer als der tatsächliche Abstand zwischen den beiden Objekten O1, O2. Generell kann der Berechnung der Geschwindigkeitsreduktion also eine virtuelle Länge eines Objekts O1, O2 zugrunde gelegt werden, welche kleiner als die physische Länge eines Objekts O1, O2 ist. Dies führt dazu, dass die tatsächliche Anhalte-Position P_{Stop} für das zweite Objekt O2 weiter in das erste Objekt O1 hinein verlegt ist.

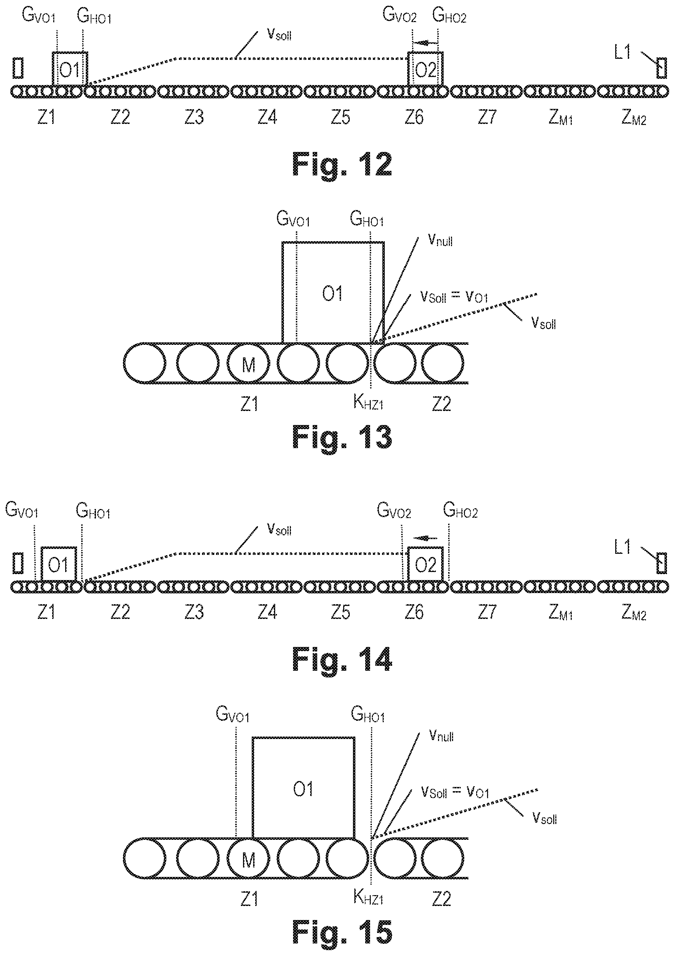

Die Fig. 12 und 13 zeigen dazu ein Beispiel, das an dem in Fig. 6 und 7 dargestellten Fall angelehnt ist. Für das zweite Objekt O2 wird von der Steuerung 5 wiederum ein stetiger Verlauf einer Geschwindigkeitsreduktion einer Soll-Geschwindigkeit vₛₒₗₗ berechnet, wobei die berechnete Anhalte-Position P_{Stop} der virtuellen Objekt-Vorderkante G_{VO2} des zweiten Objekts O2 an der Position der virtuellen Objekt-Hinterkante G_{HO1} des ersten angehaltenen Objekts O1 liegt. Dadurch befindet sich die berechnete Anhalte-Position P_{Stop} der zweiten physischen Objekt-Vorderkante K_{VO2} des zweiten Objekts O2, an der für die Soll-Geschwindigkeit vₛₒₗₗ = 0 gilt, nun aber tatsächlich zwischen der physischen Objekt-Vorderkante K_{VO1} und der physischen Objekt-Hinterkante K_{HO1} des angehaltenen ersten Objekts O1. Das heißt, obwohl steuerungstechnisch eine Situation nach Fig. 6 und 7 vorliegt, ergibt sich tatsächlich eine Situation nach Fig. 13, welche mit der in Fig. 9 vorliegenden Situation vergleichbar ist. Durch die vorgeschlagenen Maßnahmen wird das zweite Objekt O2 wiederum so angehalten, dass ein abstandsloses und druckarmes Stauen von Objekten 01, 02 beziehungsweise eine abstandslose und druckarme Bildung von Objekt-Blöcken möglich ist. Dadurch, dass der Staudruck innerhalb eines Objekt-Blocks gegenüber dem Fall nach Fig. 6 und 7 erhöht wird, eignet sich die vorgeschlagene Vorgangsweise insbesondere für unempfindliche Objekte O2, O2.

Denkbar wäre aber auch, dass der Berechnung der Geschwindigkeitsreduktion
c) eine virtuelle Objekt-Hinterkante G_{HO1} des ersten Objekts O1 zugrunde gelegt wird, welche stromaufwärts zur physischen Objekt-Hinterkante K_{HO1} des ersten Objekts O1 liegt und/oder
d) eine virtuelle Objekt-Vorderkante G_{VO2} des zweiten Objekts O2 zugrunde gelegt wird, welche stromabwärts zur physischen Objekt-Vorderkante K_{VO2} des zweiten Objekts O2 liegt.

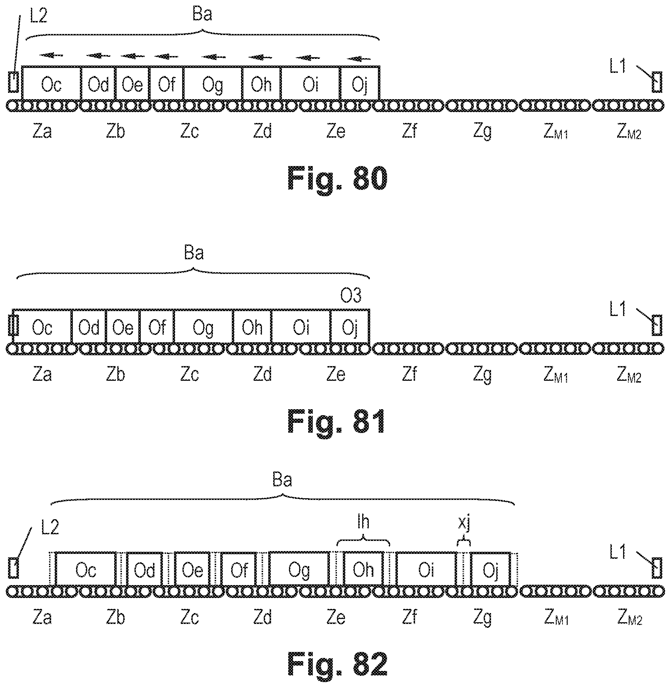

Der in der Steuerung 5 angenommene Abstand zwischen den beiden Objekten O1, O2 ist dann also kleiner als der tatsächliche Abstand zwischen den beiden Objekten O1, O2. Generell kann der Berechnung der Geschwindigkeitsreduktion also eine virtuelle Länge eines Objekts O1, O2 zugrunde gelegt werden, welche größer als die physische Länge eines Objekts O1, O2 ist. Dies führt dazu, dass die tatsächliche Anhalte-Position P_{Stop} für das zweite Objekt O2 weiter aus dem ersten Objekt O1 heraus verlegt ist (vergleiche auch Fig. 82).

Die Fig. 14 und 15 zeigen dazu ein Beispiel, das wiederum an dem in Fig. 6 und 7 dargestellten Fall angelehnt ist. Für das zweite Objekt O2 wird von der Steuerung 5 wiederum ein stetiger Verlauf einer Geschwindigkeitsreduktion einer Soll-Geschwindigkeit vₛₒₗₗ berechnet, wobei die berechnete Anhalte-Position P_{Stop} der virtuellen Objekt-Vorderkante G_{VO2} des zweiten Objekts O2 an der Position der virtuellen Objekt-Hinterkante G_{HO1} des ersten angehaltenen Objekts O1 liegt. Dadurch befindet sich die berechnete Anhalte-Position P_{Stop} der zweiten physischen Objekt-Vorderkante K_{VO2} des zweiten Objekts O2, an der für die SollGeschwindigkeit vₛₒₗₗ = 0 gilt, nun aber tatsächlich vor der physischen Objekt-Hinterkante K_{HO1} des angehaltenen ersten Objekts O1. Das heißt, obwohl steuerungstechnisch eine Situation nach Fig. 6 und 7 vorliegt, ergibt sich tatsächlich eine Situation nach Fig. 15. Durch die vorgeschlagenen Maßnahmen ist ein druckärmeres Stauen von Objekten O1, O2 beziehungsweise eine druckärmere Bildung von Objekt-Blöcken möglich ist. Daher ist die vorgeschlagene Vorgangsweise im Besonderen für empfindliche Objekte 01, 02 geeignet, wie zum Beispiel für Behältnisse mit zerbrechlichen Waren oder auch für Behältnisse, die leicht verformbar sind, zum Beispiel flexible Beutel (Polybags).

In den in Fig. 12 bis 15 beschriebenen Beispielen werden das erste Objekt O1 mit seiner virtuellen Objekt-Hinterkante G_{HO1} und das zweite Objekt O2 mit seiner virtuellen Objekt-Vorderkante G_{VO2} an einer stromaufwärts gelegenen Zonen-Hinterkante K_{HZ1} der ersten Zone Z1 angehalten. Dies ist aber keine zwingende Bedingung für das beschriebene Verfahren.

Denkbar wäre auch, dass das erste Objekt O1 nach wie vor mit seiner physischen Objekt-Hinterkante K_{HO1} und das zweite Objekt O2 mit seiner physischen Objekt-Vorderkante K_{VO2} an einer stromaufwärts gelegenen Zonen-Hinterkante K_{HZ1} der ersten Zone Z1 angehalten werden. In diesem Fall werden die virtuelle Objekt-Hinterkante G_{HO1} des ersten Objekts O1 und die virtuelle Objekt-Vorderkante G_{VO2} des zweiten Objekts O2 lediglich für die Berechnung der Geschwindigkeitsreduktion des zweiten Objekts O2 herangezogen.

Der Vollständigkeit halber wird auch darauf hingewiesen, dass die unterschiedlichen, in den Fig. 5 bis 15 beschriebenen, Verfahrensvarianten einander nicht ausschließen. Denkbar wäre beispielsweise, dass die Fördereinrichtung 1 zu verschiedenen Zeitpunkten unterschiedlich betrieben wird. Beispielsweise kann in einem ersten Betriebsmodus ein Verfahren nach Fig. 5 bis 7 und in einem zweiten Betriebsmodus ein Verfahren nach Fig. 8 und 9 angewandt werden. Denkbar ist insbesondere auch, dass unterschiedliche Objekte O1, O2 auf unterschiedliche Weise virtuell verändert werden. Beispielsweise kann ein erstes Objekt O2 steuerungstechnisch unverändert bleiben (also nicht virtuell verlängert oder verkürzt werden), wohingegen ein zweites Objekt O2 steuerungstechnisch virtuell verlängert und ein drittes Objekt steuerungstechnisch virtuell verkürzt werden. Vorteilhaft werden besonders empfindliche Objekte O1, O2 virtuell verlängert, besonders robuste Objekte O1, O2 virtuell verkürzt, und normal empfindliche Objekte O1, O2 bleiben steuerungstechnisch unverändert.

Besonders vorteilhaft ist es, wenn der Abstand zwischen der virtuellen Objekt-Hinterkante G_{HO1} und der physischen Objekt-Hinterkante K_{HO1} des ersten Objekts O1 und/oder der Abstand zwischen der virtuellen Objekt-Vorderkante G_{VO2} und der physischen Objekt-Vorderkante K_{VO2} des zweiten Objekts O2 der Ungenauigkeit bei der Positionsbestimmung des ersten Objekts O1 und des zweiten Objekts O2 durch die erste Messeinrichtung L1 zuzüglich einer Toleranz von ±10% entspricht. In den Fällen a) und b) beziehungsweise in dem in den Figuren 12 und 13 dargestellten Fall wird dadurch ein abstandsloses Stauen gerade noch und mit minimalem Druck gewährleistet. Ein (physischer) Abstand zwischen Objekten O1, O2 aufgrund von Messungenauigkeiten kann somit ausgeschlossen werden. In den Fällen c) und d) beziehungsweise in dem in den Figuren 14 und 15 dargestellten Fall wird durch die vorgeschlagenen Maßnahmen dagegen ein druckloses Stauen mit minimalem Abstand gewährleistet. Generell kann der Berechnung der Geschwindigkeitsreduktion eine virtuelle Länge eines Objekts O1, O2 zugrunde gelegt werden, deren Unterschied zur physischen Länge dieses Objekts O1, O2 der zweifachen Ungenauigkeit bei der Positionsbestimmung des ersten Objekts O1 und des zweiten Objekts O2 durch die erste Messeinrichtung zuzüglich einer Toleranz von ±10% entspricht. In den Fällen a) und b) ist die virtuelle Länge kleiner als die physische Länge eines Objekts O1, O2, in den Fällen c) und d) ist sie dagegen größer. Auch auf diese Weise kann in den Fällen a) und b) ein abstandsloses Stauen mit minimalem Druck und in den Fällen c) und d) ein druckloses Stauen mit minimalem Abstand gewährleistet werden.

Die unvermeidbaren Messtoleranzen bei der Ermittlung der Objekt-Hinterkante K_{HO1} des ersten Objekts O1 und der Objekt-Vorderkante K_{VO2} des zweiten Objekts O2 sowie Ungenauigkeiten bei der Berechnung der Position der Objekt-Hinterkante K_{HO1} des ersten Objekts O1 und der Objekt-Vorderkante K_{VO2} des zweiten Objekts O2 führen nicht nur zu den bereits erläuterten Problemen, sondern auch dazu, dass die tatsächliche Position eines Objekts O1, O2 beim Verlassen des Staubereichs SB nicht genau bekannt ist. Um eine steuerungstechnische Korrektur durchführen zu können, wird die am stromabwärts gelegenen Ende des Staubereichs SB angeordnete zweite Lichtschranke L2 eingesetzt. Dazu wird eine mit Hilfe der Drehsignale der Antriebe M der Förderrollen 2_{M}, 2_{L} ermittelte aktuelle Position eines Objekts O1, O2 auf den Wert der zweiten Mess-Position P_{Mess2} rückgesetzt, wenn das betreffende Objekt O1, O2 an der zweiten Mess-Position P_{Mess2} detektiert wird. Daher entspricht die der Steuerung 5 vorliegende Position eines Objekts O1, O2 dann wieder der tatsächlichen Position des betreffenden Objekts O1, O2. Diese Maßnahme ist nicht auf die zweite Mess-Position P_{Mess2} beschränkt, sondern es können noch weitere Mess-Positionen beziehungsweise Messeinrichtungen im Verlauf der Fördereinrichtung 1 vorgesehen werden, um die der Steuerung 5 vorliegende Position eines Objekts O1, O2 öfter der tatsächlichen Position des betreffenden Objekts O1, O2 anzugleichen, beziehungsweise um messbedingte Fehler nicht zu groß werden zu lassen.

An dieser Stelle wird auch angemerkt, dass nicht notgedrungen an jeder Mess-Position P_{Mess1}, P_{Mess2} eine Messeinrichtung L1, L2 vorgesehen sein muss. Stattdessen kann Messeinrichtung L1, L2 gegebenenfalls auch mehrere Mess-Positionen P_{Mess1}, P_{Mess2} erfassen. Diese ist insbesondere dann möglich, wenn die betreffende Messeinrichtung L1, L2 als Kamera oder Laser-Scanner ausgebildet ist.

Zusammenfassend weist das vorgestellte Verfahren zum Stauen von Objekten 01, 02 im Staubereich SB der Fördereinrichtung 1 in Form von Objekt-Blöcken, die folgenden Schritte auf:
- Erfassen der Objekt-Hinterkante K_{HO1} des ersten Objekts O1 durch die erste Messeinrichtung L1 an der ersten Mess-Position P_{Mess1}, wobei das erste Objekt O1 durch die angetriebenen Förderelemente 2, 2_{M}, 2_{L} in der Förderrichtung stromabwärts an der ersten Mess-Position P_{Mess1} vorbeibewegt wird,
- Erfassen der Objekt-Vorderkante K_{VO2} des zweiten Objekts O2, das dem ersten Objekt O2 stromaufwärts nachfolgt, durch die erste Messeinrichtung L1 an der ersten Mess-Position P_{Mess1}, wobei das zweite Objekt O2 durch die angetriebenen Förderelemente 2, 2_{M}, 2_{L} in der Förderrichtung stromabwärts an der ersten Mess-Position P_{Mess1} vorbeibewegt wird,
- Bewegen des ersten Objekts O1 zur Anhalte-Position P_{Stop}, welche der ersten Mess-Position P_{Mess1} in der Förderrichtung stromabwärts nachgelagert ist, und Anhalten des ersten Objekts O1 mit seiner Objekt-Hinterkante K_{HO1} an seiner Anhalte-Position P_{Stop} mit Hilfe der Förderelemente 2, 2_{M}, 2_{L},
- Berechnen eines stetigen Verlauf einer Geschwindigkeitsreduktion einer SollGeschwindigkeit v_{Soll} für das zweite Objekt O2 durch die Steuerung 5, wobei die berechnete Anhalte-Position P_{Stop} der Objekt-Vorderkante K_{VO2} des zweiten Objekts O2 an der Position der Objekt-Hinterkante K_{HO1} des angehaltenen ersten Objekts O1 oder zwischen der Objekt-Vorderkante K_{VO1} und der Objekt-Hinterkante K_{HO1} des angehaltenen ersten Objekts O1 liegt, und
- Bewegen und Anhalten des zweiten Objekts O2 mit Hilfe der Förderelemente 2, 2_{M}, 2_{L} anhand der berechneten Geschwindigkeitsreduktion.

Nachfolgend werden anhand der bereits ausführlich erläuterten Fördereinrichtung 1 einige Strategien zur Bildung von Objekt-Blöcken erläutert. Die Zonen Za..Zg entsprechen dabei vom Aufbau her den in den Fig. 5 bis 15 offenbarten Zonen Z1..Z7 und sind wieder unabhängig voneinander antreibbar.

In einem ersten Beispiel wird die Bildung eines Objekt-Blocks vom stromaufwärts gelegenen Ende des Staubereichs SB aus erläutert.

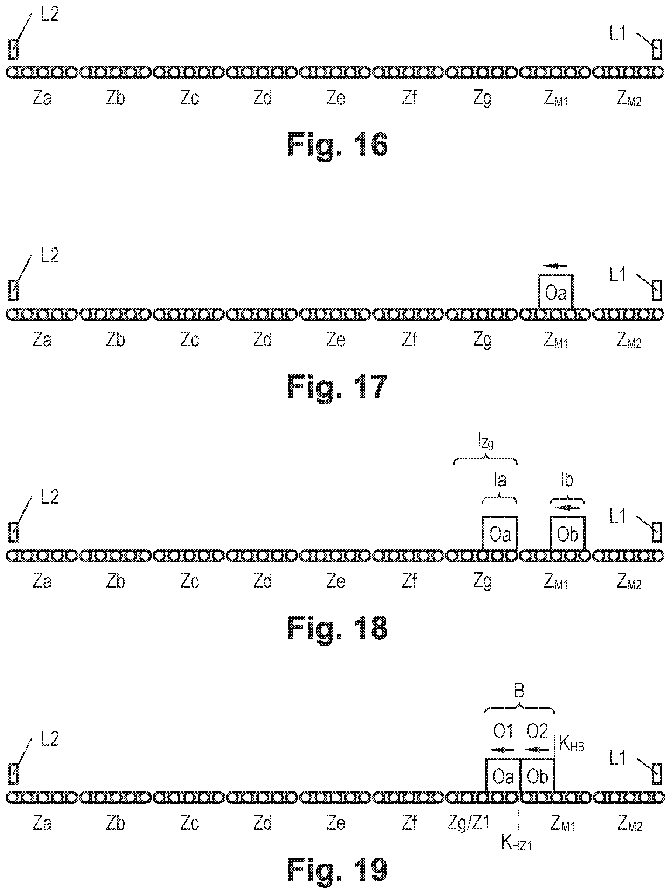

Fig. 16 zeigt dazu die Fördereinrichtung 1 in einem ersten Zeitpunkt, in dem im Staubereich SB noch kein Objekt vorhanden ist. In einem weiteren in Fig. 17 dargestellten Zeitpunkt wird ein Objekt Oa durch den Messbereich MB bewegt. In einem in Fig. 18 dargestellten Zeitpunkt hat das Objekt Oa an der stromaufwärts gelegenen Zonen-Hinterkante der Zone Zg angehalten. Zusätzlich wird ein Objekt Ob durch den Messbereich MB bewegt. In einem in Fig. 19 dargestellten Zeitpunkt hat das Objekt Ob das Objekt Oa erreicht. Das Objekt Oa bildet zu diesem Zeitpunkt ein erstes Objekt O1 und das Objekt Ob ein zweites Objekt O2. Die Zone Zg bildet zu diesem Zeitpunkt zudem eine erste Zone Z1 aus.

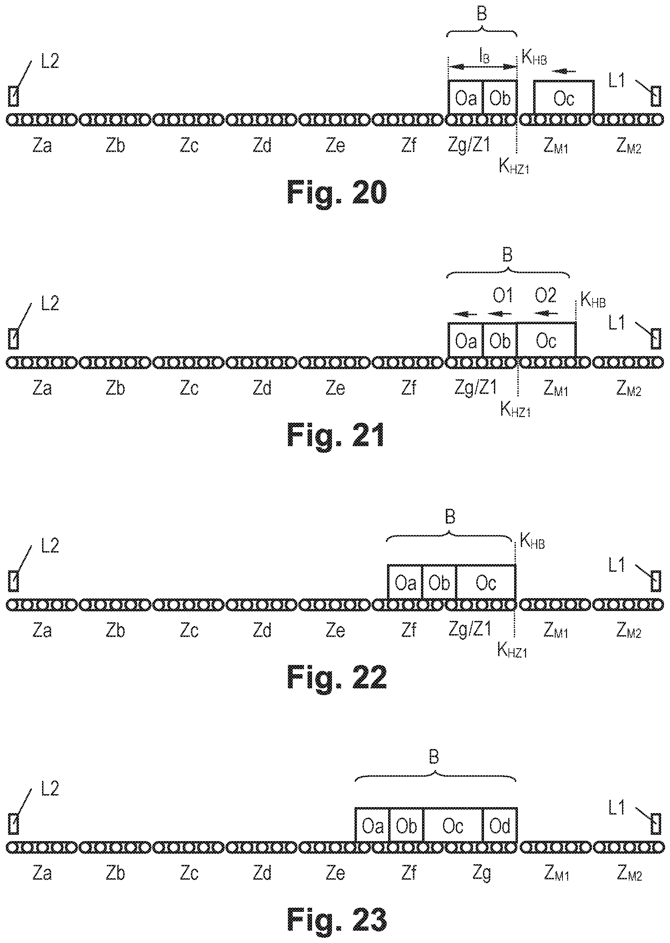

Die beiden Objekte Oa/O1 und Ob/O2 werden nun Teil eines Objekt-Blocks B, der mit Hilfe der Förderrollen 2, 2_{M}, 2_{L} mit einer gemeinsamen Ist-Geschwindigkeit in der Förderrichtung stromabwärts bewegt wird. Der Objekt-Block B wird mit Hilfe der Förderrollen 2, 2_{M}, 2_{L} angehalten, wenn er mit seiner Block-Hinterkante K_{HB} die Zonen-Hinterkante K_{HZ1} der ersten Zone Z1 erreicht. Dieser Zustand ist in der Fig. 20 dargestellt. Zusätzlich bewegt sich zu diesem Zeitpunkt ein Objekt Oc auf den Objekt-Block B zu.

Beispielhaft ist in der Fig. 20 auch die Block-Länge l_{B} des Objekt-Blocks B eingezeichnet. Die Block-Länge l_{B} des Objekt-Blocks B entspricht der Summe der Längen lₐ+l_{b} der Objekte Oa und Ob und ist kleiner gleich der Länge l_{Zg} der Zone Zg/Z1 (siehe auch Fig. 18).

In einem in Fig. 21 dargestellten Zeitpunkt hat das Objekt Oc den Objekt-Block B erreicht. Nun bildet das Objekt Ob ein erstes Objekt O1 und das Objekt Oc ein zweites Objekt O2. Die Zone Zg bildet zu diesem Zeitpunkt wiederum eine erste Zone Z1 aus.

Das Objekt Oc/O2 wird nun ebenfalls Teil des Objekt-Blocks B, der mit Hilfe der Förderrollen 2, 2_{M}, 2_{L} mit einer gemeinsamen Ist-Geschwindigkeit in der Förderrichtung stromabwärts bewegt wird. Der Objekt-Block B wird mit Hilfe der Förderrollen 2, 2_{M}, 2_{L} angehalten, wenn er mit seiner Block-Hinterkante K_{HB} die Zonen-Hinterkante K_{HZ1} der ersten Zone Z1 erreicht. Dieser Zustand ist in der Fig. 22 dargestellt.

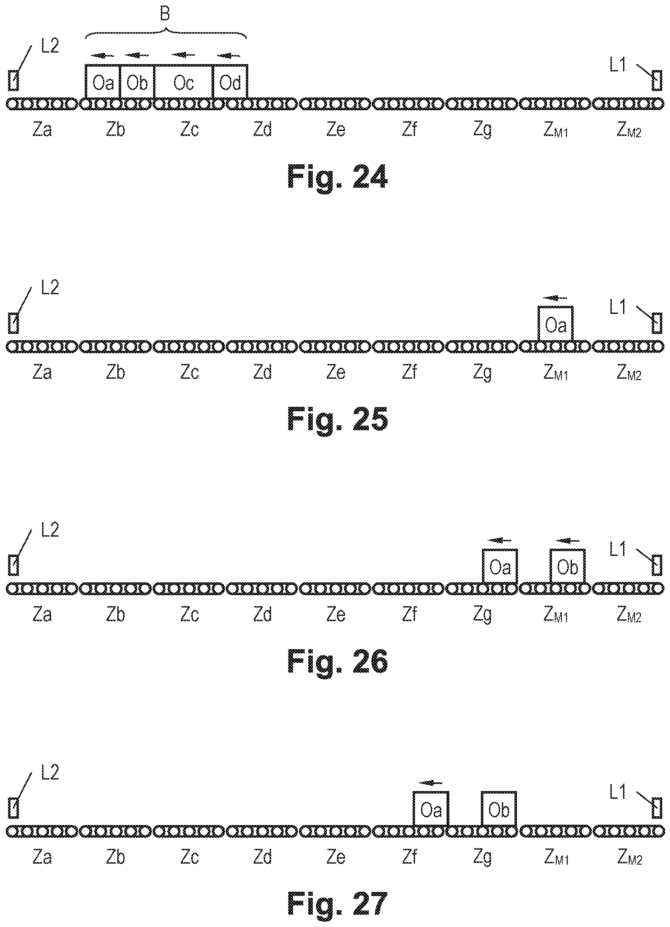

In der schon beschriebenen Weise wurde dem Objekt-Block B in einem in Fig. 23 dargestellten Zeitpunkt ein weiteres Objekt Od hinzugefügt. Der beschriebene Ablauf kann also rekursiv für eine beliebige Anzahl an Objekten Oa..Od wiederholt werden, wodurch beliebig lange Objekt-Blöcke B erzeugt werden können. In einem in Fig. 24 dargestellten Zeitpunkt wird der Objekt-Block B schließlich aus dem Staubereich SB abtransportiert und am Ausgang A an einen nicht dargestellten, nachfolgenden Förderer übergeben.

In einem weiteren Beispiel wird eine Variante bei der Bildung eines Objekt-Blocks B vom stromaufwärts gelegenen Ende des Staubereichs B aus erläutert. Dabei wird wiederum von einer leeren Fördereinrichtung 1 ausgegangen (vergleiche Fig. 16)

In einem in Fig. 25 dargestellten Zeitpunkt wird wiederum ein Objekt Oa durch den Messbereich MB bewegt. Dieser Zustand entspricht dem in Fig. 17 dargestellten Zustand. In einem in Fig. 26 dargestellten Zeitpunkt hat das Objekt Oa die stromaufwärts gelegenen Zonen-Hinterkante der Zone Zg erreicht. In diesem Beispiel wird das Objekt Oa aber nicht wie in Fig. 18 angehalten, sondern wird weiterbewegt.

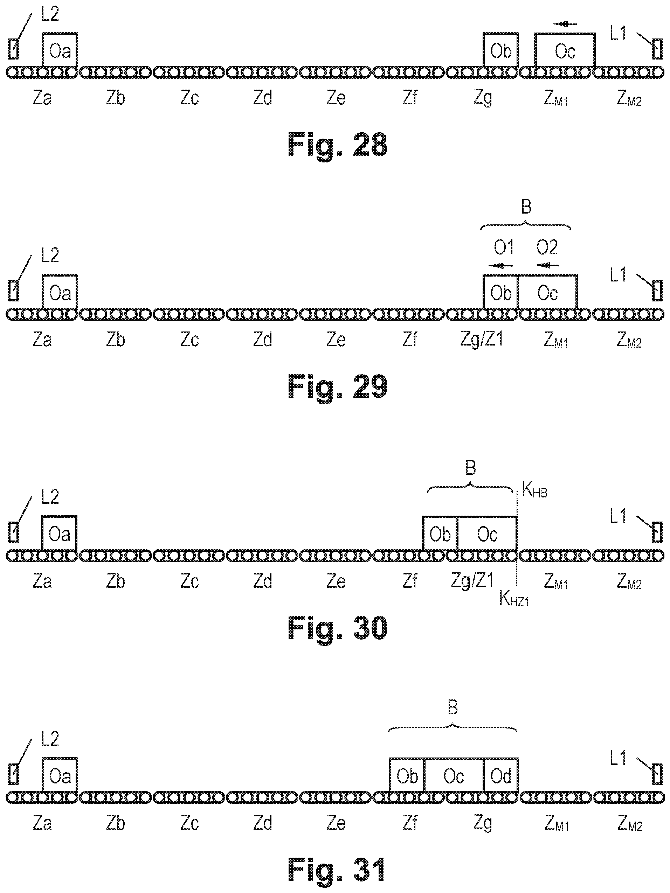

In einem in Fig. 27 dargestellten Zeitpunkt hat jedoch das Objekt Ob die stromaufwärts gelegenen Zonen-Hinterkante der Zone Zg erreicht und wird dort angehalten. Das Objekt Oa wird weiter stromabwärts bewegt. Schließlich wird das Objekt Oa an der stromaufwärts gelegenen Zonen-Hinterkante der Zone Za angehalten. Dieser Zustand ist in der Fig. 28 dargestellt. Zusätzlich bewegt sich zu diesem Zeitpunkt ein Objekt Oc auf das Objekt Ob zu.

In einem in Fig. 29 dargestellten Zeitpunkt hat das Objekt Oc das Objekt Ob erreicht. Das Objekt Ob bildet zu diesem Zeitpunkt wiederum ein erstes Objekt O1 und das Objekt Oc ein zweites Objekt O2. Die Zone Zg bildet zu diesem Zeitpunkt wiederum eine erste Zone Z1 aus.

Die beiden Objekte Ob/O1 und Oc/O2 werden nun Teil eines Objekt-Blocks B, der mit Hilfe der Förderrollen 2, 2_{M}, 2_{L} mit einer gemeinsamen Ist-Geschwindigkeit in der Förderrichtung stromabwärts bewegt wird. Der Objekt-Block B wird mit Hilfe der Förderrollen 2, 2_{M}, 2_{L} angehalten, wenn er mit seiner Block-Hinterkante K_{HB} die Zonen-Hinterkante K_{HZ1} der ersten Zone Zg/Z1 erreicht. Dieser Zustand ist in der Fig. 30 dargestellt.

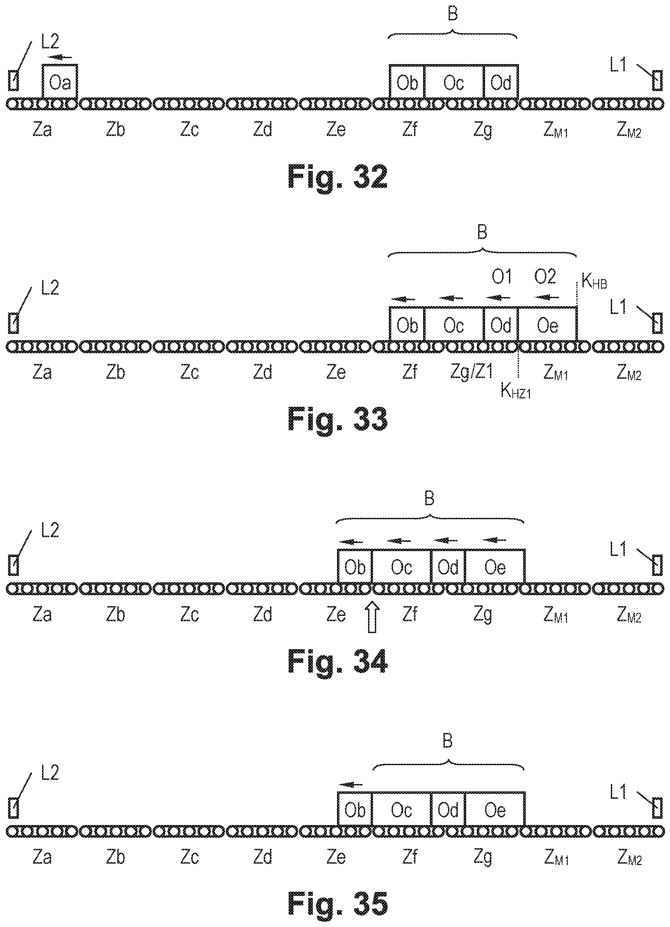

In der schon beschriebenen Weise wurde dem Objekt-Block B in einem in Fig. 31 dargestellten Zeitpunkt ein Objekt Od hinzugefügt. In einem in Fig. 32 dargestellten Zeitpunkt wird das Objekt Oa aus dem Staubereich SB abtransportiert und am Ausgang A an einen nicht dargestellten nachfolgenden Förderer übergeben.

An dieser Stelle wird der Vorteil des vorgestellten Verfahrens gut sichtbar. Durch die Isolierung des im Staubereich SB führenden Objekts Oa vom Rest der im Staubereich SB befindlichen Objekte Ob..Od kann dieses bei einer entsprechenden Anforderung rasch aus dem Staubereich SB abtransportiert werden. Im Gegensatz zu einer Lösung, bei der das im Staubereich SB führende Objekt Oa Teil eines Objekt-Blocks B ist, der im stromaufwärts gelegenen Teil des Staubereichs SB gebildet wurde (vergleiche dazu Fig. 23).

In einer vorteilhaften Variante des vorgestellten Verfahrens wird nun ein dem (ursprünglich) führenden Objekt Oa nachfolgendes Objekt Ob vom Objekt-Block B gelöst und an das stromabwärts gelegene Ende des Staubereichs SB transportiert, nachdem das Objekt Oa den Staubereich SB verlassen hat. Dazu sind folgende Möglichkeiten vorstellbar:
Beispielsweise kann darauf gewartet werden, dass ein nachfolgendes Objekt Oe die Isolation des führenden Objekts Ob ermöglicht. Diese Möglichkeit ist in den Fig. 33 bis 39 dargestellt.

In einem in Fig. 33 dargestellten Zeitpunkt hat das Objekt Oe das Objekt Od erreicht. Das Objekt Od bildet zu diesem Zeitpunkt wiederum ein erstes Objekt O1 und das Objekt Oe ein zweites Objekt O2. Die Zone Zg bildet zu diesem Zeitpunkt wiederum eine erste Zone Z1 aus.

Das Objekt Oe wird in Folge Teil des Objekt-Blocks B, der mit Hilfe der Förderrollen 2, 2_{M}, 2_{L} mit einer gemeinsamen Ist-Geschwindigkeit in der Förderrichtung stromabwärts bewegt wird. Der Objekt-Block B wird mit Hilfe der Förderrollen 2, 2_{M}, 2_{L} nun aber nicht erst angehalten, wenn er mit seiner Block-Hinterkante K_{HB} die Zonen-Hinterkante K_{HZ1} der ersten Zone Z1 erreicht, sondern wenn das Objekt Ob mit seiner Objekt-Hinterkante die mit dem Pfeil markierte Zonen-Hinterkante der Zone Ze erreicht. Dieser Zustand ist in der Fig. 34 dargestellt. Der Objekt-Block B wird an dieser Stelle geteilt, indem das Objekt Ob weiterbewegt wird, die Objekte Oc..Oe bleiben jedoch stehen. Dieser Zustand ist in der Fig. 35 dargestellt.

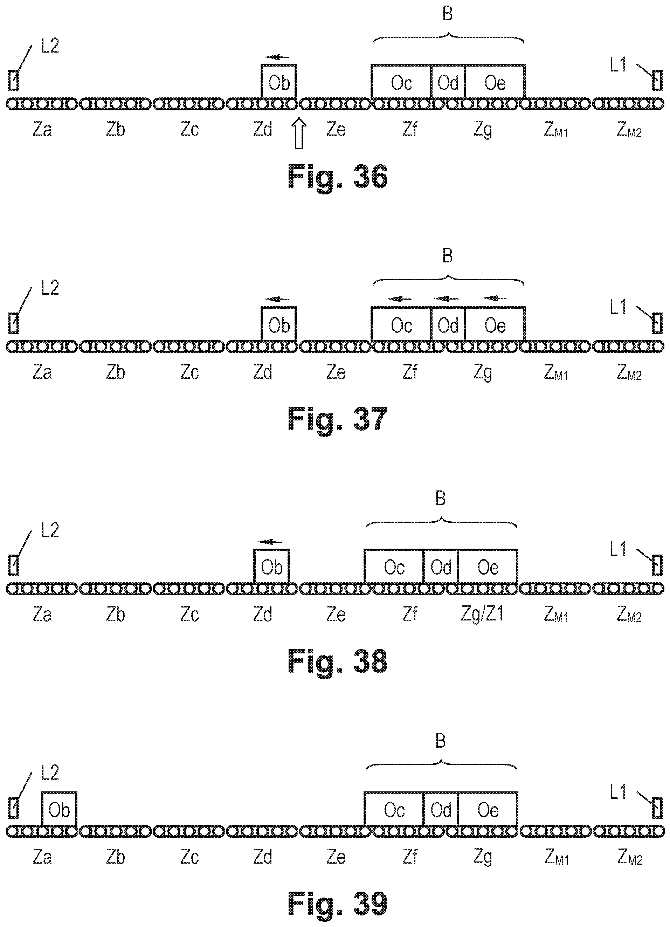

In einem in Fig. 36 dargestellten Zeitpunkt hat das Objekt Ob mit seiner Objekt-Hinterkante die mit einem Pfeil markierte Zonen-Hinterkante der Zone Zd erreicht. Zu diesem Zeitpunkt können das Objekt Ob und der Objekt-Block B unabhängig voneinander bewegt werden. Der Objekt-Block B wird somit in einem in Fig. 37 dargestellten Zeitpunkt in Bewegung versetzt und rückt auf die Zonen-Hinterkante der Zone Zg vor. In einem in Fig. 38 dargestellten Zeitpunkt hat der Objekt-Block B die Zonen-Hinterkante K_{HZ1} der ersten Zone Zg/Z1 erreicht und wird dort angehalten. Das Objekt Ob bewegt sich dagegen weiter stromabwärts. In einem in Fig. 39 dargestellten Zeitpunkt hat das Objekt Ob die Zone Za erreicht und wird dort angehalten. Es kann bei einer entsprechenden Anforderung somit rasch an den Ausgang A des Staubereichs SB befördert werden.

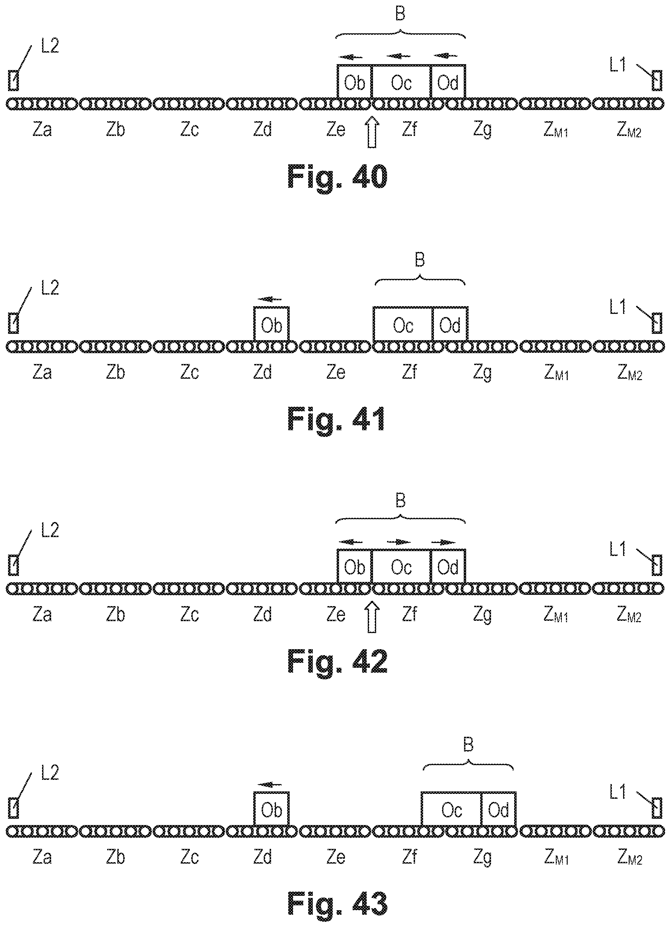

Eine andere Möglichkeit zur Isolation des Objekts Ob ist in den Fig. 40 bis 41 dargestellt, wobei die Fig. 40 im Verfahrensablauf der Fig. 32 nachfolgt. Bei dieser Variante wird der Objekt-Block B, unabhängig ob ein Objekt Oe nachfolgt oder nicht, stromabwärts bewegt, bis wiederum das Objekt Ob mit seiner Objekt-Hinterkante die mit dem Pfeil markierte Zonen-Hinterkante der Zone Ze erreicht. Dieser Zustand ist in der Fig. 40 dargestellt. Der Objekt-Block B wird an dieser Stelle geteilt, indem das Objekt Ob weiterbewegt wird, die Objekte Oc, Od jedoch stehen bleiben. Dieser Zustand ist in der Fig. 41 dargestellt. Das Objekt Ob rückt in Folge wieder in die Zone Za vor und wird dort angehalten. Es kann bei einer entsprechenden Anforderung somit rasch an den Ausgang A des Staubereichs SB befördert werden. Der Objekt-Block B bleibt jedoch an der in der Fig. 41 dargestellte Position stehen, bis eine Anforderung erfolgt, das Objekt Oc vom Objekt-Block B zu isolieren.

Die in der Fig. 41 dargestellte Situation bietet den Vorteil, dass das Objekt Oc rasch vom Objekt-Block B isoliert werden kann, birgt jedoch den Nachteil, dass kein weiteres Objekt Oe an den Objekt-Block B angefügt werden kann, da der Objekt-Block B nicht an der Zonen-Hinterkante der Zone Zg steht, sondern an der Zonen-Vorderkante der Zone Zf beginnt.

Um ein Vergrößern des Objekt-Blocks B auch nach der Isolierung des Objekts Ob zu ermöglichen, werden die Objekte Oc, Od in einer weiteren in den Fig. 42 bis 43 dargestellten Variante nach der Trennung von Objekt Ob stromaufwärts bewegt. Dieser Zustand ist in der Fig. 42 dargestellt. In Folge wird der aus den Objekten Oc, Od bestehenden Objekt-Block B wieder an die Zonen-Hinterkante der Zone Zg zurückbewegt und dort angehalten. Das Objekt Ob wird dagegen stromabwärts weiterbewegt. Dieser Zustand ist in der Fig. 43 dargestellt. Das Objekt Ob rückt wiederum in die Zone Za vor und wird dort angehalten. Es kann bei einer entsprechenden Anforderung somit rasch an den Ausgang A des Staubereichs SB befördert werden. Der Objekt-Block B befindet sich nun jedoch mit seiner Block-Hinterkante an der Zonen-Hinterkante der Zone Zg, sodass dem Objekt-Block B ein nachfolgendes Objekt Oe hinzugefügt werden kann.

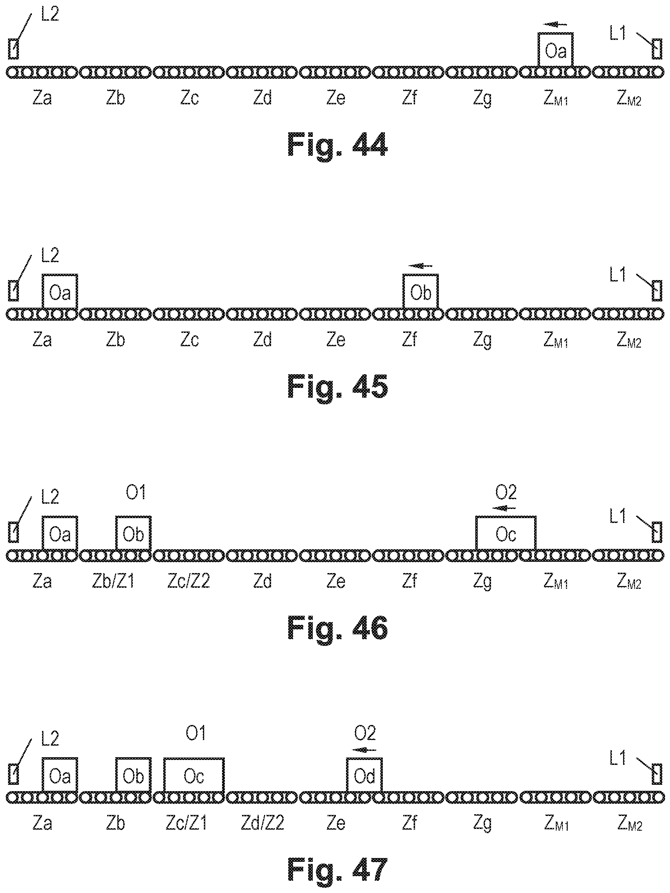

In einem in den Fig. 44 bis 55 dargestellten Beispiel ist nun ein etwas anderer Verfahrensablauf visualisiert.

In einem in Fig. 44 dargestellten Zeitpunkt wird wiederum ein Objekt Oa durch den Messbereich MB bewegt (vergleiche auch Fig. 17). Das Objekt Oa hält nun aber nicht an der Zonen-Hinterkante der Zone Zg an, sondern rückt in die Zone Za vor und wird an der Zonen-Hinterkante der Zone Za angehalten. Dieser Zustand ist in der Fig. 45 dargestellt. Zusätzlich wird in dem in Fig. 45 dargestellten Zeitpunkt ein Objekt Ob über die Fördereinrichtung 1 bewegt.

In einem in der Fig. 46 dargestellten Zeitpunkt wurde das Objekt Ob mit seiner Objekt-Hinterkante an der Zonen-Hinterkante der Zone Zb angehalten. Zusätzlich wird ein Objekt Oc über die Fördereinrichtung 1 bewegt. In einem in Fig. 46 dargestellten bildet das Objekt Ob ein erstes Objekt O1, das Objekt Oc ein zweites Objekt O2. Die Zone Zb bildet zu diesem Zeitpunkt zudem eine erste Zone Z1 aus, die Zone Zc eine zweite Zone Z2.

Eine Prüfung, ob die Gruppe der aufeinander folgenden Objekte Ob/O1 und Oc/O2 in eine Zone Zb/Z1, Zc/Z2 oder in eine Gruppe aufeinander folgender Zonen Zb/Z1, Zc/Z2 passt, geht negativ aus, da die Gesamtlänge der Objekte Ob/O1 und Oc/O2 die Gesamtlänge der Zonen Zb/Z1, Zc/Z2 übersteigt. Das zweite Objekt Oc/O2 wird daher mit seiner Objekt-Hinterkante an der Zonen-Hinterkante der zweiten Zone Zc/Z2 des Staubereichs SB angehalten. Dieser Zustand ist in der Fig. 47 dargestellt. Zusätzlich wird zu diesem Zeitpunkt ein Objekt Od über die Fördereinrichtung 1 bewegt.

In dem in Fig. 47 dargestellten Zeitpunkt bildet das Objekt Oc ein erstes Objekt O1, das Objekt Od ein zweites Objekt O2. Die Zone Zc bildet zu diesem Zeitpunkt zudem eine erste Zone Z1 aus, die Zone Zd eine zweite Zone. Eine Prüfung, ob eine Gruppe aufeinander folgender Objekte Ob..Od, inkludierend das erste Objekt Oc/O1 und das zweite Objekt Od/O2, in eine Zone Zb, Zc oder in eine Gruppe aufeinander folgender Zonen Zone Zb, Zc passt, geht positiv aus, da die Gesamtlänge der Objekte Ob..Od kleiner ist als die Gesamtlänge der Zonen Zb, Zc. Daher wird in Folge ein Objekt-Block B aus den Objekten Ob..Od der Gruppe gebildet.

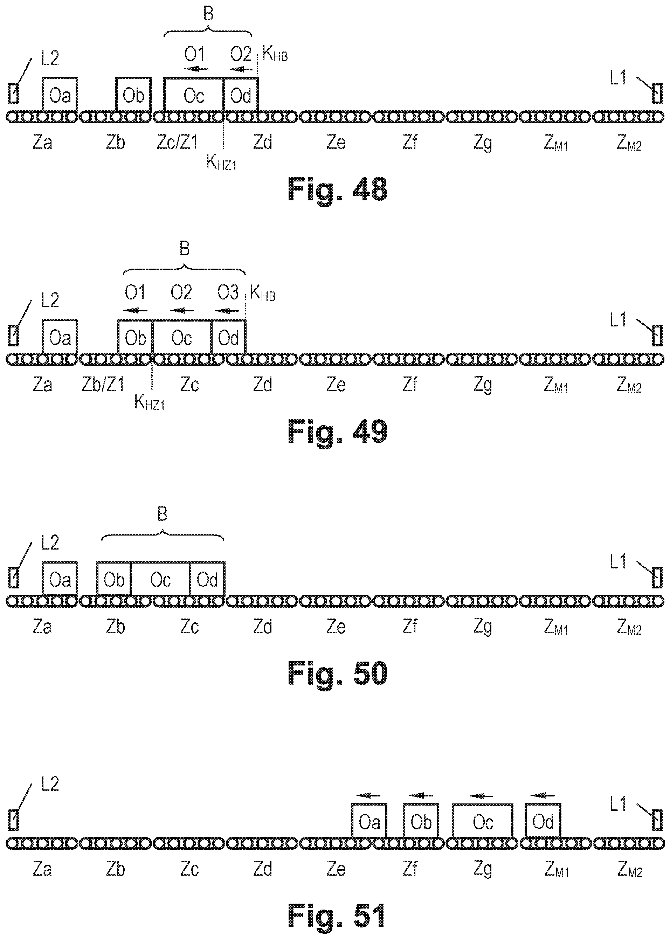

In einem in Fig. 48 dargestellten Zeitpunkt hat das Objekt Od das Objekt Oc erreicht. Das Objekt Oc bildet zu diesem Zeitpunkt noch immer das erste Objekt O1, das Objekt Od das zweite Objekt O2. Die Zone Zc bildet zu diesem Zeitpunkt nach wie vor die erste Zone Z1 aus. Die beiden Objekte Oc/O1 und Od/O2 werden nun Teil eines Objekt-Blocks B, der mit Hilfe der Förderrollen 2, 2_{M}, 2_{L} mit einer gemeinsamen Ist-Geschwindigkeit in der Förderrichtung stromabwärts bewegt wird.

Der Objekt-Block B trifft in einem in Fig. 49 dargestellten Zeitpunkt auf das Objekt Ob. Nun bildet das Objekt Ob ein erstes Objekt O1 und das Objekt Oc ein zweites Objekt O2. Die Zone Zb bildet zu diesem Zeitpunkt zudem eine erste Zone Z1 aus. Das Objekt Ob wird nun Teil des Objekt-Blocks B, der mit Hilfe der Förderrollen 2, 2_{M}, 2_{L} mit einer gemeinsamen Ist-Geschwindigkeit in der Förderrichtung stromabwärts bewegt wird.

Der Objekt-Block B wird mit Hilfe der Förderrollen 2, 2_{M}, 2_{L} angehalten, wenn er mit seiner Block-Hinterkante K_{HB} die Zonen-Hinterkante der stromabwärts folgenden Zone Zc erreicht. Dieser Zustand ist in der Fig. 50 dargestellt. Die Block-Hinterkante K_{HB} entspricht dabei der Objekt-Hinterkante eines dritten Objekts O3, welches durch das Objekt Od gebildet ist.

Das in den Fig. 51 bis 55 dargestellte Beispiel läuft in ganz ähnlicher Weise ab wie das in den Fig. 44 bis 55 dargestellte Beispiel. Im Unterschied dazu folgen die Objekte Oa..Od am Eingang E des Staubereichs SB jedoch in geringem Abstand zueinander. In dem in Fig. 51 dargestellten Zeitpunkt bewegen sich die Objekte Oa..Od synchron im Bereich der Zonen Ze..Z_{M1}. Im Unterschied zu dem in Fig. 44 bis 55 dargestellten Beispiel ist die Prüfung, ob eine Gruppe aufeinander folgender Objekte Oa..Od in eine Zone Zb, Zc oder in eine Gruppe aufeinander folgender Zonen Zone Zb, Zc passt, schon zu diesem Zeitpunkt möglich, da alle Objekte Oa..Od die Lichtschranke L1 bereits passiert haben.

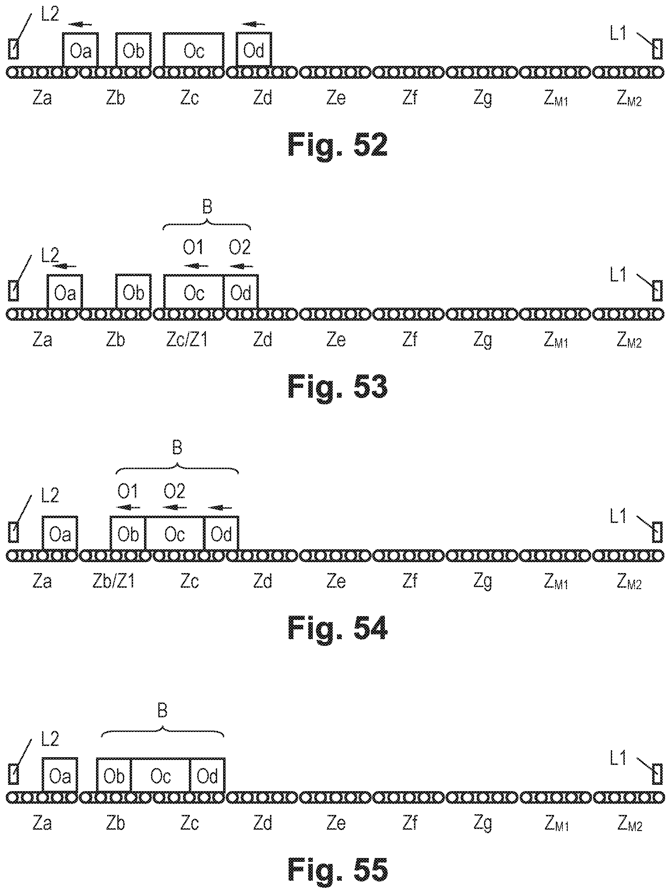

In einem in Fig. 52 dargestellten Zeitpunkt haben die Objekte Ob, Oc in den aufeinander folgenden Zonen Zb, Zc angehalten. Die Objekte Oa und Od werden dagegen weiterbewegt. In einem in Fig. 53 dargestellten Zeitpunkt hat das Objekt Od das Objekt Oc erreicht. Es folgt daher eine Bildung eines Objekt-Blocks B in der bereits zu Fig. 48 beschriebenen Weise. Das Objekt Ob hat zwischenzeitlich in der Zone Zb angehalten. In einem in Fig. 54 dargestellten Zeitpunkt hat der Objekt-Block B das angehaltene Objekt Ob erreicht. Es folgt daher eine Vergrößerung des Objekt-Blocks B in der bereits zu Fig. 49 beschriebenen Weise. Das Objekt Oa hat in der Fig. 54 zwischenzeitlich in der Zone Za angehalten. In einem in Fig. 55 dargestellten Zeitpunkt hat der Objekt-Block B mit seiner Block-Hinterkante an der Zonen-Hinterkante der Zone Zc angehalten. Dieser Zustand entspricht dem in Fig. 50 dargestellten Zustand.

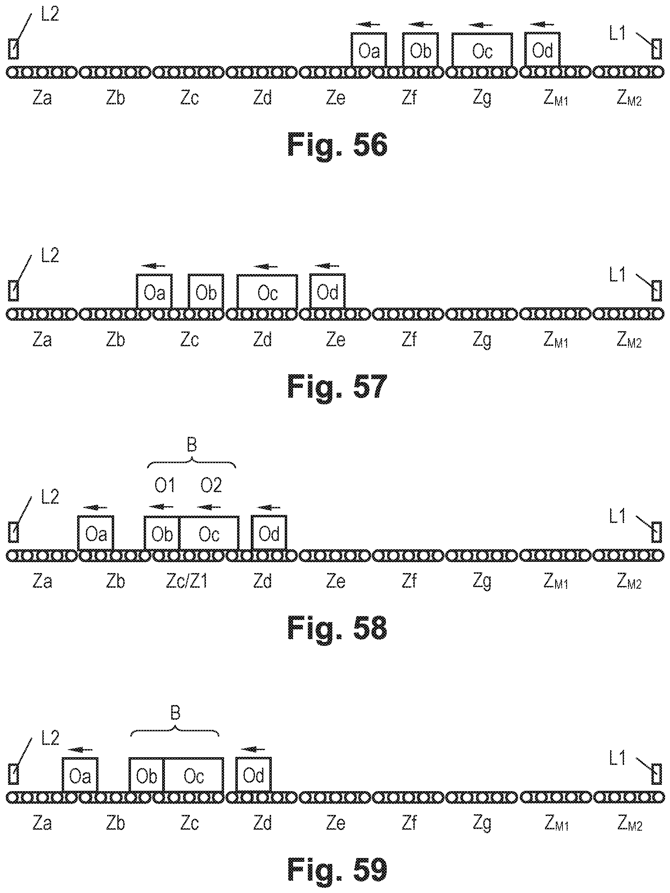

Das in den Fig. 56 bis 61 dargestellte Beispiel läuft in ganz ähnlicher Weise ab wie das in den Fig. 51 bis 55 dargestellte Beispiel. Im Unterschied dazu erfolgt die Bildung eines Objekt-Blocks B nun nicht vom stromaufwärts gelegenen Ende her, sondern ausgehend vom stromabwärts gelegenen Ende.

In dem in Fig. 56 dargestellten Zeitpunkt bewegen sich die Objekte Oa..Od synchron im Bereich der Zonen Ze..Z_{M1} (vergleiche auch Fig. 51). Im Unterschied zu dem in Fig. 51 bis 55 dargestellten Beispiel hält das Objekt Ob bereits in der Zone Zc an, während sich die übrigen Objekte Oa, Oc und Od weiter stromabwärts bewegen (siehe den Unterschied zu dem in Fig. 52 dargestellten Zustand).

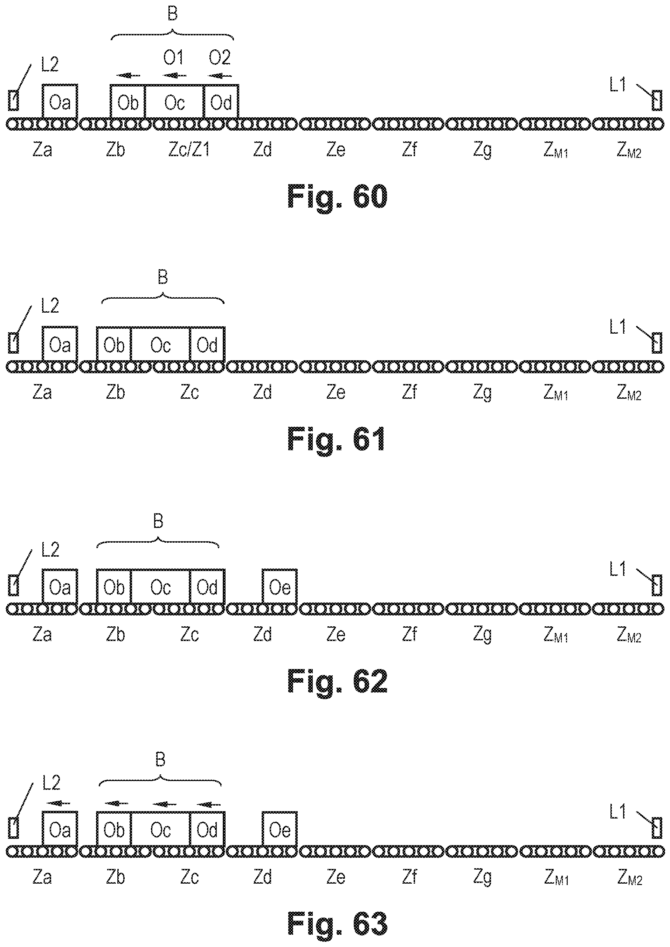

In einem in Fig. 58 dargestellten Zeitpunkt hat das Objekt Oc das Objekt Ob erreicht. Es folgt daher eine Bildung eines Objekt-Blocks B in der bereits beschriebenen Weise. Die Objekte Oa und Od werden weiter stromabwärts bewegt. In einem in Fig. 59 dargestellten Zeitpunkt hat der Objekt-Block B mit seiner Block-Hinterkante an der Zonen-Hinterkante der Zone Zc angehalten. Die Objekte Oa und Od werden weiter stromabwärts bewegt. In einem in Fig. 60 dargestellten Zeitpunkt hat das Objekt Od das angehaltene Objekt Oc erreicht. Es folgt daher eine Vergrößerung des Objekt-Blocks B in der bereits beschriebenen Weise. Das Objekt Oa hat in der Fig. 60 zwischenzeitlich in der Zone Za angehalten. In einem in Fig. 61 dargestellten Zeitpunkt hat der Objekt-Block B mit seiner Block-Hinterkante an der Zonen-Hinterkante der Zone Zc angehalten. Dieser Zustand entspricht dem in Fig. 55 dargestellten Zustand.

Die Fig. 62 bis 70 zeigen einen weiteren möglichen Verfahrensablauf ausgehend von dem in den Fig. 50, 55 oder 61 dargestellten Zustand.

In einem in Fig. 62 dargestellten Zeitpunkt hat ein Objekt Oe an der Zonen-Hinterkante der Zone Zd angehalten. Aufgrund einer Anforderung, das Objekt Oa aus dem Staubereich SB abzutransportieren, wird das Objekt Oa in Bewegung versetzt, so wie dies in der Fig. 63 dargestellt ist. Zusätzlich wird der Objekt-Block B in Bewegung versetzt, um eine Isolierung des Objekts Ob vom Objekt-Block B zu ermöglichen.

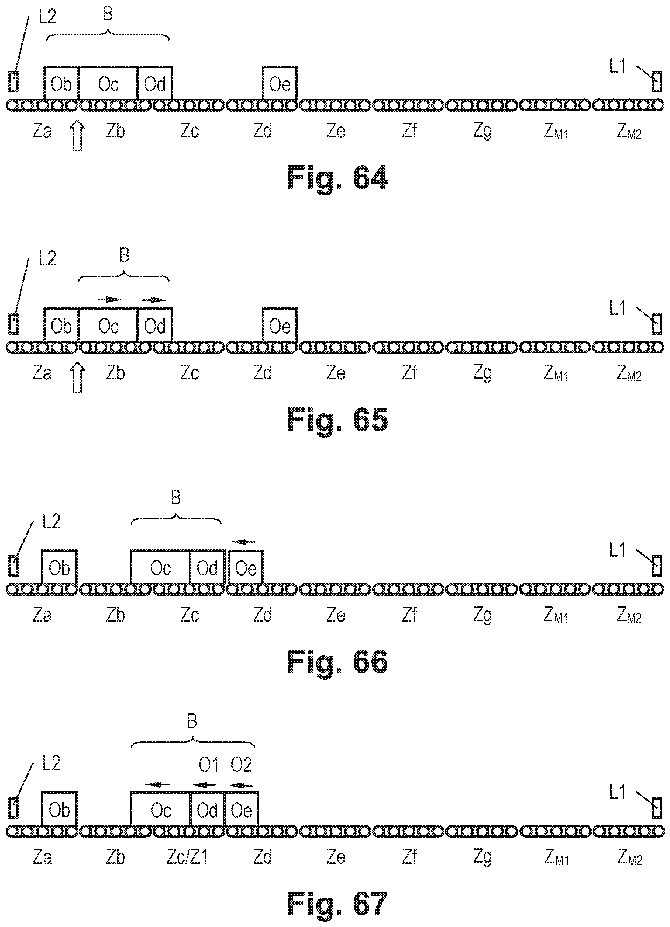

In Folge wird der Objekt-Block B stromabwärts bewegt bis das Objekt Ob mit seiner Objekt-Hinterkante die mit dem Pfeil markierte Zonen-Hinterkante der Zone Za erreicht hat. Dieser Zustand ist in der Fig. 64 dargestellt. Grundsätzlich können die Objekte Ob..Od nun so angehalten werden und stehen bleiben, bis eine Anforderung erhalten wird, das Objekt Ob aus dem Staubereich SB abzutransportieren. In Folge kann das Objekt Oc in der gleichen Weise vom Objekt-Block B isoliert werden und so weiter. Das angegebene Verfahren kann also beliebig oft rekursiv ausgeführt werden.

Denkbar wäre aber auch, dass die Objekte Oc und Od stromaufwärts bewegt werden, so wie das in der Fig. 65 dargestellt ist. Zu einem in Fig. 66 dargestellten Zeitpunkt wurde der aus den Objekten Oc, Od bestehenden Objekt-Block B an der Zonen-Hinterkante der Zone Zc angehalten. Zusätzlich wird ein nachfolgendes Objekt Oe auf den Objekt-Block zubewegt.

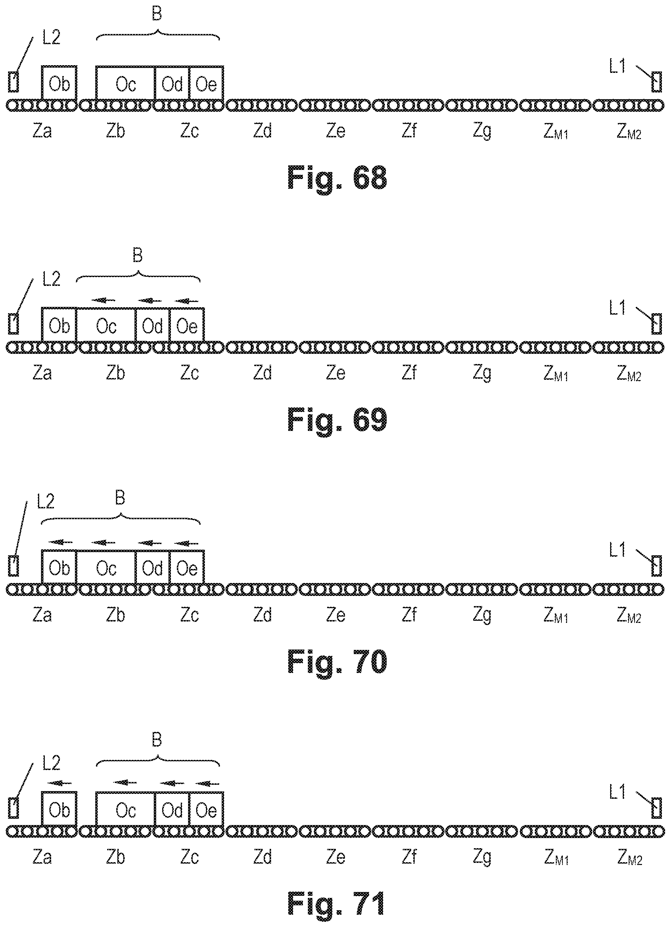

In einem in der Fig. 67 dargestellten Zeitpunkt hat das Objekt Oe den Objekt-Block B erreicht. In Folge wird der Objekt-Block B in der bereits beschriebenen Weise vergrößert. In einem in der Fig. 68 dargestellten Zeitpunkt hat der Objekt-Block B mit seiner Block-Hinterkante an der Zonen-Hinterkante der Zone Zc angehalten. Dieser Zustand ähnelt dem in Fig. 50, 55 oder 61 dargestellten Zustand.

Es wird nun angenommen, dass eine Anforderung folgt, alle Objekte Ob..Oe als Objekt-Block B an den Ausgang A der Fördereinrichtung 1 zu transportieren. Deshalb wird der Objekt-Block B in Bewegung versetzt und erreicht in einem in der Fig. 69 dargestellten Zeitpunkt das Objekt Ob. In Folge wird dem Objekt-Block B das Objekt Ob hinzugefügt, welcher nun aus dem Staubereich SB abtransportiert wird, so wie dies in der Fig. 70 dargestellt ist.

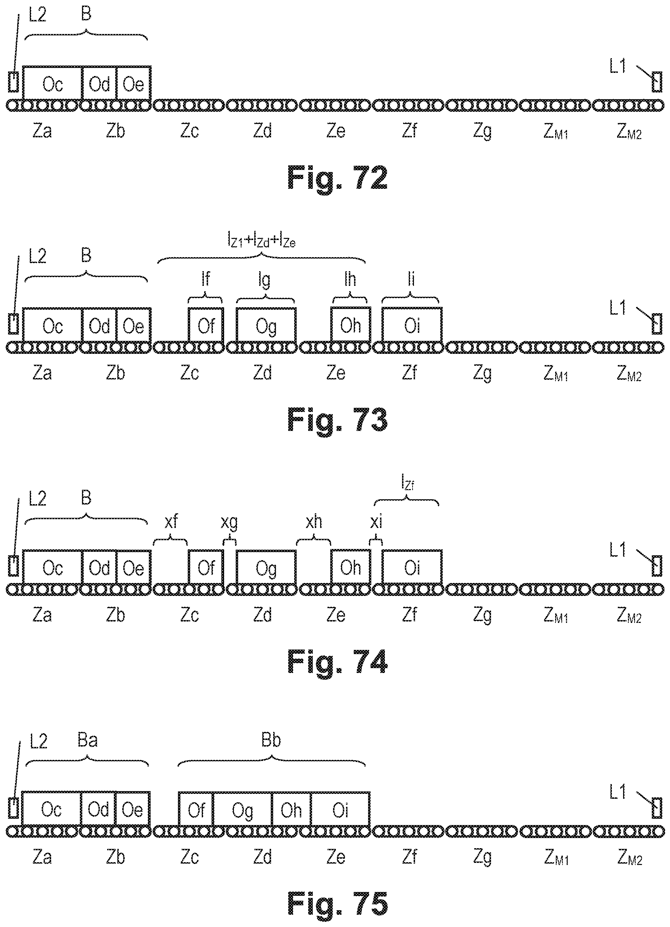

Denkbar ist aber auch, dass das Objekt Ob alleine aus dem Staubereich SB abtransportiert werden soll. In diesem Fall werden die Objekte Ob..Oe wiederum in Bewegung versetzt, wobei aber die Lücke zwischen den Objekten Ob und Oc beibehalten wird, so wie das in der Fig. 71 dargestellt ist. Der in der Fig. 71 dargestellte Zustand folgt im Verfahrensablauf dabei dem in Fig. 68 dargestellten Zustand. In der Fig. 72 wurde der Objekt-Block B in Folge so angehalten, dass die Objekt-Hinterkante des Objekts Oc an der Zonen-Hinterkante der Zone Za zu liegen kommt.

In dem in den Fig. 73 bis 82 beschriebenen Verfahrensablauf wird nun die Bildung mehrere Objekt-Blöcke Ba, Bb, sowie das Zusammenführen von mehreren Blöcken Ba, Bb beschrieben. Dabei wird von dem in Fig. 72 dargestellten Zustand ausgegangen.

In dem in der Fig. 73 dargestellten Zustand haben mehrere Objekte Of..Oi in den Zonen Zc..Zf angehalten, jeweils an deren Zonen-Hinterkante. Die mit Hilfe der Lichtschranke L1 ermittelte Länge lf..li wird nun für die Prüfung herangezogen, ob beziehungsweise welche Objekte Of..Oi in eine Gruppe von Zonen Zc..Zf passen. Dazu wird geprüft ob die Gesamtlänge lf+lg+lh+li der Objekte Of..Oi kleiner oder gleich der Gesamtlänge l_{Zc}+L_{Zd}+l_{Ze} der Zonen Zc..Ze ist. Da diese Bedingung erfüllt ist wird ein Objekt-Block Ob gebildet, der mit seiner Block-Hinterkante an der Zonen-Hinterkante der Zone Ze und damit in einem Abstand hinter dem Objekt-Block Ba positioniert wird, so wie dies in der Fig. 75 dargestellt ist.

Für die Prüfung, ob beziehungsweise welche Objekte Of..Oi in eine Gruppe von Zonen Zc..Zf passen, können alternativ auch die mit Hilfe der Lichtschranke L1 ermittelten Abstände xf..xi herangezogen werden. Dazu wird geprüft ob die Summe der Abstände xf+xg+xh+xi zwischen den Objekten Of..Oi größer oder gleich der Länge lzε einer Zone Zf (oder auch mehrerer Zonen) ist. In Folge kann wieder ein Objekt-Block Ob gebildet werden, der mit seiner Block-Hinterkante an der Zonen-Hinterkante der Zone Ze und damit in einem Abstand hinter dem Objekt-Block Ba positioniert wird, so wie dies in der Fig. 75 dargestellt ist.

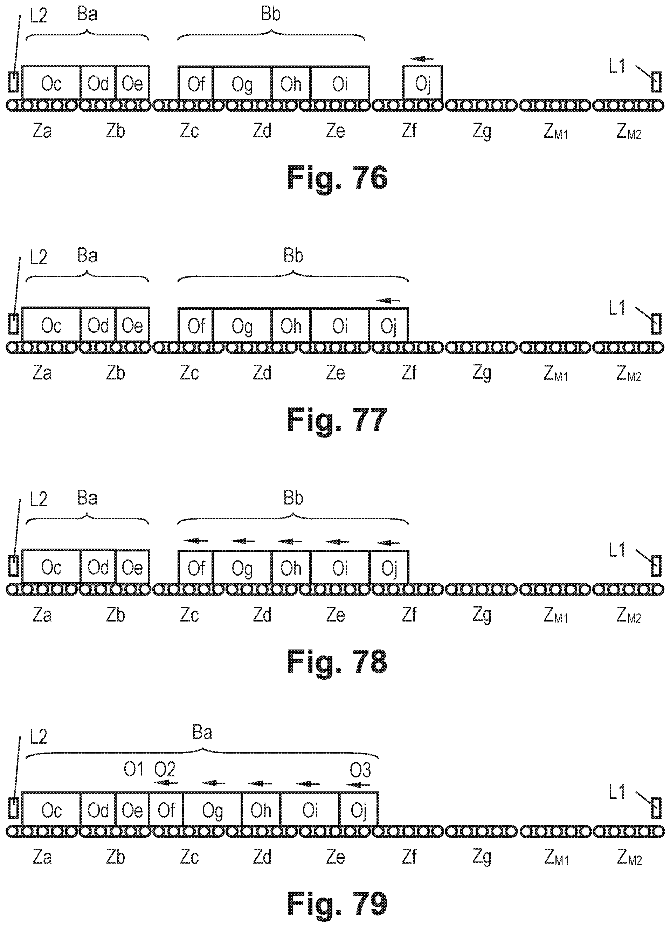

In einem in der Fig. 76 dargestellten Zeitpunkt bewegt sich ein weiteres Objekt Oj auf den Objekt-Block Bb zu. In einem in der Fig. 77 dargestellten Zeitpunkt hat das Objekt Oj den Objekt-Block Bb erreicht und wird in der schon beschriebenen Weise an den Objekt-Block Bb angefügt.

Eine weitere Prüfung ergibt, dass alle Objekte Oc..Oj innerhalb der Zonen Za..Ze untergebracht werden können (vergleiche hierzu die zu den Fig. 73 und74 angegebenen Prüfungsmöglichkeiten). Demzufolge wird der Objekt-Block Bb auf den Objekt-Block Ba hinbewegt, so wie das in der Fig. 78 dargestellt ist. In einem in der Fig. 79 dargestellten Zeitpunkt hat der Objekt-Block Bb den Objekt-Block Ba erreicht. Die beiden Objekt-Blöcke Ba und Bb werden daher zu einem Objekt-Block Ba verbunden. Dabei entspricht das Objekt Oe einem ersten Objekt O1, das Objekt Of eine zweiten Objekt O2 und das Objekt Oj einem dritten Objekt O3. Das erste Objekt O1 bildet das Ende des Objekt-Blocks Ba, das zweite Objekt O2 den Beginn des Objekt-Blocks Bb und das dritte Objekt das Ende des Objekt-Blocks Bb.

In einem in der Fig. 80 dargestellten Zeitpunkt wird der gesamte Objekt-Block Ba in Bewegung versetzt und stromabwärts transportiert. In einem in der Fig. 81 dargestellten Zeitpunkt hat der Objekt-Block Ba mit seiner Block-Hinterkante an der Zonen-Hinterkante der Zone Ze angehalten. Die Block-Hinterkante K_{HB} entspricht dabei der Objekt-Hinterkante des dritten Objekts O3, welches durch das Objekt Oj gebildet ist.

Die Fig. 82 zeigt schließlich ein Beispiel bei dem die Objekte Oc..Oj virtuell vergrößert wurden (vergleiche auch Fig. 14 und 15). Demzufolge ergibt sich zum Beispiel für das Objekt Oh eine virtuelle Objektlänge lh. Entsprechend ergeben sich physisch vorhandene Objektabstände xj, obwohl die virtuell verlängerten Objekte Oc..Oj steuerungstechnisch dicht an dicht stehen. Für den in der Fig. 81 dargestellten Objekt-Block Ba ergibt sich nun die in Fig. 82 dargestellte Situation.

An dieser Stelle wird angemerkt, dass die Objekte Oc..Oj auch virtuell verkleinert werden können (vergleiche auch Fig. 12 und 13), um den Staudruck innerhalb des Objekt-Blocks Ba zu erhöhen oder den Kontakt zwischen den Objekte Oc..Oj auch im Hinblick auf unvermeidliche Positionsfehler sicherzustellen. Die Situation gleicht aber in diesem Fall der in Fig. 81 dargestellte Situation.

Zusammenfassend weist das vorgestellte Verfahren zum Stauen von Objekten Oa..Oj im Staubereich SB der Fördereinrichtung 1 in Form von Objekt-Blöcken B, Ba, Bb, die folgenden Schritte auf:
- Erfassen der Objekt-Hinterkante K_{HO1} eines ersten Objekts O1 durch die erste Messeinrichtung L1 an der ersten Mess-Position P_{Mess1}, wobei das erste Objekt O1 durch die angetriebenen Förderelemente 2, 2_{M}, 2_{L} in der Förderrichtung stromabwärts an der ersten Mess-Position P_{Mess1} vorbeibewegt wird,
- Erfassen der Objekt-Vorderkante K_{VO2} eines zweiten Objekts O2, das dem ersten Objekt O2 stromaufwärts nachfolgt, durch die erste Messeinrichtung L1 an der ersten Mess-Position P_{Mess1}, wobei das zweite Objekt O2 durch die angetriebenen Förderelemente 2, 2_{M}, 2_{L} in der Förderrichtung stromabwärts an der ersten Mess-Position P_{Mess1} vorbeibewegt wird,
- Bewegen des ersten Objekts O1 an eine Anhalte-Position P_{Stop}, welche der ersten Mess-Position P_{Mess1} in der Förderrichtung stromabwärts nachgelagert ist, und Anhalten des ersten Objekts O1 mit seiner Objekt-Hinterkante K_{HO1} an einer Zonen-Hinterkante K_{HZ1} einer ersten Zone Z1 der Fördereinrichtung 1 im Staubereich SB,
- Bewegen des zweiten Objekts O2 mit Hilfe der Fördereinrichtung 1 stromabwärts zum ersten Objekt O1,
- Bilden oder Vergrößern eines Objekt-Blocks B, Ba, Bb mit dem ersten Objekt O1 und dem zweiten Objekt O2 nach dem Auffahren des zweiten Objekts O2 auf das erste Objekt O1 oder nachdem das zweite Objekt O2 einen vorgebbaren Abstand zum ersten Objekt O1 aufweist (vergleiche Fig. 82) sowie Bewegen des Objekt-Blocks B, Ba, Bb mit einer gemeinsamen Ist-Geschwindigkeit mit Hilfe der Fördereinrichtung 1 stromabwärts in der Förderrichtung und
- Anhalten des Objekt-Blocks B, Ba, Bb mit Hilfe der Fördereinrichtung 1, wenn er mit seiner Block-Hinterkante K_{HB} eine Zonen-Hinterkante K_{HZ1} einer stromabwärts folgenden Zone Za..Zg erreicht oder wenn er mit seiner Block-Hinterkante K_{HB} in einem Abstand stromabwärts zu einer der genannten Zonen-Hinterkanten K_{HZ1} positioniert ist, welcher kleiner oder gleich einem gewünschten Abstand xj zu einem nachfolgenden Objekt Oa..Oj entspricht.

Abschließend wird festgehalten, dass der Schutzbereich durch die Patentansprüche bestimmt ist. Die Beschreibung und die Zeichnungen sind jedoch zur Auslegung der Ansprüche heranzuziehen.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1: Fördereinrichtung
- 2: Förderelement (Förderrolle)
- 2_{M}: motorisiertes Förderelement (Förderrolle)
- 2_{L}: nicht motorisiertes Förderelement (Förderrolle)
- 3: Längsträger
- 4: Ausrichtelement (Ausrichtrolle)
- 5: Steuerung
- 6: Riemen / Förderband
- M: Antrieb

- E: Eingang
- A: Ausgang
- AB: Ausrichtbereich
- MB: Messbereich
- SB: Staubereich
- RB: Auflösebereich

- Z1..Z7, Za..Zg: Zone (im Staubereich)
- Z_{M1}, Z_{M2}: Zone (im Messbereich)
- O, 01..03, Oa..Oj: Objekt
- B, Ba, Bb: Objekt-Block
- L1, L2: Messeinrichtung (Lichtschranke)

- P_{Mess1}, P_{Mess2}: Mess-Position
- P_{Stop}: Anhalte-Position
- vₛₒₗₗ: Sollgeschwindigkeit
- v_{O1}: Geschwindigkeit an Objekt-Hinterkante
- K_{VO}, K_{VO1}, K_{VO2}: (physische) Objekt-Vorderkante
- K_{HO}, K_{HO1}, K_{HO2}: (physische) Objekt-Hinterkante
- G_{VO}, G_{VO1}, G_{VO2}: (virtuelle) Objekt-Vorderkante
- G_{HO}, G_{HO1}, G_{HO2}: (virtuelle) Objekt-Hinterkante
- K_{HZ1}: Zonen-Hinterkante
- K_{HB}: Block-Hinterkante

- x_{f}..xᵢ: Objekt-Abstand
- l_{B}: Block-Länge
- l_{f}..lᵢ: Objekt länge
- l_{Zf}..l_{Zg}: Zonenlänge

## Patentansprüche

1. Verfahren zum Stauen von Objekten (O, O1..O3, Oa..Oj) in einem Staubereich (SB) einer Fördereinrichtung (1) in Form von Objekt-Blöcken (B, Ba, Bb), die mehrere mit einer gemeinsamen Geschwindigkeit bewegte Objekte (O, O1..O3, Oa..Oj) aufweisen, umfassend die Schritte:
- Erfassen einer Objekt-Hinterkante (K_{HO1}) eines ersten Objekts (O1) durch eine erste Messeinrichtung (L1) an einer ersten Mess-Position (P_{Mess1}), wobei das erste Objekt (O1) durch angetriebene Förderelemente (2, 2_{M}, 2_{L}) der Fördereinrichtung (1) in einer Förderrichtung stromabwärts an der ersten Mess-Position (P_{Mess1}) vorbeibewegt wird und wobei die Objekt-Hinterkante (K_{HO1}) des ersten Objekts (O1) stromaufwärts zu einer Objekt-Vorderkante (K_{VO1}) des ersten Objekts (O1) liegt,
- Erfassen einer Objekt-Vorderkante (K_{VO2}) eines zweiten Objekts (O2), das dem ersten Objekt (O1) stromaufwärts nachfolgt, durch die erste Messeinrichtung (L1) an der ersten Mess-Position (P_{Mess1}), wobei das zweite Objekt (O2) durch die angetriebenen Förderelemente (2, 2_{M}, 2_{L}) in der Förderrichtung stromabwärts an der ersten Mess-Position (P_{Mess1}) vorbeibewegt wird und wobei die Objekt-Vorderkante (Kvoz) des zweiten Objekts (O2) stromabwärts zu einer Objekt-Hinterkante (K_{HO2}) des zweiten Objekts (O2) liegt,
- Bewegen des ersten Objekts (O1) zu einer Anhalte-Position (P_{Stop}), welche der ersten Mess-Position (P_{Mess1}) in der Förderrichtung stromabwärts nachgelagert ist, und Anhalten des ersten Objekts (O1) mit seiner Objekt-Hinterkante (K_{HO1}) an seiner Anhalte-Position (P_{Stop}) mit Hilfe der Förderelemente (2, 2_{M}, 2_{L}), wobei eine aktuelle Position des ersten Objekts (O1) zwischen der ersten Mess-Position (P_{Mess1}) und seiner Anhalte-Position (P_{Stop}) mit Hilfe von Drehsignalen der Antriebe (M) der Förderelemente (2, 2_{M}, 2_{L}) ermittelt wird,
**dadurch gekennzeichnet, dass**
- für das zweite Objekt (02) von einer Steuerung (5) ein stetiger Verlauf einer Geschwindigkeitsreduktion einer Soll-Geschwindigkeit (v_{Soll}) berechnet wird, wobei die berechnete Anhalte-Position (P_{Stop}) der Objekt-Vorderkante (K_{VO2}) des zweiten Objekts (02) an der Position der Objekt-Hinterkante (K_{HO1}) des angehaltenen ersten Objekts (O1) oder zwischen der Objekt-Vorderkante (Kvoi) des angehaltenen ersten Objekts (O1) und der Objekt-Hinterkante (K_{HO1}) des angehaltenen ersten Objekts (O1) liegt,
- das zweite Objekt (O2) mit Hilfe der Förderelemente (2, 2_{M}, 2_{L}) anhand der berechneten Geschwindigkeitsreduktion bewegt und angehalten wird, wobei eine aktuelle Position des zweiten Objekts (O2) zwischen der ersten Mess-Position (P_{Mess1}) und seiner Anhalte-Position (P_{Stop}) mit Hilfe von Drehsignalen der Antriebe (M) der Förderelemente (2, 2_{M}, 2_{L}) ermittelt wird und
- der Berechnung der Geschwindigkeitsreduktion
a) eine virtuelle Objekt-Hinterkante (G_{HO1}) des ersten Objekts (O1) zugrunde gelegt wird, welche stromabwärts zu einer physischen Objekt-Hinterkante (K_{HO1}) des ersten Objekts liegt (O1), und/oder
b) eine virtuelle Objekt-Vorderkante (G_{VO2}) des zweiten Objekts (O2) zugrunde gelegt wird, welche stromaufwärts zu einer physischen Objekt-Vorderkante (K_{VO2}) des zweiten Objekts (O2) liegt,
oder
c) eine virtuelle Objekt-Hinterkante (G_{HO1}) des ersten Objekts (O1) zugrunde gelegt wird, welche stromaufwärts zu einer physischen Objekt-Hinterkante (K_{HO1}) des ersten Objekts (O1) liegt, und/oder
d) eine virtuelle Objekt-Vorderkante (G_{VO2}) des zweiten Objekts (O2) zugrunde gelegt wird, welche stromabwärts zu einer physischen Objekt-Vorderkante (K_{VO2}) des zweiten Objekts (O2) liegt.

2. Verfahren nach Anspruch 1, **dadurch gekennzeichnet, dass** die Geschwindigkeitsreduktion einen linearen Verlauf aufweist.

3. Verfahren nach Anspruch 1, **dadurch gekennzeichnet, dass** die Geschwindigkeitsreduktion einen degressiv verlaufenden Abschnitt im Bereich der Position der Objekt-Hinterkante (K_{HO1}) des angehaltenen ersten Objekts (O1) aufweist.

4. Verfahren nach einem der Ansprüche 1 bis 3, **dadurch gekennzeichnet, dass** eine Position für die Soll-Geschwindigkeit (v_{Soll}) Null stromabwärts zur Objekt-Hinterkante (K_{HO1}) des angehaltenen ersten Objekts (O1) liegt und die Soll-Geschwindigkeit (v_{Soll}) an der Objekt-Hinterkante (K_{HO1}) des angehaltenen ersten Objekts (O1) maximal 0,1 m/s beträgt.

5. Verfahren nach einem der Ansprüche 1 bis 4, **dadurch gekennzeichnet, dass** das erste Objekt (O1) und das zweite Objekt (O2) mit konstanter Geschwindigkeit an der ersten Mess-Position (P_{Mess1}) vorbeibewegt werden.

6. Verfahren nach einem der Ansprüche 1 bis 5, **dadurch gekennzeichnet, dass** der Abstand zwischen der virtuellen Objekt-Hinterkante (G_{HO1}) und der physischen Objekt-Hinterkante (K_{HO1}) des ersten Objekts (O1) und/oder der Abstand zwischen der virtuellen Objekt-Vorderkante (G_{VO2}) und der physischen Objekt-Vorderkante (K_{VO2}) des zweiten Objekts (O2) der Ungenauigkeit bei der Positionsbestimmung des ersten Objekts (O1) und des zweiten Objekts (O2) durch die erste Messeinrichtung (L1) zuzüglich einer Toleranz von ±10% entspricht.

7. Verfahren nach einem der Ansprüche 1 bis 6, **dadurch gekennzeichnet, dass** ein im Bereich des ersten Objekts (O1) angeordnetes Förderelement (2, 2_{M}, 2_{L}) nach dem Anhalten des ersten Objekts (O1) gebremst wird.

8. Verfahren nach Anspruch 7, **dadurch gekennzeichnet, dass** ein Bremsmoment eines im Bereich des ersten Objekts (O1) angeordneten Förderelements (2, 2_{M}, 2_{L}) gemessen wird und das zweite Objekt (O2) angehalten wird, wenn das Bremsmoment einen ersten Schwellwert überschreitet.

9. Verfahren nach Anspruch 7 oder 8, **dadurch gekennzeichnet, dass** ein Bremsmoment eines im Bereich des ersten Objekts (O1) angeordneten Förderelements (2, 2_{M}, 2_{L}) gemessen wird und das zweite Objekt (O2) nach dem Kontakt mit dem ersten Objekt (O1) zurückbewegt und angehalten wird, wenn das Bremsmoment einen zweiten Schwellwert unterschreitet.

10. Verfahren nach einem der Ansprüche 1 bis 6, **dadurch gekennzeichnet, dass** im Bereich des ersten Objekts (O1) angeordnete Förderelemente (2, 2_{M}, 2_{L}) nach dem Anhalten des ersten Objekts (O1) in einen Freilauf geschaltet werden.

11. Verfahren nach einem der Ansprüche 1 bis 8, **dadurch gekennzeichnet, dass**
- das erste Objekt (O1) beim Anhalten an seiner Anhalte-Position (P_{Stop}) mit Hilfe der Förderelemente (2, 2_{M}, 2_{L}) mit seiner Objekt-Hinterkante (K_{HO1}) an einer stromaufwärts gelegenen Zonen-Hinterkante (K_{HZ1}) einer ersten Zone (Z1) von mehreren unabhängig voneinander antreibbaren Zonen (Za..Zg) der Fördereinrichtung (1) im Staubereich (SB) angehalten wird,
- das zweite Objekt (02) mit Hilfe der Förderelemente (2, 2_{M}, 2_{L}) auf das erste Objekt (O1) zubewegt wird und
- das erste Objekt (O1) und das zweite Objekt (02) nach dem Auffahren des zweiten Objekts (02) auf das erste Objekt (O1) Teil eines Objekt-Blocks (B, Ba, Bb) werden, der mit Hilfe der Förderelemente (2, 2_{M}, 2_{L}) mit einer gemeinsamen Ist-Geschwindigkeit in der Förderrichtung (1) stromabwärts bewegt wird, und wobei
- der Objekt-Block (B, Ba, Bb) mit Hilfe der Förderelemente (2, 2_{M}, 2_{L}) angehalten wird, wenn er mit seiner Block-Hinterkante (K_{HB}) die Zonen-Hinterkante (K_{HZ1}) einer stromabwärts folgenden Zone (Za..Zg) erreicht, wobei eine aktuelle Position der Block-Hinterkante (K_{HB}) mit Hilfe von Drehsignalen der Antriebe (M) der Förderelemente (2, 2_{M}, 2_{L}) ermittelt wird.

12. Verfahren zum Stauen von Objekten (O, O1..O3, Oa..Oj) in einem Staubereich (SB) einer Fördereinrichtung (1) in Form von Objekt-Blöcken (B, Ba, Bb), die mehrere mit einer gemeinsamen Geschwindigkeit bewegte Objekte (O, O1..O3, Oa..Oj) aufweisen, umfassend die Schritte:
- Erfassen einer Objekt-Hinterkante (K_{HO1}) eines ersten Objekts (O1) durch eine erste Messeinrichtung (L1) an einer ersten Mess-Position (P_{Mess1}), wobei das erste Objekt (O1) durch angetriebene Förderelemente (2, 2_{M}, 2_{L}) in einer Förderrichtung stromabwärts an der ersten Mess-Position (P_{Mess1}) vorbeibewegt wird und wobei die Objekt-Hinterkante (K_{HO1}) des ersten Objekts (O1) stromaufwärts zu einer Objekt-Vorderkante (K_{VO1}) des ersten Objekts (O1) liegt,
- Erfassen einer Objekt-Vorderkante (K_{VO2}) eines zweiten Objekts (O2), das dem ersten Objekt (O1) stromaufwärts nachfolgt, durch die erste Messeinrichtung (L1) an der ersten Mess-Position (P_{Mess1}), wobei das zweite Objekt (O2) durch die angetriebenen Förderelemente (2, 2_{M}, 2_{L}) in der Förderrichtung stromabwärts an der ersten Mess-Position (P_{Mess1}) vorbeibewegt wird und wobei die Objekt-Vorderkante (K_{VO2}) des zweiten Objekts (O2) stromabwärts zu einer Objekt-Hinterkante (K_{HO2}) des zweiten Objekts (02) liegt,
- Bewegen des ersten Objekts (O1) zu einer Anhalte-Position (P_{Stop}), welche der ersten Mess-Position (P_{Mess1}) in der Förderrichtung stromabwärts nachgelagert ist, und Anhalten des ersten Objekts (O1) mit seiner Objekt-Hinterkante (K_{HO1}) an seiner Anhalte-Position (P_{Stop}) mit Hilfe der Förderelemente (2, 2_{M}, 2_{L}), wobei eine aktuelle Position des ersten Objekts (O1) zwischen der ersten Mess-Position (P_{Mess1}) und seiner Anhalte-Position (P_{Stop}) mit Hilfe von Drehsignalen der Antriebe (M) der Förderelemente (2, 2_{M}, 2_{L}) ermittelt wird, wobei
- das erste Objekt (O1) beim Anhalten an seiner Anhalte-Position (P_{Stop}) mit Hilfe der Förderelemente (2, 2_{M}, 2_{L}) mit seiner Objekt-Hinterkante (K_{HO1}) an einer stromaufwärts gelegenen Zonen-Hinterkante (K_{HZ1}) einer ersten Zone (Z1) von mehreren unabhängig voneinander antreibbaren Zonen (Za..Zg) der Fördereinrichtung (1) im Staubereich (SB) angehalten wird,
- das zweite Objekt (02) mit Hilfe der Förderelemente (2, 2_{M}, 2_{L}) auf das erste Objekt (O1) zubewegt wird und
- das erste Objekt (O1) und das zweite Objekt (O2) nach dem Auffahren des zweiten Objekts (O2) auf das erste Objekt (O1) oder nachdem das zweite Objekt (O2) einen vorgebbaren Abstand (x_{f}..xᵢ ) zum ersten Objekt (O1) aufweist Teil eines Objekt-Blocks (B, Ba, Bb) werden, der mit Hilfe der Förderelemente (2, 2_{M}, 2_{L}) mit einer gemeinsamen Ist-Geschwindigkeit in der Förderrichtung (1) stromabwärts bewegt wird, **dadurch gekennzeichnet, dass**
- der Objekt-Block (B, Ba, Bb) mit Hilfe der Förderelemente (2, 2_{M}, 2_{L}) angehalten wird, wenn er mit seiner Block-Hinterkante (K_{HB}) die Zonen-Hinterkante (K_{HZ1}) einer stromabwärts folgenden Zone (Za..Zg) erreicht oder wenn er mit seiner Block-Hinterkante (K_{HB}) in einem Abstand stromabwärts zu einer der genannten Zonen-Hinterkanten (K_{HZ1}) positioniert ist, welcher kleiner oder gleich einem gewünschten Abstand (x_{f}..xᵢ ) zu einem nachfolgenden Objekt (Oa..Oj) entspricht, wobei eine aktuelle Position der Block-Hinterkante (K_{HB}) mit Hilfe von Drehsignalen der Antriebe (M) der Förderelemente (2, 2_{M}, 2_{L}) ermittelt wird.

13. Verfahren nach Anspruch 11 oder 12, **dadurch gekennzeichnet,**
- **dass** die Block-Hinterkante (K_{HB}) der Objekt-Hinterkante (K_{HO2}) des zweiten Objekts (02) entspricht, wenn das zweite Objekt (O2) ein isoliertes Objekt ist bevor das zweite Objekt (02) gemeinsam mit dem ersten Objekt (O1) Teil eines Objekt-Blocks (B, Ba, Bb) wird und
- **dass** die Block-Hinterkante (K_{HB}) der Objekt-Hinterkante eines dritten Objekts (O3) entspricht, wenn das zweite Objekt (O2) und das dritte Objekt (O3) bereits Teil eines Objekt-Blocks (B, Ba, Bb) sind, bevor das erste Objekt (O1) zu diesem Objekt-Block (B, Ba, Bb) hinzugefügt wird, wobei das dritte Objekt (O3) am stromaufwärts gelegenen Ende des Objekt-Blocks (B, Ba, Bb) angeordnet ist.

14. Verfahren nach einem der Ansprüche 11 bis 13, **dadurch gekennzeichnet, dass** geprüft wird, ob eine Gruppe aufeinander folgender Objekte (O, O1..O3, Oa..Oj), inkludierend das erste und das zweite Objekt (O1, O2), in eine Zone (Z1..Z3, Za..Zg) oder in eine Gruppe aufeinander folgender und zum letzten Objekt (Oa..Oj) der Gruppe stromabwärts liegender Zonen (Z1..Z3, Za..Zg) passt und erst dann ein Objekt-Block (B, Ba, Bb) aus den Objekten (O, O1..O3, Oa..Oj) der Gruppe gebildet wird, wenn das Ergebnis der Prüfung positiv ist, und andernfalls das zweite Objekt (O2) mit seiner Objekt-Hinterkante (K_{HO2}) an einer Zonen-Hinterkante (K_{HZ2}) einer zweiten Zone (Z2) des Staubereichs (SB) angehalten wird oder in einem Abstand stromabwärts zu einer der genannten Zonen-Hinterkante (K_{HZ2}) angehalten wird, welcher kleiner oder gleich einem gewünschten Abstand (xf, xg, xh, xi) zu einem nachfolgenden Objekt (O, O1..03, Oa..Oj) entspricht, wobei die zweite Zone (Z2) hinter der ersten Zone (Z1) angeordnet ist.

15. Verfahren nach Anspruch 14, **dadurch gekennzeichnet, dass** der Objekt-Block (B, Ba, Bb) bei positivem Ergebnis der Prüfung ohne Zwischenhalt der dem ersten Objekt (O1) nachfolgenden Objekte (O2, Oa..Oj) der Gruppe gebildet wird.

16. Verfahren nach einem der Ansprüche 11 bis 15, **dadurch gekennzeichnet, dass** alle Objekte (O, O1..O3, Oa..Oj) zeitlich nacheinander in derselben Zone (Zg, Z1) angehalten werden, wobei die genannte Zone (Zg) insbesondere direkt hinter einem die erste Messeinrichtung (L1) enthaltenden Mess-Bereich (MB) angeordnet ist.

17. Verfahren nach einem der Ansprüche 11 bis 15, **dadurch gekennzeichnet, dass** die Objekte (O, O1..O3, Oa..Oj) in unterschiedlichen Zonen (Z1..Z2, Za..Zg) angehalten werden, insbesondere beginnend am stromabwärts gelegenen Ende des Staubereichs (SB).

18. Verfahren nach einem der Ansprüche 11 bis 17, **dadurch gekennzeichnet, dass** ein im Staubereich (SB) führendes Objekt (Oa) kein Teil eines Objekt-Blocks (B, Ba, Bb) wird oder von einem solchen isoliert wird.

19. Verfahren nach Anspruch 18, **dadurch gekennzeichnet, dass** ein dem führenden Objekt (Oa) nachfolgendes Objekt (Ob) von einem Objekt-Block (B, Ba, Bb) gelöst wird und an das stromabwärts gelegene Ende des Staubereichs (SB) nachrückt, wenn es Teil eines Objekt-Blocks (B, Ba, Bb) ist und wenn das führende Objekt (Oa) den Staubereich (SB) verlässt.

20. Verfahren nach Anspruch 18 oder 19, **dadurch gekennzeichnet, dass** dem führenden Objekt (Oa) nachfolgende Objekte (Ob..Oj) von einem Objekt-Block (B, Ba, Bb) gelöst werden, wenn diese Teil eines Objekt-Blocks (B, Ba, Bb) sind und den Staubereich (SB) planmäßig gemeinsam mit dem führenden Objekt (Oa) verlassen sollen, wobei die Loslösung vom Objekt-Block (B, Ba, Bb) dann erfolgt, wenn die Objekt-Hinterkante des letzten loszulösenden Objekts des Objekt-Blocks (B, Ba, Bb) eine Zonen-Hinterkante (K_{HZ1}) einer Zone (Za..Zg) erreicht.

21. Verfahren nach einem der Ansprüche 18 bis 20, **dadurch gekennzeichnet, dass** zumindest ein dem führenden Objekt (Oa) nachfolgendes Objekt (Ob..Oj) auf das führende Objekt (Oa) auffährt, wenn die genannten Objekte (Oa..Oj) den Staubereich (SB) planmäßig als Objekt-Block (B, Ba, Bb) verlassen sollen.

22. Verfahren nach einem der Ansprüche 11 bis 21, **dadurch gekennzeichnet, dass** ein Objekt-Block (B, Ba, Bb) nur bis zu einer Maximallänge gebildet wird.

23. Verfahren nach einem der Ansprüche 11 bis 22, **dadurch gekennzeichnet, dass** dieses mehrere wählbare Betriebsmodi aus der Gruppe:
- Verfahren nach Anspruch 16,
- Verfahren nach Anspruch 17,
- Verfahren nach Anspruch 16 in Kombination mit einem Verfahren nach einem der Ansprüche 18 bis 22,
- Verfahren nach Anspruch 17 in Kombination mit einem Verfahren nach einem der Ansprüche 18 bis 22
aufweist, zwischen denen umgeschaltet werden kann.

24. Fördereinrichtung (1) für eine Förderanlage zum Stauen von Objekten (O, O1..O3, Oa..Oj) in einem Staubereich (SB) in Form von Objekt-Blöcken (B, Ba, Bb), die mehrere mit einer gemeinsamen Geschwindigkeit bewegte Objekte (O, O1..O3, Oa..Oj) aufweisen, umfassend:
- angetriebene Förderelemente (2, 2_{M}, 2_{L}) zum Transport der Objekte (O, O1..O3, Oa..Oj),
- eine erste Messeinrichtung (L1) zum Erfassen einer Objekt-Vorderkante (K_{VO}, K_{VO1}, K_{VO2}) und einer Objekt-Hinterkante (K_{HO}, K_{HO1}, K_{HO2}) der Objekte (O, O1..O3, Oa..Oj) an einer ersten Mess-Position (P_{Mess1}), wobei die Objekt-Vorderkante (K_{VO}, K_{VO1}, K_{VO2}) in der Förderrichtung stromabwärts zu der Objekt-Hinterkante (K_{HO}, K_{HO1}, K_{HO2}) des Objekts (O, O1..O3, Oa..Oj) liegt, und
- eine Steuerung (5), welche dazu ausgebildet ist, Antriebe (M) der Förderelemente (2, 2_{M}, 2_{L}) entsprechend einer vorgegebenen Soll-Bewegung der Objekte (O, O1..O3, Oa..Oj) anzusteuern, ein erstes Objekt (O1) mit Hilfe der Förderelemente (2, 2_{M}, 2_{L}) zu einer Anhalte-Position (P_{Stop}) zu bewegen, welche der ersten Mess-Position (P_{Mess1}) in der Förderrichtung stromabwärts nachgelagert ist, das erste Objekt (O1) mit seiner Objekt-Hinterkante (K_{HO1}) an seiner Anhalte-Position (P_{Stop}) anzuhalten, und eine aktuelle Position des ersten Objekts (O1) zwischen der ersten Mess-Position (P_{Mess1}) und seiner Anhalte-Position (P_{Stop}) mit Hilfe von Drehsignalen der Antriebe (M) der Förderelemente (2, 2_{M}, 2_{L}) zu ermitteln,
**dadurch gekennzeichnet, dass**
die Steuerung (5) weiter dazu ausgebildet ist,
- für ein zweites Objekt (O2) einen stetigen Verlauf einer Geschwindigkeitsreduktion einer Soll-Geschwindigkeit (v_{Soll}) zu berechnen, wobei die berechnete Anhalte-Position (P_{Stop}) der Objekt-Vorderkante (K_{VO2}) des zweiten Objekts (O2) an der Position der Objekt-Hinterkante (K_{HO1}) des angehaltenen ersten Objekts (O1) oder zwischen der Objekt-Vorderkante (K_{VO1}) des angehaltenen ersten Objekts (O1) und der Objekt-Hinterkante (K_{HO1}) des angehaltenen ersten Objekts (O1) liegt, und
- die Antriebe (M) der Förderelemente (2, 2_{M}, 2_{L}) entsprechend des berechneten Verlaufs der Geschwindigkeitsreduktion anzusteuern, das zweite Objekt (O2) anhand der berechneten Geschwindigkeitsreduktion hinter dem ersten Objekt (O2) anzuhalten und eine aktuelle Position des zweiten Objekts (O2) zwischen der ersten Mess-Position (P_{Mess1}) und seiner Anhalte-Position (P_{Stop}) mit Hilfe von Drehsignalen der Antriebe (M) der Förderelemente (2, 2_{M}, 2_{L}) zu ermitteln, wobei
- der Berechnung der Geschwindigkeitsreduktion
a) eine virtuelle Objekt-Hinterkante (G_{HO1}) des ersten Objekts (O1) zugrunde gelegt wird, welche stromabwärts zu einer physischen Objekt-Hinterkante (K_{HO1}) des ersten Objekts liegt (O1), und/oder
b) eine virtuelle Objekt-Vorderkante (G_{VO2}) des zweiten Objekts (O2) zugrunde gelegt wird, welche stromaufwärts zu einer physischen Objekt-Vorderkante (K_{VO2}) des zweiten Objekts (O2) liegt,
oder
c) eine virtuelle Objekt-Hinterkante (G_{HO1}) des ersten Objekts (O1) zugrunde gelegt wird, welche stromaufwärts zu einer physischen Objekt-Hinterkante (K_{HO1}) des ersten Objekts (O1) liegt, und/oder
d) eine virtuelle Objekt-Vorderkante (G_{VO2}) des zweiten Objekts (O2) zugrunde gelegt wird, welche stromabwärts zu einer physischen Objekt-Vorderkante (K_{VO2}) des zweiten Objekts (O2) liegt.

25. Fördereinrichtung (1) nach Anspruch 24, **dadurch gekennzeichnet, dass** die Steuerung (5) weiter dazu ausgebildet ist,
- das erste Objekt (O1) beim Anhalten an seiner Anhalte-Position (P_{Stop}) mit Hilfe der Förderelemente (2, 2_{M}, 2_{L}) mit seiner Objekt-Hinterkante (K_{HO1}) an einer stromaufwärts gelegenen Zonen-Hinterkante (K_{HZ1}) einer ersten Zone (Z1) von mehreren unabhängig voneinander antreibbaren Zonen (Za..Zg) der Fördereinrichtung (1) im Staubereich (SB) anzuhalten,
- das zweite Objekt (O2) mit Hilfe der Förderelemente (2, 2_{M}, 2_{L}) auf das erste Objekt (O1) zuzubewegen und
- das erste Objekt (O1) und das zweite Objekt (O2) nach dem Auffahren des zweiten Objekts (O2) auf das erste Objekt (O1) mit Hilfe der Förderelemente (2, 2_{M}, 2_{L}) als Objekt-Block (B, Ba, Bb) mit einer gemeinsamen Ist-Geschwindigkeit in der Förderrichtung stromabwärts zu bewegen,
- den Objekt-Block (B, Ba, Bb) mit Hilfe der Förderelemente (2, 2_{M}, 2_{L}) anzuhalten, wenn er mit seiner Block-Hinterkante (K_{HB}) die Zonen-Hinterkante (K_{HZ1}) einer stromabwärts folgenden Zone (Za..Zg) erreicht und
- eine aktuelle Position der Block-Hinterkante (K_{HB}) mit Hilfe von Drehsignalen der Antriebe (M) der Förderelemente (2, 2_{M}, 2_{L}) zu ermitteln.

26. Fördereinrichtung (1) für eine Förderanlage zum Stauen von Objekten (O, O1..O3, Oa..Oj) in einem Staubereich (SB) in Form von Objekt-Blöcken (B, Ba, Bb) , die mehrere mit einer gemeinsamen Geschwindigkeit bewegte Objekte (O, O1..O3, Oa..Oj) aufweisen, umfassend:
- angetriebene Förderelemente (2, 2_{M}, 2_{L}) zum Transport der Objekte (O, 01..03, Oa..Oj),
- eine erste Messeinrichtung (L1) zum Erfassen einer Objekt-Vorderkante (Kvo, K_{VO1}, K_{VO2}) und einer Objekt-Hinterkante (K_{HO}, K_{HO1}, K_{HO2}) der Objekte (O, O1..O3, Oa..Oj) an einer ersten Mess-Position (P_{Mess1}), wobei die Objekt-Vorderkante (K_{VO}, K_{VO1}, K_{VO2}) in der Förderrichtung stromabwärts zu der Objekt-Hinterkante (K_{HO}, K_{HO1}, K_{HO2}) des Objekts (O, O1..O3, Oa..Oj) liegt, und
- eine Steuerung (5), welche dazu ausgebildet ist, Antriebe (M) der Förderelemente (2, 2_{M}, 2_{L}) entsprechend einer vorgegebenen Soll-Bewegung der Objekte (O, O1..O3, Oa..Oj) anzusteuern, ein erstes Objekt (O1) mit Hilfe der Förderelemente (2, 2_{M}, 2_{L}) zu einer Anhalte-Position (P_{Stop}) zu bewegen, welche der ersten Mess-Position (P_{Mess1}) in der Förderrichtung stromabwärts nachgelagert ist, das erste Objekt (O1) mit seiner Objekt-Hinterkante (K_{HO1}) an seiner Anhalte-Position (P_{Stop}) anzuhalten, und eine aktuelle Position des ersten Objekts (O1) zwischen der ersten Mess-Position (P_{Mess1}) und seiner Anhalte-Position (P_{Stop}) mit Hilfe von Drehsignalen der Antriebe (M) der Förderelemente (2, 2_{M}, 2_{L}) zu ermitteln,
wobei die Steuerung (5) weiter dazu ausgebildet ist,
- das erste Objekt (O1) beim Anhalten an seiner Anhalte-Position (P_{Stop}) mit Hilfe der Förderelemente (2, 2_{M}, 2_{L}) mit seiner Objekt-Hinterkante (K_{HO1}) an einer stromaufwärts gelegenen Zonen-Hinterkante (K_{HZ1}) einer ersten Zone (Z1) von mehreren unabhängig voneinander antreibbaren Zonen (Za..Zg) der Fördereinrichtung (1) im Staubereich (SB) anzuhalten,
- das zweite Objekt (O2) mit Hilfe der Förderelemente (2, 2_{M}, 2_{L}) auf das erste Objekt (O1) zuzubewegen und
- das erste Objekt (O1) und das zweite Objekt (02) nach dem Auffahren des zweiten Objekts (02) auf das erste Objekt (O1) oder nachdem das zweite Objekt (02) einen vorgebbaren Abstand (x_{f}..xᵢ ) zum ersten Objekt (O1) aufweist mit Hilfe der Förderelemente (2, 2_{M}, 2_{L}) als Objekt-Block (B, Ba, Bb) mit einer gemeinsamen Ist-Geschwindigkeit in der Förderrichtung stromabwärts zu bewegen, **dadurch gekennzeichnet, dass** die Steuerung weiter dazu ausgebildet ist,
- den Objekt-Block (B, Ba, Bb) mit Hilfe der Förderelemente (2, 2_{M}, 2_{L}) anzuhalten, wenn er mit seiner Block-Hinterkante (K_{HB}) die Zonen-Hinterkante (K_{HZ1}) einer stromabwärts folgenden Zone (Za..Zg) erreicht oder wenn er mit seiner Block-Hinterkante (K_{HB}) in einem Abstand stromabwärts zu einer der genannten Zonen-Hinterkanten (K_{HZ1}) positioniert ist, welcher kleiner oder gleich einem gewünschten Abstand (x_{f}..xᵢ ) zu einem nachfolgenden Objekt (Oa..Oj) entspricht, und
- eine aktuelle Position der Block-Hinterkante (K_{HB}) mit Hilfe von Drehsignalen der Antriebe (M) der Förderelemente (2, 2_{M}, 2_{L}) zu ermitteln.

27. Fördereinrichtung (1) nach einem der Ansprüche 24 bis 26, **gekennzeichnet durch** einen dem Staubereich (SB) vorgelagerten Messbereich (MB), in dem die Objekt-Vorderkante (K_{VO}, K_{VO1}, K_{VO2}) und die Objekt-Hinterkante (K_{HO}, K_{HO1}, K_{HO2}) eines Objekts (O, O1..O3, Oa..Oj) durch die erste Messeinrichtung (L1) erfasst werden.

28. Fördereinrichtung (1) nach einem der Ansprüche 24 bis 27, **dadurch gekennzeichnet, dass**
- zumindest eine zweite Mess-Position (P_{Mess2}), welche stromabwärts zu der ersten Mess-Position (P_{Mess1}) im Erfassungsbereich der ersten Messeinrichtung (L1) oder einer zweiten Messeinrichtung (L2) angeordnet ist, und
- die Steuerung (5) zusätzlich dazu ausgebildet ist, die mit Hilfe der Drehsignale der Antriebe (M) der Förderelemente (2, 2_{M}, 2_{L}) ermittelte aktuelle Position eines Objekts (O, O1..O3, Oa..Oj) auf den Wert der zweiten Mess-Position (P_{Mess2}) rückzusetzen, wenn das betreffende Objekt (O, O1..O3, Oa..Oj) an der zweiten Mess-Position (P_{Mess2}) detektiert wird.

29. Fördereinrichtung (1) nach einem der Ansprüche 24 bis 28, **dadurch gekennzeichnet, dass** als Messeinrichtung (L1, L2) eine Lichtschranke, eine Kamera oder ein Laser-Scanner vorgesehen ist.

## Claims

1. A method for accumulating objects (O, 01..03, Oa..Oj) in an accumulation area (SB) of a conveying device (1) in the form of object blocks (B, Ba, Bb), which comprise multiple objects (O, 01..03, Oa..Oj) moved at a common speed, comprising the steps:
- detecting an object rear edge (K_{HO1}) of a first object (O1) at a first measuring position (P_{Mess1}) by means of a first measuring device (L1), wherein the first object (O1) is moved past the first measuring position (P_{Mess1}) downstream in a conveying direction by driven conveyor elements (2, 2_{M}, 2_{L}) of the conveying device (1) and wherein the object rear edge (K_{HO1}) of the first object (O1) is located upstream of an object front edge (Kvoi) of the first object (O1),
- detecting an object front edge (K_{VO2}) of a second object (O2), which follows the first object (O1) upstream, at the first measuring position (P_{Mess1}) by means of the first measuring device (L1), wherein the second object (O2) is moved past the first measuring position (P_{Mess1}) downstream in the conveying direction by the driven conveyor elements (2, 2_{M}, 2_{L}) and wherein the object front edge (K_{VO2}) of the second object (O2) is located downstream of an object rear edge (K_{HO2}) of the second object (O2),
- moving the first object (O1) to a stop position (P_{Stop}), which is located downstream of the first measuring position (P_{Mess1}) in the conveying direction, and stopping the first object (O1) with its object rear edge (K_{HO1}) at its stop position (P_{Stop}) with the aid of the conveyor elements (2, 2_{M}, 2_{L}), wherein a current position of the first object (O1), between the first measuring position (P_{Mess1}) and its stop position (P_{Stop}), is determined with the aid of rotation signals from the drives (M) of the conveyor elements (2, 2_{M}, 2_{L}),
**characterized in that**
- for the second object (O2), a continuous curve of a speed reduction of a target speed (v_{Soll}) is calculated by a controller (5), wherein the calculated stop position (P_{Stop}) of the object front edge (K_{VO2}) of the second object (O2) is located at the position of the object rear edge (K_{HO1}) of the stopped first object (O1), or between the object front edge (Kvoi) of the stopped first object (O1) and the object rear edge (K_{HO1}) of the stopped first object (O1),
- the second object (O2) is moved and stopped with the aid of the conveyor elements (2, 2_{M}, 2_{L}) using the calculated speed reduction, wherein a current position of the second object (O2), between the first measuring position (P_{Mess1}) and its stop position (P_{Stop}), is determined with the aid of rotation signals from the drives (M) of the conveyor elements (2, 2_{M}, 2_{L}), and
- the calculation of the speed reduction
a) is based on a virtual object rear edge (G_{HO1}) of the first object (O1), which is located downstream of a physical object rear edge (K_{HO1}) of the first object (O1), and/or
b) is based on a virtual object front edge (G_{VO2}) of the second object (O2), which is located upstream of a physical object front edge (K_{VO2}) of the second object O2,
or
c) is based on a virtual object rear edge (G_{HO1}) of the first object (O1), which is located upstream of a physical object rear edge (K_{HO1}) of the first object (O1), and/or
d) is based on a virtual object front edge (G_{VO2}) of the second object (O2), which is located downstream of a physical object front edge (K_{VO2}) of the second object (O2).

2. The method according to claim 1, **characterized in that** the speed reduction has a linear course.

3. The method according to claim 1, **characterized in that** the speed reduction has a degressively extending section in the area of the position of the object rear edge (K_{HO1}) of the stopped first object (O1).

4. The method according to one of claims 1 to 3, **characterized in that** a position for the target speed (v_{Soll}) zero is located downstream of the object rear edge (K_{HO1}) of the stopped first object (O1) and the target speed (v_{Soll}) at the object rear edge (K_{HO1}) of the stopped first object (O1) amounts to a maximum of 0.1 m/s.

5. The method according to one of claims 1 to 4, **characterized in that** the first object (O1) and the second object (O2) are moved past the first measuring position (P_{Mess1}) at a constant speed.

6. The method according to one of claims 1 to 5, **characterized in that** the distance between the virtual object rear edge (G_{HO1}) and the physical object rear edge (K_{HO1}) of the first object (O1) and/or the distance between the virtual object front edge (G_{VO2}) and the physical object front edge (K_{VO2}) of the second object (O2) corresponds to the inaccuracy in the position determination of the first object (O1) and the second object (O2) by the measuring device (L1) plus a tolerance of ±10%.

7. The method according to one of claims 1 to 6, **characterized in that** a conveyor element (2, 2_{M}, 2_{L}) arranged in the region of the first object (O1) is held in position after stopping of the first object (O1).

8. The method according to claim 7, **characterized in that** a braking torque of a conveyor element (2, 2_{M}, 2_{L}) arranged in the region of the first object (O1) is measured and the second object (O2) is stopped once the braking torque exceeds a first threshold value.

9. The method according to claim 7 or 8, **characterized in that** a braking torque of a conveyor element (2, 2_{M}, 2_{L}) arranged in the region of the first object (O1) is measured and the second object (O2), after contact with the first object (O1), is moved back and stopped if the braking torque drops below a second threshold value.

10. The method according to one of claims 1 to 6, **characterized in that** conveyor elements (2, 2_{M}, 2_{L}) arranged in the region of the first object (O1) are switched to freewheel mode after the first object (O1) has been stopped.

11. The method according to one of claims 1 to 8, **characterized in that**
- the first object (O1), when being stopped at its stop position (P_{Stop}) with the aid of the conveyor elements (2, 2_{M}, 2_{L}), is stopped with its object rear edge (K_{HO1}) at an upstream zone rear edge (K_{HZ1}) of a first zone (Z1) of multiple independently drivable zones (Za..Zg) of the conveying device (1) in the accumulation area (SB),
- the second object (O2) is moved towards the first object (O1) with the aid of the conveyor elements (2, 2_{M}, 2_{L}) and
- the first object (O1) and the second object (O1), after the second object (O2) has been driven against the first object (O1), become part of an object block (B, Ba, Bb) which is moved downstream in the conveying direction (1) at a common actual speed with the aid of the conveyor elements (2, 2_{M}, 2_{L}), and wherein
- the object block (B, Ba, Bb) is stopped with the aid of the conveyor elements (2, 2_{M}, 2_{L}) when it reaches, with its block rear edge (K_{HB}), the zone rear edge (K_{HZ1}) of a zone (Za..Zg) following downstream, wherein a current position of the block rear edge (K_{HB}) is determined with the aid of rotation signals from the drives (M) of the conveyor elements (2, 2_{M}, 2_{L}).

12. A method for accumulating objects (O, 01..03, Oa..Oj) in an accumulation area (SB) of a conveying device (1) in the form of object blocks (B, Ba, Bb), which comprise multiple objects (O, 01..03, Oa..Oj) moved at a common speed, comprising the steps:
- detecting an object rear edge (K_{HO1}) of a first object (O1) at a first measuring position (PMess1) by means of a first measuring device (L1), wherein the first object (O1) is moved past the first measuring position (P_{Mess1}) by driven conveyor elements (2, 2_{M}, 2_{L}) downstream in a conveying direction and wherein the object rear edge (K_{HO1}) of the first object (O1) is located upstream of an object front edge (Kvoi) of the first object (O1),
- detecting an object front edge (K_{VO2}) of a second object (O2), which follows the first object (O1) upstream, at the first measuring position (P_{Mess1}) by means of the first measuring device (L1), wherein the second object (O2) is moved past the first measuring position (PMess1) downstream in the conveying direction by the driven conveyor elements (2, 2_{M}, 2_{L}) and wherein the object front edge (K_{VO2}) of the second object (O2) is located downstream of an object rear edge (K_{HO2}) of the second object (O2),
- moving the first object (O1) to a stop position (P_{Stop}), which is located downstream of the first measuring position (P_{Mess1}) in the conveying direction, and stopping the first object (O1) with its object rear edge (K_{HO1}) at its stop position (P_{Stop}) with the aid of the conveyor elements (2, 2_{M}, 2_{L}), wherein a current position of the first object (O1), between the first measuring position (P_{Mess1}) and its stop position (P_{Stop}), is determined with the aid of rotation signals from the drives (M) of the conveyor elements (2, 2_{M}, 2_{L}),
wherein
- the first object (O1), when being stopped at its stop position (P_{Stop}) with the aid of the conveyor elements (2, 2_{M}, 2_{L}), is stopped with its object rear edge (K_{HO1}) at an upstream zone rear edge (K_{HZ1}) of a first zone (Z1) of multiple independently drivable zones (Za..Zg) of the conveying device (1) in the accumulation area (SB),
- the second object (O2) is moved towards the first object (O1) with the aid of the conveyor elements (2, 2_{M}, 2_{L}) and
- the first object (O1) and the second object (O1), after the second object (O2) has been driven against the first object (O1) or after the second object (O2) has a predefinable distance (x_{f}..xᵢ ) to the first object (O1), become part of an object block (B, Ba, Bb) which is moved downstream in the conveying direction (1) at a common actual speed with the aid of the conveyor elements (2, 2_{M}, 2_{L}), **characterized in that**
- the object block (B, Ba, Bb) is stopped with the aid of the conveyor elements (2, 2_{M}, 2_{L}) when it reaches, with its block rear edge (K_{HB}), the zone rear edge (K_{HZ1}) of a zone (Za..Zg) following downstream or when it is positioned with its block rear edge (K_{HB}) at a distance downstream of one of said zone rear edges (K_{HZ1}) which corresponds to less than or equal to a desired distance (x_{f}..xᵢ ) to a following object (Oa..Oj), wherein a current position of the block rear edge (K_{HB}) is determined with the aid of rotation signals from the drives (M) of the conveyor elements (2, 2_{M}, 2_{L}).

13. The method according to claim 11 or 12, **characterized in that**
- the block rear edge (K_{HB}) corresponds to the object rear edge (K_{HO2}) of the second object (O2) if the second object (O2) is an isolated object before the second object (O2) becomes part of an object block (B, Ba, Bb) together with the first object (O1), and
- the block rear edge (K_{HB}) corresponds to the object rear edge of a third object (O3) if the second object (O2) and the third object (O3) are already part of an object block (B, Ba, Bb) before the first object (O1) is added to this object block (B, Ba, Bb), wherein the third object (O3) is arranged at the upstream end of the object block (B, Ba, Bb).

14. The method according to one of claims 11 to 13, **characterized in that** it is checked whether a group of successive objects (O, 01..03, Oa..Oj), including the first and the second objects (O1, O2), fits into a zone (Z1..Z3, Za..Zg) or into a group of successive zones (Z1..Z3, Za..Zg) located downstream of the last object (Oa..Oj) of the group, and an object block (B, Ba, Bb) is formed from the objects (O, 01..03, Oa..Oj) of the group only if the result of the check is positive, and otherwise the second object (O2) is stopped with its object rear edge (K_{HO2}) at a zone rear edge (K_{HZ2}) of a second zone (Z2) of the accumulation area (SB) or is stopped at a distance downstream of one of said zone rear edges (K_{HZ2}) which corresponds to less than or equal to a desired distance (xf, xg, xh, xi) to a following object (O, 01..03, Oa..Oj), wherein the second zone (Z2) is arranged behind the first zone (Z1).

15. The method according to claim 14, **characterized in that** the object block (B, Ba, Bb) is formed without intermediate stop of the objects (O2, Oa..Oj) of the group following the first object (O1) when the result of the check is positive.

16. The method according to one of claims 11 to 15, **characterized in that** all objects (O, 01..03, Oa..Oj) are stopped successively in time in the same zone (Zg, Z1), said zone (Zg) being arranged in particular directly behind a measuring area (MB) containing the first measuring device (L1).

17. The method according to one of claims 11 to 15, **characterized in that** the objects (O, 01..03, Oa..Oj) are stopped in different zones (Z1..Z2, Za..Zg), in particular starting at the downstream end of the accumulation area (SB).

18. The method according to one of claims 11 to 17, **characterized in that** an object (Oa) leading in the accumulation area (SB) does not become part of an object block (B, Ba, Bb) or is isolated therefrom.

19. The method according to claim 18, **characterized in that** an object (Ob) following the leading object (Oa) is detached from an object block (B, Ba, Bb) and moves to the downstream end of the accumulation area (SB) if it is part of an object block (B, Ba, Bb) and if the leading object (Oa) leaves the accumulation area (SB).

20. The method according to claim 18 or 19, **characterized in that** objects (Ob..Oj) following the leading object (Oa) are detached from an object block (B, Ba, Bb) if these are part of an object block (B, Ba, Bb) and are to leave the accumulation area (SB) as planned together with the leading object (Oa), wherein the detachment from the object block (B, Ba, Bb) takes place when the object rear edge of the last object of the object block (B, Ba, Bb) to be detached reaches a zone rear edge (K_{HZ1}) of a zone (Za..Zg).

21. The method according to one of claims 18 to 20, **characterized in that** at least one object (Ob..Oj) following the leading object (Oa) drives against the leading object (Oa) if said objects (Oa..Oj) are to leave the accumulation area (SB) as an object block (B, Ba, Bb) as planned.

22. The method according to one of claims 11 to 21, **characterized in that** an object block (B, Ba, Bb) is formed merely up to a maximum length.

23. The method according to one of claims 11 through 22, **characterized in that** it comprises multiple operating modes selectable from the group of:
- method according to claim 16,
- method according to claim 17,
- method according to claim 16 in combination with a method according to one of claims 18 to 22,
- method according to claim 17 in combination with a method according to one of claims 18 to 22,
between which switching is possible.

24. A conveying device (1) for a conveyor system for accumulating objects (O, 01..03, Oa..Oj) in an accumulation area (SB) in the form of object blocks (B, Ba, Bb), which comprise multiple objects (O, 01..03, Oa..Oj) moved at a common speed, comprising:
- driven conveyor elements (2, 2_{M}, 2_{L}) for transporting the objects (O, 01..03, Oa..Oj),
- a first measuring device (L1) for detecting an object front edge (Kvo, Kvoi, K_{VO2}) and an object rear edge (K_{HO}, K_{HO1}, K_{HO2}) of the objects (O, 01..03, Oa..Oj) at a first measuring position (P_{Mess1}), wherein the object front edge (Kvo, Kvoi, K_{VO2}) is located downstream of the object rear edge (K_{HO}, K_{HO1}, K_{HO2}) of the object (O, 01..03, Oa..Oj) in the conveying direction, and
- a controller (5) which is configured for controlling drives (M) of the conveyor elements (2, 2_{M}, 2_{L}) according to a predefined target movement of the objects (O, 01..03, Oa..Oj), for moving a first object (O1) to a stop position (P_{Stop}) with the aid of the conveyor elements (2, 2_{M}, 2_{L}), said stop position being arranged downstream of the first measuring position (P_{Mess1}) in the conveying direction, to stop the first object (O1) with its object rear edge (K_{HO1}) at its stop position (P_{Stop}), and to determine a current position of the first object (O1) between the first measuring position (P_{Mess1}) and its stop position (P_{Stop}) with the aid of rotation signals from the drives (M) of the conveyor elements (2, 2_{M}, 2_{L}),
**characterized in that**
the controller (5) is further configured for
- calculating a continuous curve of a speed reduction of a target speed (v_{Soll}) for a second object (O2), wherein the calculated stop position (P_{Stop}) of the object front edge (K_{VO2}) of the second object (O2) is located at the position of the object rear edge (K_{HO1}) of the stopped first object (O1), or between the object front edge (Kvoi) of the stopped first object (O1) and the object rear edge (K_{HO1}) of the stopped first object (O1), and
- controlling the drives (M) of the conveyor elements (2, 2_{M}, 2_{L}) according to the calculated curve of the speed reduction, stopping the second object (O2) behind the first object (O1) using the calculated speed reduction and determining a current position of the second object (O2), between the first measuring position (P_{Mess1}) and its stop position (P_{Stop}), with the aid of rotation signals from the drives (M) of the conveyor elements (2, 2_{M}, 2_{L}), wherein
- the calculation of the speed reduction
a) is based on a virtual object rear edge (G_{HO1}) of the first object (O1), which is located downstream of a physical object rear edge (K_{HO1}) of the first object (O1), and/or
b) is based on a virtual object front edge (G_{VO2}) of the second object (O2), which is located upstream of a physical object front edge (K_{VO2}) of the second object O2,
or
c) is based on a virtual object rear edge (G_{HO1}) of the first object (O1), which is located upstream of a physical object rear edge (K_{HO1}) of the first object (O1), and/or
d) is based on a virtual object front edge (G_{VO2}) of the second object (O2), which is located downstream of a physical object front edge (K_{VO2}) of the second object (O2).

25. The conveying device (1) according to claim 24, **characterized in that** the controller (5) is further configured for
- stopping the first object (O1), when being stopped at its stop position (P_{Stop}), with the aid of the conveyor elements (2, 2_{M}, 2_{L}) with its object rear edge (K_{HO1}) at an upstream zone rear edge (K_{HZ1}) of a first zone (Z1) of multiple independently drivable zones (Za..Zg) of the conveying device (1) in the accumulation area (SB),
- moving the second object (O2) towards the first object (O1) with the aid of the conveyor elements (2, 2_{M}, 2_{L}) and
- moving the first object (O1) and the second object (O2), after the second object (O2) has been driven against the first object (O1), downstream in the conveying direction at a common actual speed as an object block (B, Ba, Bb) with the aid of the conveyor elements (2, 2_{M}, 2_{L}),
- stopping the object block (B, Ba, Bb) with the aid of the conveyor elements (2, 2_{M}, 2_{L}) when it reaches, with its block rear edge (K_{HB}), the zone rear edge (K_{HZ1}) of a zone (Za..Zg) following downstream, and
- determining a current position of the block rear edge (K_{HB}) with the aid of rotation signals from the drives (M) of the conveyor elements (2, 2_{M}, 2_{L}).

26. The conveying device (1) for a conveyor system for accumulating objects (O, 01..03, Oa..Oj) in an accumulation area (SB) in the form of object blocks (B, Ba, Bb), which comprise multiple objects (O, 01..03, Oa..Oj) moved at a common speed, comprising:
- driven conveyor elements (2, 2_{M}, 2_{L}) for transporting the objects (O, 01..03, Oa..Oj),
- a first measuring device (L1) for detecting an object front edge (Kvo, Kvoi, K_{VO2}) and an object rear edge (K_{HO}, K_{HO1}, K_{HO2}) of the objects (O, 01..03, Oa..Oj) at a first measuring position (P_{Mess1}), wherein the object front edge (Kvo, Kvoi, K_{VO2}) is located downstream of the object rear edge (K_{HO}, K_{HO1}, K_{HO2}) of the object (O, 01..03, Oa..Oj) in the conveying direction, and
- a controller (5) which is configured for controlling drives (M) of the conveyor elements (2, 2_{M}, 2_{L}) according to a predefined target movement of the objects (O, 01..03, Oa..Oj), for moving a first object (O1) to a stop position (P_{Stop}) with the aid of the conveyor elements (2, 2_{M}, 2_{L}), said stop position being arranged downstream of the first measuring position (P_{Mess1}) in the conveying direction, to stop the first object (O1) with its object rear edge (K_{HO1}) at its stop position (P_{Stop}), and to determine a current position of the first object (O1) between the first measuring position (P_{Mess1}) and its stop position (P_{Stop}) with the aid of rotation signals from the drives (M) of the conveyor elements (2, 2_{M}, 2_{L}),
wherein
the controller (5) is further configured for
- stopping the first object (O1), when being stopped at its stop position (P_{Stop}), with the aid of the conveyor elements (2, 2_{M}, 2_{L}) with its object rear edge (K_{HO1}) at an upstream zone rear edge (K_{HZ1}) of a first zone (Z1) of multiple independently drivable zones (Za..Zg) of the conveying device (1) in the accumulation area (SB),
- moving the second object (O2) towards the first object (O1) with the aid of the conveyor elements (2, 2_{M}, 2_{L}) and
- moving the first object (O1) and the second object (O2), after the second object (O2) has been driven against the first object (O1) or after the second object (O2) has a predefinable distance (x_{f}..xᵢ ) to the first object (O1), downstream in the conveying direction at a common actual speed as an object block (B, Ba, Bb) with the aid of the conveyor elements (2, 2_{M}, 2_{L}), **characterized in that** the controller is further configured for
- stopping the object block (B, Ba, Bb) with the aid of the conveyor elements (2, 2_{M}, 2_{L}) when it reaches, with its block rear edge (K_{HB}), the zone rear edge (K_{HZ1}) of a zone (Za..Zg) following downstream or when it is positioned with its block rear edge (K_{HB}) at a distance downstream of one of said zone rear edges (K_{HZ1}) which corresponds to less than or equal to a desired distance (x_{f}..xᵢ) to a following object (Oa..Oj), and
- determining a current position of the block rear edge (K_{HB}) with the aid of rotation signals from the drives (M) of the conveyor elements (2, 2_{M}, 2_{L}).

27. The conveying device (1) according to one of claims 24 to 26, **characterized by** a measuring area (MB) which is arranged upstream of the accumulation area (SB) and in which the object front edge (K_{VO}, K_{VO1}, K_{VO2}) and the object rear edge (K_{HO}, K_{HO1}, K_{HO2}) of an object (O, 01..03, Oa..Oj) are detected by the first measuring device (L1).

28. The conveying device (1) according to one of claims 24 to 27, **characterized in that**
- at least one second measuring position (P_{Mess2}) is arranged downstream of the first measuring position (P_{Mess1}) in the detection area of the first measuring device (L1) or of a second measuring device (L2), and
- the controller (5) is additionally configured for resetting the current position of an object (O, 01..03, Oa..Oj) determined with the aid of the rotation signals from the drives (M) of the conveyor elements (2, 2_{M}, 2_{L}) to the value of the second measuring position (P_{Mess2}) if the respective object (O, 01..03, Oa..Oj) is detected at the second measuring position (P_{Mess2}).

29. The conveying device (1) according to one of claims 24 to 28, **characterized in that** a light barrier, a camera or a laser scanner is provided as the measuring device (L1, L2).

## Revendications

1. Procédé pour le rangement d'objets (O, O1... O3, Oa... Oj) dans une zone de rangement (SB) d'un dispositif de transport (1) sous la forme de blocs d'objets (B, Ba, Bb), qui comprennent plusieurs objets (O, O1... O3, Oa... Oj) déplacés à la même vitesse, comprenant les étapes suivantes :
- détection d'une arête arrière d'objet (K_{HO1}) d'un premier objet (O1) par un premier dispositif de mesure (L1) au niveau d'une première position de mesure (Pₘₑₛₛ₁), dans lequel le premier objet (O1) est déplacé devant la première position de mesure (Pₘₑₛₛ₁) dans une direction vers l'aval par des éléments de transport entraînés (2, 2_{M}, 2_{L}) du dispositif de transport (1) et dans lequel l'arête arrière d'objet (K_{HO1}) du premier objet (O1) se trouve en amont d'une arête avant d'objet (Kvoi) du premier objet (O1),
- détection d'une arête avant d'objet (K_{VO2}) d'un deuxième objet (O2) qui suit le premier objet (O1) en amont, par le premier dispositif de mesure (L1) à la première position de mesure (Pₘₑₛₛ₁), dans lequel le deuxième objet (O2) est déplacé devant la première position de mesure (Pₘₑₛₛ₁) dans la direction de transport vers l'aval, par les éléments de transport entraînés (2, 2_{M}, 2_{L}) et dans lequel l'arête avant d'objet (K_{VO2}) du deuxième objet (O2) se trouve en aval d'une arête arrière d'objet (K_{HO2}) du deuxième objet (O2),
- déplacement du premier objet (O1) vers une position d'arrêt (Pₛₜₒₚ) qui est disposée en aval de la première position de mesure (Pₘₑₛₛ₁) dans la direction de transport et arrêt du premier objet (O1) avec son arête arrière d'objet (K_{HO1}) au niveau de sa position d'arrêt (Pₛₜₒₚ) à l'aide des éléments de transport (2, 2_{M}, 2_{L}), dans lequel une position actuelle du premier objet (O1) entre la première position de mesure (Pₘₑₛₛ₁) et sa position d'arrêt (Pₛₜₒₚ) est déterminée à l'aide de signaux de rotation des entraînements (M) des éléments de transport (2, 2_{M}, 2_{L}),
**caractérisé en ce que**
- pour le deuxième objet (O2), une commande (5) calcule un tracé constant d'une réduction de vitesse d'une vitesse de consigne (V_{Soll}), dans lequel la position d'arrêt (Pₛₜₒₚ) calculée de l'arête avant d'objet (K_{VO2}) du deuxième objet (O2) se trouve au niveau de la position de l'arête arrière d'objet (K_{HO1}) du premier objet (O1) arrêté ou entre l'arête avant d'objet (Kvoi) du premier objet (O1) arrêté et l'arête arrière d'objet (K_{HO1}) du premier objet (O1) arrêté,
- le deuxième objet (O2) est déplacé et arrêté à l'aide des éléments de transport (2, 2_{M}, 2_{L}), grâce à la réduction de vitesse calculée, dans lequel une position actuelle du deuxième objet (O2) entre la première position de mesure (Pₘₑₛₛ₁) et sa position d'arrêt (Pₛₜₒₚ) est déterminée à l'aide de signaux de rotation des entraînements (M) des éléments de transport (2, 2_{M}, 2_{L}) et
- le calcul de la réduction de vitesse
a) est basé sur une arête arrière d'objet virtuelle (G_{HO1}) du premier objet (O1), qui se trouve en aval d'une arête arrière d'objet physique (K_{HO1}) du premier objet (O1) et/ou
b) est basé sur une arête avant d'objet virtuelle (G_{VO2}) du deuxième objet (O2), qui se trouve en amont d'une arête avant d'objet physique (K_{VO2}) du deuxième objet (O2)
ou
c) est basé sur une arête arrière d'objet virtuelle (G_{HO1}) du premier objet (O1), qui se trouve en amont d'une arête arrière d'objet physique (K_{HO1}) du premier objet (O1) et/ou
d) est basé sur une arête avant d'objet virtuelle (G_{VO2}) du deuxième objet (O2), qui se trouve en aval d'une arête avant d'objet physique (K_{VO2}) du deuxième objet (O2).

2. Procédé selon la revendication 1, **caractérisé en ce que** la réduction de vitesse présente un tracé linéaire.

3. Procédé selon la revendication 1, **caractérisé en ce que** la réduction de vitesse présente une portion dégressive au niveau de la position de l'arête arrière d'objet (K_{HO1}) du premier objet (O1) arrêté.

4. Procédé selon l'une des revendications 1 à 3, **caractérisé en ce qu'**une position pour la vitesse de consigne (V_{Soll}) nulle se trouve en aval de l'arête arrière d'objet (K_{HO1}) du premier objet (O1) arrêté et la vitesse de consigne (V_{Soll}) au niveau de l'arête arrière d'objet (K_{HO1}) du premier objet (O1) arrêté est de 0,1 m/s maximum.

5. Procédé selon l'une des revendications 1 à 4, **caractérisé en ce que** le premier objet (O1) et le deuxième objet (O2) sont déplacés devant la première position de mesure (Pₘₑₛₛ₁) à vitesse constante.

6. Procédé selon l'une des revendications 1 à 5, **caractérisé en ce que** la distance entre l'arête arrière d'objet virtuelle (G_{HO1}) et l'arête arrière d'objet physique (K_{HO1}) du premier objet (O1) et/ou la distance entre l'arête avant d'objet virtuelle (G_{VO2}) et l'arête avant d'objet physique (K_{VO2}) du deuxième objet (O2) correspond à l'inexactitude lors de la détermination de la position du premier objet (O1) et du deuxième objet (O2) par le premier dispositif de mesure (L1) plus une tolérance de ±10 %.

7. Procédé selon l'une des revendications 1 à 6, **caractérisé en ce qu'**un élément de transport (2, 2_{M}, 2_{L}) disposé au niveau du premier objet (O1) est freiné après l'arrêt du premier objet (O1).

8. Procédé selon la revendication 7, **caractérisé en ce qu'**un couple de freinage d'un élément de transport (2, 2_{M}, 2_{L}) disposé au niveau du premier objet (O1) est mesuré et le deuxième objet (O2) est arrêté lorsque le couple de freinage dépasse une première valeur seuil.

9. Procédé selon la revendication 7 ou 8, **caractérisé en ce qu'**un couple de freinage d'un élément de transport (2, 2_{M}, 2_{L}) disposé au niveau du premier objet (O1) est mesuré et le deuxième objet (O2) est déplacé en arrière et arrêté après le contact avec le premier objet (O1), lorsque le couple de freinage dépasse une deuxième valeur seuil.

10. Procédé selon l'une des revendications 1 à 6, **caractérisé en ce que** les éléments de transport (2, 2_{M}, 2_{L}) disposés au niveau du premier objet (O1) sont mis en roue libre après l'arrêt du premier objet (O1).

11. Procédé selon l'une des revendications 1 à 8, **caractérisé en ce que**
- le premier objet (O1) est arrêté, lors de l'arrêt au niveau de sa position d'arrêt (P_{Stop}), à l'aide des éléments de transport (2, 2_{M}, 2_{L}) avec son arête arrière d'objet (K_{HO1}) au niveau d'une arête arrière de zone (K_{HZ1}), disposée en amont, d'une première zone (Z1) parmi plusieurs zones (Za... Zg), entraînables indépendamment entre elles, du dispositif de transport (1), dans la zone de rangement (SB),
- le deuxième objet (O2) est déplacé vers le premier objet (O1) à l'aide des éléments de transport (2, 2_{M}, 2_{L}) et
- le premier objet (O1) et le deuxième objet (O2) deviennent, après le déplacement du deuxième objet (O2) vers le premier objet (O1), une partie d'un bloc d'objet (B, Ba, Bb) qui est déplacé vers l'aval dans la direction de transport (1) à l'aide des éléments de transport (2, 2_{M}, 2_{L}) avec une vitesse effective commune et dans lequel
- le bloc d'objet (B, Ba, Bb) est arrêté à l'aide des éléments de transport (2, 2_{M}, 2_{L}) lorsqu'il atteint, avec son arête arrière de bloc (K_{HB}), l'arête arrière de zone (K_{HZ1}) d'une zone (Za... Zg) suivante en aval, dans lequel une position actuelle de l'arête arrière de bloc (K_{HB}) est déterminée à l'aide de signaux de rotation des entraînements (M) des éléments de transport (2, 2_{M}, 2_{L}).

12. Procédé pour le rangement d'objets (O, O1... O3, Oa... Oj) dans une zone de rangement (SB) d'un dispositif de transport (1) sous la forme de blocs d'objets (B, Ba, Bb), qui comprennent plusieurs objets (O, O1... O3, Oa... Oj) déplacés à la même vitesse, comprenant les étapes suivantes :
- détection d'une arête arrière d'objet (K_{HO1}) d'un premier objet (O1) par un premier dispositif de mesure (L1) à une première position de mesure (Pₘₑₛₛ₁), dans lequel le premier objet (O1) est déplacé devant la première position de mesure (Pₘₑₛₛ₁) dans une direction vers l'aval par des éléments de transport entraînés (2, 2_{M}, 2_{L}) du dispositif de transport (1) et dans lequel l'arête arrière d'objet (K_{HO1}) du premier objet (O1) se trouve en amont d'une arête avant d'objet (Kvoi) du premier objet (O1),
- détection d'une arête avant d'objet (K_{VO2}) d'un deuxième objet (O2) qui suit le premier objet (O1) en amont, par le premier dispositif de mesure (L1) à la première position de mesure (Pₘₑₛₛ₁), dans lequel le deuxième objet (O2) est déplacé devant la première position de mesure (Pₘₑₛₛ₁) dans la direction de transport vers l'aval, par les éléments de transport entraînés (2, 2_{M}, 2_{L}) et dans lequel l'arête avant d'objet (K_{VO2}) du deuxième objet (O2) se trouve en aval d'une arête arrière d'objet (K_{HO2}) du deuxième objet (O2),
- déplacement du premier objet (O1) vers une position d'arrêt (Pₛₜₒₚ) qui est disposée en aval de la première position de mesure (Pₘₑₛₛ₁) dans la direction de transport et arrêt du premier objet (O1) avec son arête arrière d'objet (K_{HO1}) au niveau de sa position d'arrêt (Pₛₜₒₚ) à l'aide des éléments de transport (2, 2_{M}, 2_{L}), dans lequel une position actuelle du premier objet (O1) entre la première position de mesure (Pₘₑₛₛ₁) et sa position d'arrêt (Pₛₜₒₚ) est déterminée à l'aide de signaux de rotation des entraînements (M) des éléments de transport (2, 2_{M}, 2_{L}),
dans lequel
- le premier objet (O1), lors de l'arrêt au niveau de sa position d'arrêt (Pₛₜₒₚ) à l'aide des éléments de transport (2, 2_{M}, 2_{L}), avec son arête arrière d'objet (K_{HO1}) au niveau d'une arête arrière de zone (K_{HZ1}) d'une première zone (Z1), parmi plusieurs zones (Za... Zg), entraînables indépendamment entre elles, du dispositif de transport (1), est arrêté dans la zone de rangement (SB),
- le deuxième objet (O2) est déplacé vers le premier objet (O1) à l'aide des éléments de transport (2, 2_{M}, 2_{L}) et
- le premier objet (O1) et le deuxième objet (O2) deviennent, après le déplacement du deuxième objet (O2) vers le premier objet (O1) ou après que le deuxième objet (O2) présente une distance (x_{f}... xᵢ) par rapport au premier objet (O1), une partie d'un bloc d'objet (B, Ba, Bb) qui est déplacé vers l'aval dans la direction de transport (1) à l'aide des éléments de transport (2, 2_{M}, 2_{L}) avec une vitesse effective commune **caractérisé en ce que**
- le bloc d'objet (B, Ba, Bb) est arrêté à l'aide des éléments de transport (2, 2_{M}, 2_{L}) lorsqu'il atteint, avec son arête arrière de bloc (K_{HB}), l'arête arrière de zone (K_{HZ1}) d'une zone (Za... Zg) suivante en aval ou lorsqu'il est positionné, avec son arête arrière de bloc (K_{HB}), à une distance en aval par rapport à une des arêtes arrière de zone (K_{HZ1}) mentionnées, qui est inférieure ou égal à une distance (x_{f}... xᵢ) souhaitée par rapport à un objet (Oa... Oj) suivant, dans lequel une position actuelle de l'arête arrière de bloc (K_{HB}) est déterminée à l'aide de signaux de rotation des entraînements (M) des éléments de transport (2, 2_{M}, 2_{L}).

13. Procédé selon la revendication 11 ou 12, **caractérisé en ce que**
- l'arête arrière de bloc (K_{HB}) correspond à l'arête arrière d'objet (K_{HO2}) du deuxième objet (O2) lorsque le deuxième objet (O2) est un objet isolé avant que le deuxième objet (O2) ne devienne, conjointement avec le premier objet (O1), une partie d'un bloc d'objet (B, Ba, Bb) et
- l'arête arrière de bloc (K_{HB}) correspond à l'arête arrière d'objet d'un troisième objet (O3) lorsque le deuxième objet (O2) et le troisième objet (O3) faisaient déjà partie d'un bloc d'objet (B, Ba, Bb) avant que le premier objet (O1) soit ajouté à ce bloc d'objet (B, Ba, Bb), dans lequel le troisième objet (O3) est disposée à l'extrémité amont du bloc d'objet (B, Ba, Bb).

14. Procédé selon l'une des revendications 11 à 13, **caractérisé en ce qu'**il est vérifié si un groupe d'objets (O, O1... O3, Oa... Oj) successifs, comprenant les premier et deuxième objets (O1, O2), s'inscrit dans une zone (Z1... Z3, Za... Zg) ou dans un groupe de zones (Z1... Z3, Za... Zg) successives et se trouvant en aval du dernier objet (oa... Oj) du groupe et un bloc d'objet (B, Ba, Bb) n'est formé à partir des objets (O, 01... 03, Oa... Oj) du groupe que lorsque le résultat de la vérification est positif, sinon le deuxième objet (O2), avec son arête arrière d'objet (K_{HO2}) est arrêté au niveau d'une arête arrière de zone (K_{HZ2}) d'une deuxième zone (Z2) de la zone de rangement (SB) ou est arrêté à une distance en aval par rapport à une des arêtes arrière de zones (K_{hz2}) mentionnées, qui est inférieure ou égale à une distance (xf, xg, xh, xi) souhaitée par rapport à un objet (O, O1... O3, Oa... Oj) suivant, dans lequel la deuxième zone (Z2) est disposée derrière la première zone (Z1).

15. Procédé selon la revendication 14, **caractérisé en ce que** le bloc d'objet (B, Ba, Bb) est formé, dans le cas d'un résultat positif de la vérification, sans arrêt intermédiaire des objets (O2, Oa... Oj) du groupe suivant le premier objet (O1).

16. Procédé selon l'une des revendications 11 à 15, **caractérisé en ce que** tous les objets (O, O1... O3, Oa... Oj) sont arrêtés successivement les uns après les autres dans la même zone (Zg, Z1), dans lequel la zone (Zg) mentionnée est disposée plus particulièrement derrière une zone de mesure (MB) contenant le premier dispositif de mesure (L1).

17. Procédé selon l'une des revendications 11 à 15, **caractérisé en ce que** les objets (O, O1... O3, Oa... Oj) sont arrêtés dans différentes zones (Z1... Z2, Za... Zg), plus particulièrement en commençant par l'extrémité aval de la zone de rangement (SB).

18. Procédé selon l'une des revendications 11 à 17, **caractérisé en ce qu'**un objet (Oa) de tête dans la zone de rangement (SB) ne fait pas partie d'un bloc d'objet (B, Ba, Bb) ou est isolé d'un tel bloc.

19. Procédé selon la revendication 18, **caractérisé en ce que** un objet (Ob) suivant l'objet de tête (Oa) est détaché d'un bloc d'objet (B, Ba, Bb) et recule vers l'extrémité aval de la zone de rangement (SB) lorsqu'il fait partie d'un bloc d'objet (B, Ba, Bb) et lorsque l'objet de tête (oa) quitte la zone de rangement (SB).

20. Procédé selon la revendication 18 ou 19, **caractérisé en ce que** les objets (Ob... Oj) suivant l'objet de tête (Oa) sont détachés d'un bloc d'objet (B, Ba, Bb) lorsqu'ils font partie d'un bloc d'objet (B, Ba, Bb) et lorsqu'ils doivent quitter la zone de rangement (SB), comme prévu, conjointement avec l'objet de tête (Oa), dans lequel le détachement du bloc d'objet (B, Ba, Bb) a lieu lorsque l'arête arrière d'objet du dernier objet à détacher du bloc d'objet (B, Ba, Bb) atteint une arête arrière de zone (K_{HZ1}) d'une zone (Za... Zg).

21. Procédé selon l'une des revendications 18 à 20, **caractérisé en ce qu'**au moins un objet suivant l'objet de tête (Oa) se déplace vers l'objet de tête (Oa) lorsque les objets (Ob... Oj) mentionnés doivent quitter la zone de rangement (SB), comme prévu, sous la forme d'un bloc d'objet (B, Ba, Bb).

22. Procédé selon l'une des revendications 11 à 21, **caractérisé en ce qu'**un bloc d'objet (B, Ba, Bb) est formé seulement jusqu'à une longueur maximale.

23. Procédé selon l'une des revendications 11 à 22, **caractérisé en ce que** celui-ci comprend plusieurs modes de fonctionnement sélectionnables parmi le groupe suivant :
- procédé selon la revendication 16,
- procédé selon la revendication 17,
- procédé selon la revendication 16 en combinaison avec un procédé selon l'une des revendications 18 à 22,
- procédé selon la revendication 17 en combinaison avec un procédé selon l'une des revendications 18 à 22,
entre lesquels il est possible de changer.

24. Dispositif de transport (1) pour une installation de transport pour le rangement d'objets dans une zone de rangement (SB) sous la forme de blocs d'objets (B, Ba, Bb), qui comprennent plusieurs objets (O, 01... O3, Oa... Oj) déplacés à la même vitesse, comprenant :
- des éléments de transport (2, 2_{M}, 2_{L}) pour le transport des objets (O, 01... O3, Oa... Oj),
- un premier dispositif de mesure (L1) pour la détection d'une arête avant d'objet (Kvo, K_{VO1}, K_{VO2}) et d'une arête arrière d'objet (K_{HO}, K_{HO1}, K_{HO2}) des objets (O, 01... O3, Oa... Oj) au niveau d'une première position de mesure (P_{Mess1}), dans lequel l'arête avant d'objet (Kvo, Kvoi, K_{VO2}) se trouve en aval, dans la direction de transport, par rapport à l'arête arrière d'objet (K_{HO}, K_{HO1}, K_{HO2}) des objets (O, 01... 03, Oa... Oj) et
- une commande (5) qui est conçue pour contrôler des entraînements (M) des éléments de transport (2, 2_{M}, 2_{L}) en fonction d'un déplacement de consigne des objets (O, 01... O3, Oa... Oj), pour déplacer un premier objet (01) à l'aide des éléments de transport (2, 2_{M}, 2_{L}), vers une position d'arrêt (Pₛₜₒₚ) qui est disposée en aval de la première position de mesure (Pₘₑₛₛ₁) dans la direction de transport, pour arrêter le premier objet (01), avec son arête arrière d'objet (K_{HO1}) au niveau de sa position d'arrêt (Pₛₜₒₚ) et pour déterminer une position actuelle du premier objet (01) entre la première position de mesure (Pₘₑₛₛ₁) et sa position d'arrêt (Pₛₜₒₚ) à l'aide des signaux de rotation des entraînements (M) des éléments de transport (2, 2_{M}, 2_{L}),
**caractérisé en ce que**
la commande (5) est en outre conçu
- pour calculer, pour un deuxième objet (O2), un tracé constant d'une réduction de vitesse de consigne (V_{Soll}), dans lequel la position d'arrêt (Pₛₜₒₚ) de l'arête avant d'objet (K_{VO2}) du deuxième objet (O2) se trouve au niveau de la position de l'arête arrière d'objet (K_{HO1}) du premier objet (01) arrêté ou entre l'arête avant d'objet (Kvoi) du premier objet (01) arrêté et l'arête arrière d'objet (K_{HO1}) du premier objet (01) arrêté et
- pour contrôler les entraînements (M) des éléments de transport (2, 2_{M}, 2_{L}) en fonction du tracé calculé de la réduction de vitesse, pour arrêter le deuxième objet (O2) à l'aide de la réduction de vitesse calculée derrière le premier objet (O2) et pour déterminer une position actuelle du deuxième objet (O2) entre la première position de mesure (Pₘₑₛₛ₁) et sa position d'arrêt (Pₛₜₒₚ) à l'aide des signaux de rotation des entraînements (M) des éléments de transport (2, 2_{M}, 2_{L}), dans lequel
- le calcul de la réduction de vitesse est basée sur
a) une arête arrière d'objet virtuelle (G_{HO1}) du premier objet (01) qui se trouve en aval par rapport à une arête arrière d'objet physique (K_{HO1}) du premier objet (01) et/ou
b) une arête avant d'objet virtuelle (G_{VO2}) du deuxième objet (O2) qui se trouve en amont par rapport à une arête avant d'objet physique (K_{VO2}) du deuxième objet (O2) ou
c) une arête arrière d'objet virtuelle (G_{HO1}) du premier objet (01) qui se trouve en amont par rapport à une arête arrière d'objet physique (K_{HO1}) du premier objet (01) et/ou
d) une arête avant d'objet virtuelle (G_{VO2}) du deuxième objet (O2) qui se trouve en aval par rapport à une arête avant d'objet physique (K_{VO2}) du deuxième objet (O2).

25. Dispositif de transport (1) selon la revendication 24, **caractérisé en ce que** la commande (5) est en outre conçue pour
- arrêter le premier objet (01) lors de l'arrêt au niveau de la position d'arrêt (Pₛₜₒₚ) à l'aide des éléments de transport (2, 2_{M}, 2_{L}) avec son arête arrière d'objet (K_{HO1}) au niveau d'une arête arrière de zone (K_{HZ1}) d'une première zone (Z1) parmi plusieurs zones (Za... Zg), entraînables indépendamment entre elles, du dispositif de transport (1), dans la zone de rangement (SB),
- déplacer le deuxième objet (O2) à l'aide des éléments de transport (2, 2_{M}, 2_{L}) vers le premier objet (01) et
- déplacer le premier objet (01) et le deuxième objet (O2), après le déplacement du deuxième objet (O2) vers le premier objet (01) à l'aide des éléments de transport (2, 2_{M}, 2_{L}) sous la forme d'un bloc d'objet (B, Ba, Bb), avec une vitesse effective commune, en aval dans la direction de transport,
- arrêter le bloc d'objet (B, Ba, Bb) à l'aide des éléments de transport (2, 2_{M}, 2_{L}) lorsqu'il atteint, avec son arête arrière de bloc (K_{HB}), l'arête arrière de zone (K_{HZ1}) d'une zone (Za... Zg) suivante en aval et
- déterminer une position actuelle de l'arête arrière de bloc (K_{HB}) à l'aide de signaux de rotation des entraînements (M) des éléments de transport (2, 2_{M}, 2_{L}).

26. Dispositif de transport (1) pour une installation de transport pour le rangement d'objets (O, 01... O3, Oa... Oj) dans une zone de rangement (SB) sous la forme de blocs d'objets (B, Ba, Bb), qui comprennent plusieurs objets (O, 01... 03, Oa... Oj) déplacés à la même vitesse, comprenant :
- des éléments de transport (2, 2_{M}, 2_{L}) entraînés pour le transport des objets (O, 01... O3, Oa... Oj),
- un premier dispositif de mesure (L1) pour la détection d'une arête avant d'objet (Kvo, K_{VO1}, K_{VO2}) et d'une arête arrière d'objet (K_{HO}, K_{HO1}, K_{HO2}) des objets (O, 01... O3, Oa... Oj) au niveau d'une première position de mesure (P_{Mess1}), dans lequel l'arête avant d'objet (Kvo, Kvoi, K_{VO2}) se trouve en aval, dans la direction de transport, par rapport à l'arête arrière d'objet (K_{HO}, K_{HO1}, K_{HO2}) des objets (O, 01... 03, Oa... Oj) et
- une commande (5) qui est conçue pour contrôler des entraînements (M) des éléments de transport (2, 2_{M}, 2_{L}) en fonction d'un déplacement de consigne des objets (O, 01... O3, Oa... Oj), pour déplacer un premier objet (01) à l'aide des éléments de transport (2, 2_{M}, 2_{L}), vers une position d'arrêt (Pₛₜₒₚ) qui est disposée en aval de la première position de mesure (Pₘₑₛₛ₁) dans la direction de transport, pour arrêter le premier objet (01), avec son arête arrière d'objet (K_{HO1}) au niveau de sa position d'arrêt (Pₛₜₒₚ) et pour déterminer une position actuelle du premier objet (01) entre la première position de mesure (Pₘₑₛₛ₁) et sa position d'arrêt (Pₛₜₒₚ) à l'aide des signaux de rotation des entraînements (M) des éléments de transport (2, 2_{M}, 2_{L}),
dans lequel la commande (5) est en outre conçue pour
- arrêter le premier objet (01), lors de l'arrêt au niveau de sa position d'arrêt (Pₛₜₒₚ) à l'aide des éléments de transport (2, 2_{M}, 2_{L}), avec son arête arrière d'objet (K_{HO1}) au niveau d'une arête arrière de zone (K_{HZ1}) d'une première zone (Z1), parmi plusieurs zones (Za... Zg), entraînables indépendamment entre elles, du dispositif de transport (1), dans la zone de rangement (SB),
- déplacer le deuxième objet (O2) vers le premier objet (01) à l'aide des éléments de transport (2, 2_{M}, 2_{L}) et
- déplacer le premier objet (01) et le deuxième objet (O2), après le déplacement du deuxième objet (O2) vers le premier objet (01) ou après que le deuxième objet (O2) présente une distance (x_{f}... xᵢ) par rapport au premier objet (01), à l'aide des éléments de transport (2, 2_{M}, 2_{L}) avec une vitesse effective commune une partie d'un bloc d'objet (B, Ba, Bb), vers l'aval dans la direction de transport
**caractérisé en ce que** la commande est en outre conçue pour
- arrêter le bloc d'objet (B, Ba, Bb) à l'aide des éléments de transport (2, 2_{M}, 2_{L}) lorsqu'il atteint, avec son arête arrière de bloc (K_{HB}), l'arête arrière de zone (K_{HZ1}) d'une zone (Za... Zg) suivante en aval ou lorsqu'il est positionné, avec son arête arrière de bloc (K_{HB}), à une distance en aval par rapport à une des arêtes arrière de zone (K_{HZ1}) mentionnées, qui est inférieure ou égale à une distance (xf... Xi) souhaitée par rapport à un objet (Oa... Oj) suivant et
- déterminer une position actuelle de l'arête arrière de bloc (K_{HB}) à l'aide de signaux de rotation des entraînements (M) des éléments de transport (2, 2_{M}, 2_{L}).

27. Dispositif de transport (1) selon l'une des revendications 24 à 26, **caractérisé par** une zone de mesure (MB) disposée en amont de la zone de rangement (SB), dans laquelle l'arête avant d'objet (Kvo, K_{VO1}, K_{VO2}) et l'arête arrière d'objet (K_{HO}, K_{HO1}, K_{HO2}) d'un objet (O, 01... O3, Oa... Oj) sont détectées par le premier dispositif de mesure (L1).

28. Dispositif de transport (1) selon l'une des revendications 24 à 27, **caractérisé en ce que**
- au moins une deuxième position de mesure (Pₘₑₛₛ₂) est disposée en aval par rapport à la première position de mesure (Pₘₑₛₛ₁) dans la zone de détection du premier dispositif de mesure (L1) ou d'un deuxième dispositif de mesure (L2) et
- la commande (5) est en outre conçue pour réinitialiser la position actuelle, déterminée à l'aide des signaux de rotation des entraînements (M) des éléments de transport (2, 2_{M}, 2_{L}), d'un objet (O, O1... O3, Oa... Oj) à la valeur de la deuxième position de mesure (Pₘₑₛₛ₂) lorsque l'objet (O, 01... O3, Oa... Oj) concerné est détecté au niveau de la deuxième position de mesure (Pₘₑₛₛ₂).

29. Dispositif de transport (1) selon l'une des revendications 24 à 28, **caractérisé en ce que** le dispositif de mesure (L1, L2) peut être une barrière photoélectrique, une caméra ou un scanner à laser.
